(19) Europäisches Patentamt / European Patent Office / Office européen des brevets

(11) **EP 4 622 265 A1**

(12) **EUROPEAN PATENT APPLICATION**
published in accordance with Art. 153(4) EPC

(43) Date of publication:
**24.09.2025 Bulletin 2025/39**

(21) Application number: **23891819.7**

(22) Date of filing: **10.10.2023**

(51) International Patent Classification (IPC):
**H04N 19/513** (2014.01)    **H04N 19/105** (2014.01)
**H04N 19/70** (2014.01)    **H04N 19/176** (2014.01)
**H04N 19/119** (2014.01)    **H04N 19/139** (2014.01)
**H04N 19/132** (2014.01)    **G06T 9/00** (2006.01)
**H04N 19/577** (2014.01)    **H04N 19/563** (2014.01)

(52) Cooperative Patent Classification (CPC):
**G06T 9/00; H04N 19/105; H04N 19/119;
H04N 19/132; H04N 19/139; H04N 19/176;
H04N 19/513; H04N 19/563; H04N 19/577;
H04N 19/70**

(86) International application number:
**PCT/KR2023/015509**

(87) International publication number:
**WO 2024/106750 (23.05.2024 Gazette 2024/21)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **18.11.2022 KR 20220155825
04.01.2023 KR 20230001329**

(71) Applicant: **Samsung Electronics Co., Ltd.
Suwon-si, Gyeonggi-do 16677 (KR)**

(72) Inventors:
• PARK, Minwoo
  Suwon-si, Gyeonggi-do 16677 (KR)
• JUNG, Hyunjoo
  Suwon-si, Gyeonggi-do 16677 (KR)
• KIM, Kyungah
  Suwon-si, Gyeonggi-do 16677 (KR)
• DINH, Quockhanh
  Suwon-si, Gyeonggi-do 16677 (KR)
• PARK, Minsoo
  Suwon-si, Gyeonggi-do 16677 (KR)
• CHOI, Kwangpyo
  Suwon-si, Gyeonggi-do 16677 (KR)
• PIAO, Yinji
  Suwon-si, Gyeonggi-do 16677 (KR)

(74) Representative: **Appleyard Lees IP LLP
15 Clare Road
Halifax HX1 2HY (GB)**

(54) **VIDEO CODING METHOD AND DEVICE THEREFOR**

(57) The present disclosure relates to an image decoding method, an image decoding apparatus, an image encoding method, an image encoding apparatus, and a storage medium storing a bitstream generated by the image encoding method. The present disclosure provides a method and apparatus capable of improving the accuracy or prediction performance of motion information of a block of a current picture and improving coding performance or efficiency, by generating motion information of the current picture in units of blocks of a specific size, based on at least one of pixel data or motion information of at least one reconstructed picture, and using the generated motion information in coding each block of the current picture.

FIG. 17

## Description

### Technical Field

The present disclosure relates to video coding, and more particularly, to an image decoding method, an image decoding apparatus, an image encoding method, an image encoding apparatus, and a storage medium storing a bitstream generated by the image encoding method.

### Background Art

In the case of conventional compression methods, in a process of determining the size of a coding unit included in a picture, splitting or non-splitting is determined, and then square coding units are determined through a recursive splitting process of uniformly splitting into four coding units of the same size. However, recently, deterioration of the image quality of a reconstructed image caused due to use of a coding unit of a uniform shape, which is a square, for high-resolution images has become a problem. Accordingly, methods and apparatuses for splitting a high-resolution image into various types of coding units are being proposed.

### Disclosure of Invention

### Technical Problem

Provided is a method and apparatus capable of improving the accuracy or prediction performance of motion information of a current block and improving coding performance or efficiency while reducing computational complexity.

More particularly, provided is a method and apparatus capable of improving the accuracy or prediction performance of motion information of a block of a current picture and improving coding performance or efficiency, by generating motion information of the current picture in units of blocks of a specific size, based on at least one of pixel data or motion information of at least one reconstructed picture before starting coding of the current picture, and using the generated motion information in coding each block of the current picture.

### Solution to Problem

According to a first aspect of the present disclosure, an image decoding method performed by an apparatus is provided, the method including generating reference motion information for blocks included in a current picture, based on at least one of pixel data or motion information of at least one reconstructed picture; obtaining motion information for a current block included in the current picture, based on the generated reference motion information and at least one syntax information obtained from a bitstream; and reconstructing the current block, based on the obtained motion information.

According to a second aspect of the present disclosure, an image decoding apparatus is provided, and includes at least one processor configured to perform an operation, and the operation may include generating reference motion information for blocks included in a current picture, based on at least one of pixel data or motion information of at least one reconstructed picture; obtaining motion information for a current block included in the current picture, based on the generated reference motion information and at least one syntax information obtained from a bitstream; and reconstructing the current block, based on the obtained motion information.

Preferably, the generating of the reference motion information for blocks included in the current picture may include generating reference motion information for blocks included in the current picture by inputting at least one of the pixel data or motion information of the at least one reconstructed picture to an artificial neural network.

Preferably, the motion information may include at least one of first motion vector information, second motion vector information, first prediction list utilization information, second prediction list utilization information, and prediction mode information.

Preferably, the method or the operation may further include at least one of an operation of aggregating the generated reference motion information, an operation of scaling the generated reference motion information, or an operation of transforming a format of the generated reference motion information.

Preferably, the generating of the reference motion information for blocks included in the current picture may include down-sampling the at least one reconstructed picture; and generating reference motion information for blocks included in the current picture, based on at least one of pixel data or motion information of the downsampled reconstructed picture.

Preferably, the obtaining of the motion information for the current block may include, when a time interval between the reconstructed picture and the current picture is equal to or greater than a certain value, excluding the generated reference motion information from a motion information candidate for the current block.

Preferably, the generating of the reference motion information for blocks included in the current picture may include, when reference picture resampling is applied, downsampling the reconstructed picture, based on a reference picture of low resolution.

Preferably, the method or the operation may further include generating motion information of an additional picture by performing interpolation or extrapolation, based on motion information of the at least one reconstructed picture.

Preferably, the at least one syntax information may include information indicating whether the generated reference motion information is used to obtain motion information for the current block.

Preferably, the obtaining of the motion information for the current block may include constructing a merge candidate list including the generated reference motion information; and obtaining the motion information for the current block, based on the constructed merge candidate list.

Preferably, the generated reference motion information may include motion information at a location corresponding to an x-coordinate obtained by adding half a width of the current block to an upper left sample location of the current block in a generated reference motion information map, and a y-coordinate obtained by adding half a height of the current block to the upper left sample location of the current block.

Preferably, the obtaining of the motion information for the current block may include dividing the current block into a plurality of subblocks and assigning the generated reference motion information to the plurality of subblocks, and the reconstructing of the current block may include performing motion compensation on a subblock, based on generated reference motion information for the subblock.

Preferably, the obtaining of the motion information for the current block may include obtaining a plurality of control point motion vectors for the current block, based on the generated reference motion information, and the reconstructing of the current block may include performing motion compensation on a subblock of the current block by using the obtained control point motion vectors.

According to a third aspect of the present disclosure, an image encoding method performed by an apparatus is provided, including generating reference motion information for blocks included in a current picture, based on at least one of pixel data or motion information of at least one reconstructed picture; determining motion information for a current block included in the current picture; and encoding the motion information for the current block into a bitstream, based on the generated reference motion information.

According to a fourth aspect of the present disclosure, an image encoding apparatus is provided, and includes at least one processor configured to perform an operation, and the operation may include generating reference motion information for blocks included in a current picture, based on at least one of pixel data or motion information of at least one reconstructed picture; determining motion information for a current block included in the current picture; and encoding the motion information for the current block into a bitstream, based on the generated reference motion information.

According to another aspect of the present disclosure, a storage medium storing a bitstream generated by the image encoding method or the image encoding apparatus is provided.

**Advantageous Effects of Invention**

According to the present disclosure, the accuracy or prediction performance of motion information of a current block may be improved, and coding performance or efficiency may be improved, while reducing computational complexity.

More particularly, according to the present disclosure, the accuracy or prediction performance of motion information of a block of a current picture, and coding performance or efficiency may be improved, by generating motion information of a current picture in units of blocks of a specific size, based on at least one of pixel data or motion information of at least one reconstructed picture before starting coding of the current picture, and using the generated motion information in coding each block of the current picture.

**Brief Description of Drawings**

A brief description of each drawing is provided for better understanding of the drawings cited herein.

FIG. 1 is a schematic block diagram of an image decoding apparatus according to an embodiment.
FIG. 2 is a flowchart of an image decoding method according to an embodiment.
FIG. 3 illustrates a process, performed by an image decoding apparatus, of determining at least one coding unit by splitting a current coding unit, according to an embodiment.
FIG. 4 illustrates a process, performed by an image decoding apparatus, of determining at least one coding unit by splitting a non-square coding unit, according to an embodiment.
FIG. 5 illustrates a process, performed by an image decoding apparatus, of splitting a coding unit based on at least one of block shape information or split shape mode information, according to an embodiment.
FIG. 6 illustrates a method, performed by an image decoding apparatus, of determining a preset coding unit from among an odd number of coding units, according to an embodiment.

FIG. 7 illustrates an order of processing a plurality of coding units when an image decoding apparatus determines the plurality of coding units by splitting a current coding unit, according to an embodiment.

FIG. 8 illustrates a process, performed by an image decoding apparatus, of determining that a current coding unit is to be split into an odd number of coding units, when the coding units are not processable in a preset order, according to an embodiment.

FIG. 9 illustrates a process, performed by an image decoding apparatus, of determining at least one coding unit by splitting a current coding unit, according to an embodiment.

FIG. 10 illustrates that a shape into which a second coding unit is splittable is restricted when the second coding unit having a non-square shape, which is determined when an image decoding apparatus splits a first coding unit, satisfies a preset condition, according to an embodiment.

FIG. 11 illustrates a process, performed by an image decoding apparatus, of splitting a square coding unit when split shape mode information indicates that the square coding unit is to not be split into four square coding units, according to an embodiment.

FIG. 12 illustrates that a processing order between a plurality of coding units may be changed depending on a process of splitting a coding unit, according to an embodiment.

FIG. 13 illustrates a process of determining a depth of a coding unit as a shape and size of the coding unit change, when the coding unit is recursively split such that a plurality of coding units are determined, according to an embodiment.

FIG. 14 illustrates depths that are determinable based on shapes and sizes of coding units, and part indexes (PIDs) for distinguishing the coding units, according to an embodiment.

FIG. 15 illustrates that a plurality of coding units are determined based on a plurality of preset data units included in a picture, according to an embodiment.

FIG. 16 is a block diagram of an image encoding and decoding system.

FIG. 17 is a block diagram of an image decoding apparatus according to the present disclosure.

FIG. 18 is a flowchart of an image decoding method according to the present disclosure.

FIG. 19 illustrates an image encoding apparatus according to the present disclosure.

FIG. 20 is a flowchart of an image encoding method according to the present disclosure.

FIGS. 21a through 21c illustrate a method of generating motion information, according to the present disclosure.

FIG. 22 illustrates a method of normalizing an input of a motion information generator, according to the present disclosure.

FIG. 23 illustrates an input motion information map according to the present disclosure.

FIG. 24 illustrates a generated motion information map according to the present disclosure.

FIG. 25 illustrates a motion information generating model and a learning method, according to the present disclosure.

FIG. 26 illustrates a method of generating motion information, according to the present disclosure.

FIG. 27 illustrates a process of aggregating motion information, according to the present disclosure.

FIG. 28 illustrates a method of downscaling an input reconstructed picture, according to the present disclosure.

FIG. 29 illustrates reference picture resampling (RPR).

FIGS. 30, 31a, and 31b illustrate a method of utilizing a motion information generating method, according to the present disclosure, in frame rate up conversion (FRUC).

FIGS. 32a and 32b illustrate a method of refining a generated motion information map, according to the present disclosure.

FIGS. 33 through 38 illustrate a syntax structure and a coding method according to the present disclosure.

FIGS. 39a and 39b illustrate use of generated motion information in a merge mode, according to the present disclosure.

FIG. 40 illustrates a location of a neighboring block usable as a merge candidate.

FIGS. 41a through 41d illustrate a method of determining a location corresponding to a current block in a generated motion information map, according to the present disclosure.

FIGS. 42a through 42c illustrate a method of performing subblock prediction by using generated motion information, according to the present disclosure.

## Mode for the Invention

As the disclosure allows for various changes and numerous embodiments, exemplary embodiments will be illustrated in the drawings and described in detail in the written description. However, this is not intended to limit the disclosure to particular modes of practice, and it is to be appreciated that all changes, equivalents, and substitutes that do not depart from the spirit and technical scope of the disclosure are encompassed in the disclosure.

In the description of embodiments, certain detailed explanations of the related art are omitted when it is deemed that they may unnecessarily obscure the essence of the disclosure. Also, numbers (e.g., first and second) used in the description of the specification are merely identifier codes for distinguishing one component from another.

Also, in the specification, it will be understood that when elements are "connected" or "coupled" to each other, the elements may be directly connected or coupled to each other, but may alternatively be connected or coupled to each other with an intervening element therebetween, unless specified otherwise.

In the specification, regarding a component represented as a "portion (unit)" or a "module", two or more components may be combined into one component or one component may be divided into two or more components according to subdivided functions. In addition, each component described hereinafter may additionally perform some or all of functions performed by another component, in addition to main functions of itself, and some of the main functions of each component may be performed entirely by another component.

Also, the term 'image' or picture' used herein may refer to a still image of a video, or a moving image, i.e., a video itself.

Also, the term 'sample' used herein refers to data that is assigned to a sampling location of an image and is to be processed. For example, pixel values of an image in a spatial domain or transform coefficients in a transform domain may be samples. A unit including one or more samples may be defined as a block.

A 'current block' used herein may denote a block of a largest coding unit, coding unit, prediction unit, or transform unit of a current image that is to be encoded or decoded.

In this specification, when a motion vector is in the direction of list 0, this may mean that the motion vector is used to indicate a block in a reference picture included in list 0 (or reference list 0 or reference picture list 0), and when a motion vector is in the direction of list 1, this may mean that the motion vector is used to indicate a block in a reference picture included in list 1 (or reference list 1 or reference picture list 1). When a motion vector is in a uni-direction, this may mean that the motion vector is used to indicate a block in a reference picture included in list 0 or list 1, and when a motion vector is in a bi-direction, this may mean that the motion vector includes a motion vector in the direction of list 0 and a motion vector in the direction of list 1. List 0 may be briefly represented as L0, and list 1 may be briefly represented as L1.

In this specification, a 'binary split' of a block refers to a split that enables two subblocks, each of which a width or height is half a width or height of the block, to be generated. In detail, when a 'binary vertical split' is performed on a current block, a split is performed in a vertical direction (height direction) at a point being a half the width of the current block, so that two subblocks each having a width that is half the width of the current block and a height that is the same as the height of the current block may be generated. When a 'binary horizontal split' is performed on a current block, a split is performed in a horizontal direction (width direction) at a point being a half the height of the current block, so that two subblocks each having a height that is half the height of the current block and a width that is the same as the width of the current block may be generated.

In this specification, a 'ternary split' of a block refers to a split that enables three subblocks to be generated by splitting a width or height of the block at a ratio of 1:2:1. In detail, when a 'ternary vertical split' is performed on a current block, a split is performed in a vertical direction (height direction) at a point being the 1:2:1 ratio of the width of the current block, so that two subblocks each having a width that is 1/4 the width of the current block and a height that is the same as the height of the current block, and one subblock having a width that is 2/4 the width of the current block and a height that is the same as the height of the current block may be generated. When a 'ternary vertical split' is performed on a current block, a split is performed in a horizontal direction (width direction) at a point being the 1:2:1 ratio of the height of the current block, so that two subblocks each having a width that is 1/4 the height of the current block and a width that is the same as the width of the current block, and one subblock having a height that is 2/4 the height of the current block and a width that is the same as the width of the current block may be generated.

In this specification, a 'quadsplit' of a block refers to a split that enables four subblocks to be generated by splitting a width and height of the block at a ratio of 1:1. In detail, when a 'quadsplit' is performed on a current block, a split is performed in a vertical direction (height direction) at a point being half the width of the current block and a split is performed in a horizontal direction (width direction) at a point being a half the height of the current block, so that four subblocks each having a width that is 1/2 the width of the current block and a height that is 1/2 the height of the current block may be generated.

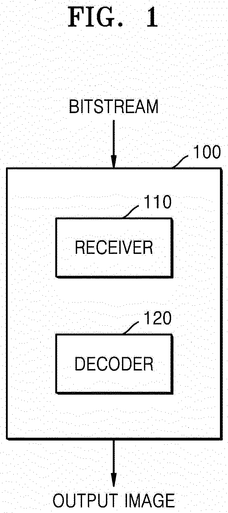

Hereinafter, an image encoding method and apparatus and an image decoding method and apparatus according to an embodiment will be disclosed with reference to FIGS. 1 to 16.

Hereinafter, an image encoding method and apparatus and an image decoding method and apparatus according to an embodiment will be disclosed with reference to FIGS. 1 to 16.

FIG. 1 is a schematic block diagram of an image decoding apparatus, according to an embodiment. The image decoding apparatus 100 may include a receiver 110 and a decoder 120. The receiver 110 and the decoder 120 may include at least one processor.

Also, the receiver 110 and the decoder 120 may include a memory storing instructions to be executed by the at least one processor. The receiver 110 may receive a bitstream. The bitstream may include information resulting from image encoding by an image encoding apparatus 200 which will be described below. Also, the bitstream may be transmitted from the image encoding apparatus 200. The image decoding apparatus 100 may be connected to the image encoding apparatus 200 in a wired or wireless manner, and the receiver 110 may receive a bitstream in a wired or wireless manner. The receiver 110 may receive a bitstream from a storage medium, such as an optical medium or a hard disk. The decoder 120 may reconstruct an image based on information obtained from the received bitstream. The decoder 120 may obtain a syntax element for reconstructing an image from the bitstream.

The decoder 120 may reconstruct the image based on the syntax element.

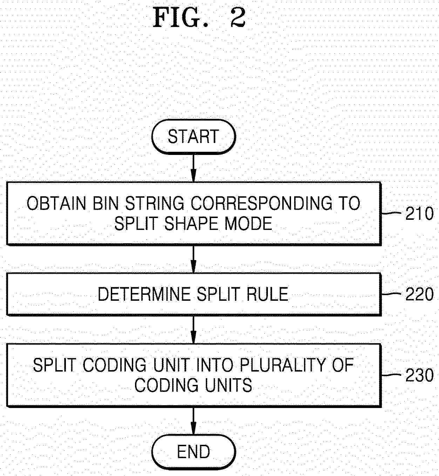

An operation of the image decoding apparatus 100 will be described in more detail with reference to Fig. 2.

Fig. 2 is a flow chart of an image decoding method according to an embodiment.

According to an embodiment of the present disclosure, the receiver 110 receives a bitstream. The image decoding apparatus 100 may perform an operation 210 of obtaining a bin string corresponding to a split shape mode of a coding unit from the bitstream. Then, the image decoding apparatus 100 may perform an operation 220 of determining a split rule of a coding unit. Also, the image decoding apparatus 100 may perform an operation 230 of splitting a coding unit into a plurality of coding units, based on at least one of the bin string corresponding to the split shape mode and the split rule. The image decoding apparatus 100 may determine a first range which is an allowable size range of a coding unit, according to a ratio of a height to a width of the coding unit, in order to determine the split rule.

The image decoding apparatus 100 may determine a second range which is an allowable size range of a coding unit, according to a split shape mode of the coding unit, in order to determine the split rule.

Hereinafter, splitting of a coding unit will be described in detail according to an embodiment of the disclosure. First, one picture may be split into one or more slices or one or more tiles. One slice or one tile may be a sequence of one or more largest coding units (coding tree units, CTUs).

As a concept compared to a largest coding unit (CTU), there is a largest coding block (coding tree block, CTB). A largest coding block (CTB) denotes an NxN block including NxN samples (N is an integer).

Each color component may be split into one or more largest coding blocks. When a picture has three sample arrays (sample arrays for Y, Cr, and Cb components), a largest coding unit (CTU) includes a largest coding block of a luma sample, two corresponding largest coding blocks of chroma samples, and syntax structures used to encode the luma sample and the chroma samples. When a picture is a monochrome picture, a largest coding unit includes a largest coding block of a monochrome sample and syntax structures used to encode the monochrome samples.

When a picture is a picture encoded in color planes separated according to color components, a largest coding unit includes syntax structures used to encode the picture and samples of the picture.

One largest coding block (CTB) may be split into MxN coding blocks including MxN samples (M and N are integers). When a picture has sample arrays for Y, Cr, and Cb components, a coding unit (CU) includes a coding block of a luma sample, two corresponding coding blocks of chroma samples, and syntax structures used to encode the luma sample and the chroma samples. When a picture is a monochrome picture, a coding unit includes a coding block of a monochrome sample and syntax structures used to encode the monochrome samples.

When a picture is a picture encoded in color planes separated according to color components, a coding unit includes syntax structures used to encode the picture and samples of the picture. As described above, a largest coding block and a largest coding unit are conceptually distinguished from each other, and a coding block and a coding unit are conceptually distinguished from each other. That is, a (largest) coding unit refers to a data structure including a (largest) coding block including a corresponding sample and a syntax structure corresponding to the (largest) coding block.

However, because it is understood by one of ordinary skill in the art that a (largest) coding unit or a (largest) coding block refers to a block of a certain size including a certain number of samples, a largest coding block and a largest coding unit, or a coding block and a coding unit are mentioned in the following specification without being distinguished unless otherwise described. An image may be split into largest coding units (CTUs). A size of each largest coding unit may be determined based on information obtained from a bitstream. A shape of each largest coding unit may be a square shape of the same size.

However, an embodiment is not limited thereto. For example, information about a maximum size of a luma coding block may be obtained from a bitstream.

For example, the maximum size of the luma coding block indicated by the information about the maximum size of the luma coding block may be one of 4x4, 8x8, 16x16, 32x32, 64x64, 128x128, and 256x256. For example, information about a luma block size difference and a maximum size of a luma coding block that may be split into two may be obtained from a bitstream. The information about the luma block size difference may refer to a size difference between a luma largest coding unit and a largest luma coding block that may be split into two. Accordingly, when the information about the maximum size of the luma coding block that may be split into two and the information about the luma block size difference obtained from the bitstream are combined with each other, a size of the luma largest coding unit may be determined. A size of a chroma largest coding unit may be determined by using the size of the luma largest coding unit.

For example, when a Y: Cb: Cr ratio is 4:2:0 according to a color format, a size of a chroma block may be half a size of a luma block, and a size of a chroma largest coding unit may be half a size of a luma largest coding unit. According to an embodiment, because information about a maximum size of a luma coding block that is binary splittable is obtained from a bitstream, the maximum size of the luma coding block that is binary splittable may be variably determined. In contrast, a maximum size of a luma coding block that is ternary splittable may be fixed.

For example, the maximum size of the luma coding block that is ternary splittable in an I-picture may be 32x32, and the maximum size of the luma coding block that is ternary splittable in a P-picture or a B-picture may be 64x64. Also, a largest coding unit may be hierarchically split into coding units based on split shape mode information obtained from a bitstream.

At least one of information indicating whether quad splitting is performed, information indicating whether multi-splitting is performed, split direction information, and split type information may be obtained as the split shape mode information from the bitstream.

For example, the information indicating whether quad splitting is performed may indicate whether a current coding unit is quad split (QUAD_SPLIT) or not.

When the current coding unit is not quad split, the information indicating whether multi-splitting is performed may indicate whether the current coding unit is no longer split (NO_SPLIT) or binary/ternary split.

When the current coding unit is binary split or ternary split, the split direction information indicates that the current coding unit is split in one of a horizontal direction and a vertical direction.

When the current coding unit is split in the horizontal direction or the vertical direction, the split type information indicates that the current coding unit is binary split or ternary split. A split mode of the current coding unit may be determined according to the split direction information and the split type information.

A split mode when the current coding unit is binary split in the horizontal direction may be determined to be a binary horizontal split mode (SPLIT_BT_HOR), a split mode when the current coding unit is ternary split in the horizontal direction may be determined to be a ternary horizontal split mode (SPLIT_TT_HOR), a split mode when the current coding unit is binary split in the vertical direction may be determined to be a binary vertical split mode (SPLIT_BT_VER), and a split mode when the current coding unit is ternary split in the vertical direction may be determined to be a ternary vertical split mode (SPLIT_TT_VER). The image decoding apparatus 100 may obtain, from the bitstream, the split shape mode information from one bin string. A form of the bitstream received by the image decoding apparatus 100 may include fixed length binary code, unary code, truncated unary code, pre-determined binary code, or the like. The bin string is information in a binary number. The bin string may include at least one bit. The image decoding apparatus 100 may obtain the split shape mode information corresponding to the bin string, based on the split rule.

The image decoding apparatus 100 may determine whether to quad split a coding unit, whether not to split a coding unit, a split direction, and a split type, based on one bin string. The coding unit may be smaller than or the same as the largest coding unit. For example, because a largest coding unit is a coding unit having a maximum size, the largest coding unit is one of coding units. When split shape mode information about a largest coding unit indicates that splitting is not performed, a coding unit determined in the largest coding unit has the same size as that of the largest coding unit. When split shape mode information about a largest coding unit indicates that splitting is performed, the largest coding unit may be split into coding units. Also, when split shape mode information about a coding unit indicates that splitting is performed, the coding unit may be split into smaller coding units. However, the splitting of the image is not limited thereto, and the largest coding unit and the coding unit may not be distinguished.

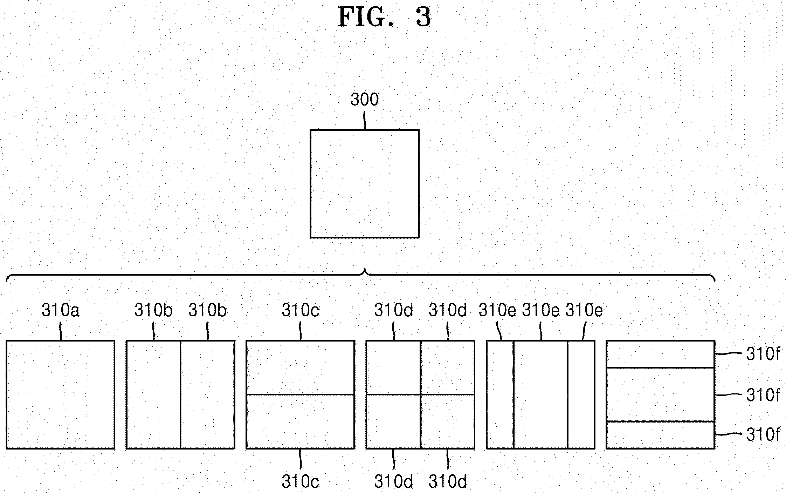

The splitting of the coding unit will be described in more detail with reference to FIGS. 3 to 16. Also, one or more prediction blocks for prediction may be determined from a coding unit. The prediction block may be the same as or smaller than the coding unit. Also, one or more transform blocks for transformation may be determined from a coding unit.

The transform block may be equal to or smaller than the coding unit.

The shapes and sizes of the transform block and prediction block may not be related to each other. In another embodiment, prediction may be performed by using a coding unit as a prediction unit.

Also, transformation may be performed by using a coding unit as a transform block. A current block and a neighboring block of the disclosure may indicate one of the largest coding unit, the coding unit, the prediction block, and the transform block. Also, the current block or the current coding unit is a block that is currently being decoded or encoded or a block that is currently being split. The neighboring block may be a block reconstructed before the current block. The neighboring block may be adjacent to the current block spatially or temporally.

The neighboring block may be located at one of the lower left, left, upper left, top, upper right, right, lower right of the current block.

FIG. 3 illustrates a process in which the image decoding apparatus determines at least one coding unit by splitting a current coding unit, according to an embodiment. A block shape may include 4Nx4N, 4Nx2N, 2Nx4N, 4NxN, Nx4N, 32NxN, Nx32N, 16NxN, Nx16N, 8NxN, or Nx8N. Here, N may be a positive integer.

Block shape information is information indicating at least one of a shape, a direction, a ratio of width and height, and size of a coding unit. The shape of the coding unit may include a square and a non-square. When the width and height of the coding unit are the same (i.e., when the block shape of the coding unit is 4Nx4N), the image decoding apparatus 100 may determine the block shape information of the coding unit as a square.

The image decoding apparatus 100 may determine the shape of the coding unit to be a non-square. When the width and the height of the coding unit are different from each other (i.e., when the block shape of the coding unit is 4Nx2N, 2Nx4N, 4NxN, Nx4N, 32NxN, Nx32N, 16NxN, Nx16N, 8NxN, or Nx8N), the image decoding apparatus 100 may determine the block shape information of the coding unit as a non-square. When the shape of the coding unit is a non-square, the image decoding apparatus 100 may determine the ratio of the width and height among the block shape information of the coding unit as at least one of 1:2, 2:1, 1:4, 4:1, 1:8, 8:1, 1:16, 16:1, 1:32, and 32:1. Also, the image decoding apparatus 100 may determine whether the coding unit is in a horizontal direction or a vertical direction, based on the length of the width and the length of the height of the coding unit.

Also, the image decoding apparatus 100 may determine the size of the coding unit, based on at least one of the length of the width, the length of the height, and the area of the coding unit. According to an embodiment, the image decoding apparatus 100 may determine the shape of the coding unit by using the block shape information, and may determine a splitting method of the coding unit by using split shape mode information.

That is, a coding unit splitting method indicated by the split shape mode information may be determined based on a block shape indicated by the block shape information used by the image decoding apparatus 100. The image decoding apparatus 100 may obtain the split shape mode information from a bitstream. However, an embodiment is not limited thereto, and the image decoding apparatus 100 and the image encoding apparatus 200 may determine pre-agreed split shape mode information, based on the block shape information. The image decoding apparatus 100 may determine the pre-agreed split shape mode information with respect to a largest coding unit or a smallest coding unit. For example, the image decoding apparatus 100 may determine the split shape mode information with respect to the largest coding unit to be a quad split. Also, the image decoding apparatus 100 may determine the split shape mode information with respect to the smallest coding unit to be "not to perform splitting". In particular, the image decoding apparatus 100 may determine the size of the largest coding unit to be 256x256. The image decoding apparatus 100 may determine the pre-agreed split shape mode information to be a quad split. The quad split is a split shape mode in which the width and the height of the coding unit are both bisected. The image decoding apparatus 100 may obtain a coding unit of a 128x128 size from the largest coding unit of a 256x256 size, based on the split shape mode information. Also, the image decoding apparatus 100 may determine the size of the smallest coding unit to be 4x4.

The image decoding apparatus 100 may obtain split shape mode information indicating "not to perform splitting" with respect to the smallest coding unit. According to an embodiment, the image decoding apparatus 100 may use the block shape information indicating that the current coding unit has a square shape. For example, the image decoding apparatus 100 may determine whether not to split a square coding unit, whether to vertically split the square coding unit, whether to horizontally split the square coding unit, or whether to split the square coding unit into four coding units, based on the split shape mode information.

Referring to FIG. 3, when the block shape information of a current coding unit 300 indicates a square shape, the decoder 120 may not split a coding unit 310a having the same size as the current coding unit 300, based on the split shape mode information indicating not to perform splitting, or may determine coding units 310b, 310c, 310d, 310e, or 310f split based on the split shape mode information indicating a certain splitting method. Referring to FIG. 3, according to an embodiment, the image decoding apparatus 100 may determine two coding units 310b obtained by splitting the current coding unit 300 in a vertical direction, based on the split shape mode information indicating to perform splitting in a vertical direction. The image decoding apparatus 100 may determine two coding units 310c obtained by splitting the current coding unit 300 in a horizontal direction, based on the split shape mode information indicating to perform splitting in a horizontal direction. The image decoding apparatus 100 may determine four coding units 310d obtained by splitting the current coding unit 300 in vertical and horizontal directions, based on the split shape mode information indicating to perform splitting in vertical and horizontal directions. According to an embodiment, the image decoding apparatus 100 may determine three coding units 310e obtained by splitting the current coding unit 300 in a vertical direction, based on the split shape mode information indicating to perform ternary splitting in a vertical direction. The image decoding apparatus 100 may determine three coding units 310f obtained by splitting the current coding unit 300 in a horizontal direction, based on the split shape mode information indicating to perform ternary splitting in a horizontal direction. However, splitting methods of the square coding unit are not limited to the above-described methods, and the split shape mode information may indicate various methods.

Certain splitting methods of splitting the square coding unit will be described in detail below through various embodiments.

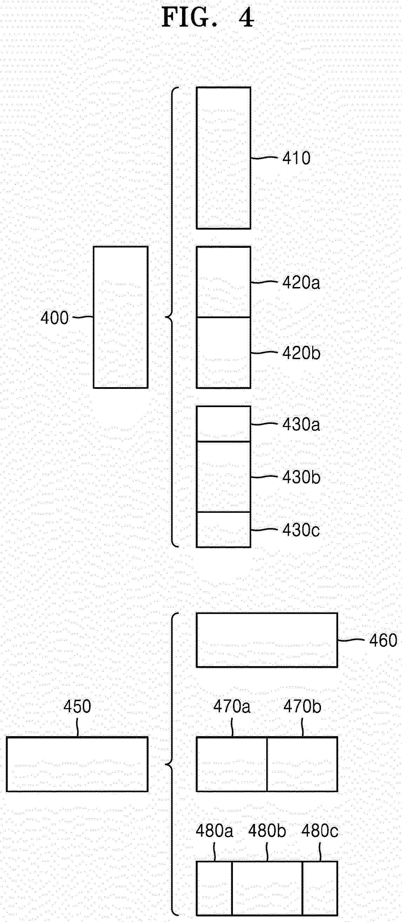

FIG. 4 illustrates a process in which the image decoding apparatus determines at least one coding unit by splitting a non-square coding unit, according to an embodiment. According to an embodiment, the image decoding apparatus 100 may use block shape information indicating that a current coding unit has a non-square shape. The image decoding apparatus 100 may determine whether not to split the non-square current coding unit or whether to split the non-square current coding unit by using a certain splitting method, based on split shape mode information. Referring to FIG. 4, when the block shape information of a current coding unit 400 or 450 indicates a non-square shape, the image decoding apparatus 100 may determine a coding unit 410 or 460 having the same size as the current coding unit 400 or 450, based on the split shape mode information indicating not to perform splitting, or may determine coding units 420a and 420b, 430a to 430c, 470a and 470b, or 480a to 480c split based on the split shape mode information indicating a certain splitting method.

Certain splitting methods of splitting a non-square coding unit will be described in detail below through various embodiments. According to an embodiment, the image decoding apparatus 100 may determine a splitting method of a coding unit by using the split shape mode information and, in this case, the split shape mode information may indicate the number of one or more coding units generated by splitting a coding unit.

Referring to FIG. 4, when the split shape mode information indicates to split the current coding unit 400 or 450 into two coding units, the image decoding apparatus 100 may determine two coding units 420a and 420b, or 470a and 470b included in the current coding unit 400 or 450, by splitting the current coding unit 400 or 450 based on the split shape mode information. According to an embodiment, when the image decoding apparatus 100 splits the non-square current coding unit 400 or 450 based on the split shape mode information, the image decoding apparatus 100 may consider the location of a long side of the non-square current coding unit 400 or 450 to split a current coding unit.

For example, the image decoding apparatus 100 may determine a plurality of coding units by splitting the current coding unit 400 or 450 in a direction of splitting a long side of the current coding unit 400 or 450, in consideration of the shape of the current coding unit 400 or 450. According to an embodiment, when the split shape mode information indicates to split (ternary split) a coding unit into an odd number of blocks, the image decoding apparatus 100 may determine an odd number of coding units included in the current coding unit 400 or 450.

For example, when the split shape mode information indicates to split the current coding unit 400 or 450 into three coding units, the image decoding apparatus 100 may split the current coding unit 400 or 450 into three coding units 430a, 430b, and 430c, or 480a, 480b, and 480c. According to an embodiment, a ratio of the width and height of the current coding unit 400 or 450 may be 4:1 or 1:4. When the ratio of the width and height is 4:1, the block shape information may indicate a horizontal direction because the length of the width is longer than the length of the height. When the ratio of the width and height is 1:4, the block shape information may indicate a vertical direction because the length of the width is shorter than the length of the height. The image decoding apparatus 100 may determine to split a current coding unit into an odd number of blocks, based on the split shape mode information. Also, the image decoding apparatus 100 may determine a split direction of the current coding unit 400 or 450, based on the block shape information of the current coding unit 400 or 450. For example, when the current coding unit 400 is in the vertical direction, the image decoding apparatus 100 may determine the coding units 430a, 430b, and 430c by splitting the current coding unit 400 in the horizontal direction.

Also, when the current coding unit 450 is in the horizontal direction, the image decoding apparatus 100 may determine the coding units 480a, 480b, and 480c by splitting the current coding unit 450 in the vertical direction. According to an embodiment, the image decoding apparatus 100 may determine an odd number of coding units included in the current coding unit 400 or 450, and not all the determined coding units may have the same size. For example, a certain coding unit 430b or 480b from among the determined odd number of coding units 430a, 430b, and 430c, or 480a, 480b, and 480c may have a size different from the size of the other coding units 430a and 430c, or 480a and 480c.

That is, coding units which may be determined by splitting the current coding unit 400 or 450 may have multiple sizes and, in some cases, all of the odd number of coding units 430a, 430b, and 430c, or 480a, 480b, and 480c may have different sizes. According to an embodiment, when the split shape mode information indicates to split a coding unit into the odd number of blocks, the image decoding apparatus 100 may determine the odd number of coding units included in the current coding unit 400 or 450, and moreover, may put a certain restriction on at least one of the odd number of coding units generated by splitting the current coding unit 400 or 450. Referring to FIG. 4, the image decoding apparatus 100 may set a decoding process regarding the coding unit 430b or 480b located at the center among the three coding units 430a, 430b, and 430c, or 480a, 480b, and 480c generated as the current coding unit 400 or 450 is split to be different from that of the other coding units 430a and 430c, or 480a and 480c.

For example, the image decoding apparatus 100 may restrict the coding unit 430b or 480b at the center location to be no longer split or to be split only a certain number of times, unlike the other coding units 430a and 430c, or 480a and 480c.

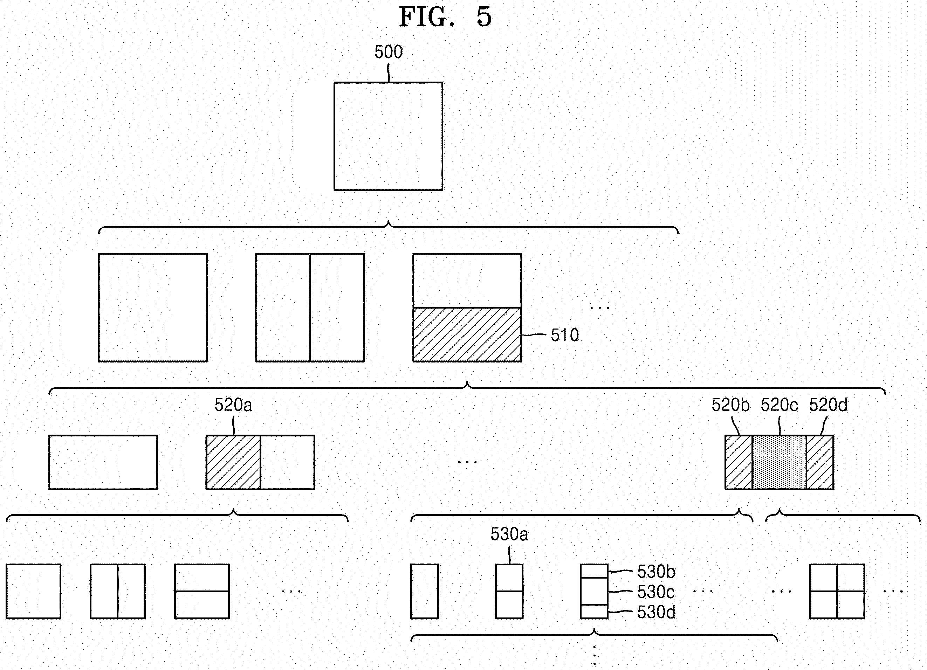

FIG. 5 illustrates a process in which the image decoding apparatus splits a coding unit based on at least one of block shape information and split shape mode information, according to an embodiment. According to an embodiment, the image decoding apparatus 100 may determine to split or not to split a square first coding unit 500 into coding units, based on at least one of the block shape information and the split shape mode information. According to an embodiment, when the split shape mode information indicates to split the first coding unit 500 in a horizontal direction, the image decoding apparatus 100 may determine a second coding unit 510 by splitting the first coding unit 500 in a horizontal direction. A first coding unit, a second coding unit, and a third coding unit used according to an embodiment are terms used to understand a relation before and after splitting a coding unit. For example, a second coding unit may be determined by splitting a first coding unit, and a third coding unit may be determined by splitting the second coding unit.

It will be understood that the relation of the first coding unit, the second coding unit, and the third coding unit follows the above descriptions. According to an embodiment, the image decoding apparatus 100 may determine to split or not to split the determined second coding unit 510 into coding units, based on the split shape mode information. Referring to FIG. 5, the image decoding apparatus 100 may or may not split the non-square second coding unit 510, which is determined by splitting the first coding unit 500, into one or more third coding units 520a, 520b, 520c, and 520d based on the split shape mode information. The image decoding apparatus 100 may obtain the split shape mode information, and may obtain a plurality of various-shaped second coding units (e.g., 510) by splitting the first coding unit 500, based on the obtained split shape mode information, and the second coding unit 510 may be split by using a splitting method of the first coding unit 500 based on the split shape mode information. According to an embodiment, when the first coding unit 500 is split into the second coding units 510 based on the split shape mode information of the first coding unit 500, the second coding unit 510 may also be split into the third coding units (e.g., 520a, or 520b, 520c, and 520d) based on the split shape mode information of the second coding unit 510. That is, a coding unit may be recursively split based on the split shape mode information of each coding unit.

Accordingly, a square coding unit may be determined by splitting a non-square coding unit, and a non-square coding unit may be determined by recursively splitting the square coding unit. Referring to FIG. 5, a certain coding unit (e.g., a coding unit located at a center location, or a square coding unit) from among an odd number of third coding units 520b, 520c, and 520d determined by splitting the non-square second coding unit 510 may be recursively split. According to an embodiment, the non-square third coding unit 520b from among the odd number of third coding units 520b, 520c, and 520d may be split in a horizontal direction into a plurality of fourth coding units. A non-square fourth coding unit 530b or 530d from among the plurality of fourth coding units 530a, 530b, 530c, and 530d may be re-split into a plurality of coding units. For example, the non-square fourth coding unit 530b or 530d may be re-split into an odd number of coding units.

A method that may be used to recursively split a coding unit will be described below through various embodiments. According to an embodiment, the image decoding apparatus 100 may split each of the third coding units 520a, 520b, 520c, and 520d into coding units, based on the split shape mode information. Also, the image decoding apparatus 100 may determine not to split the second coding unit 510 based on the split shape mode information. According to an embodiment, the image decoding apparatus 100 may split the non-square second coding unit 510 into the odd number of third coding units 520b, 520c, and 520d. The image decoding apparatus 100 may put a certain restriction on a certain third coding unit from among the odd number of third coding units 520b, 520c, and 520d.

For example, the image decoding apparatus 100 may restrict the third coding unit 520c at a center location from among the odd number of third coding units 520b, 520c, and 520d to be no longer split or to be split a settable number of times. Referring to FIG. 5, the image decoding apparatus 100 may restrict the third coding unit 520c, which is at the center location from among the odd number of third coding units 520b, 520c, and 520d included in the non-square second coding unit 510, to be no longer split, to be split by using a certain splitting method (e.g., split into only four coding units or split by using a splitting method of the second coding unit 510), or to be split only a certain number of times (e.g., split only n times (where n>0)).

However, the restrictions on the third coding unit 520c at the center location are not limited to the above-described examples, and may include various restrictions for decoding the third coding unit 520c at the center location differently from the other third coding units 520b and 520d.

According to an embodiment, the image decoding apparatus 100 may obtain the split shape mode information, which is used to split a current coding unit, from a certain location in the current coding unit.

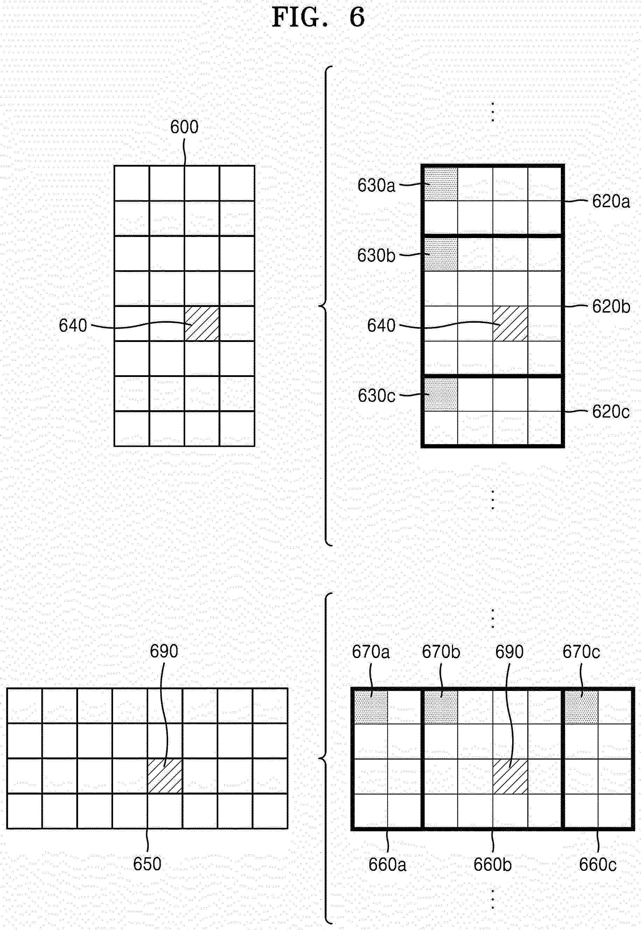

FIG. 6 illustrates a method in which the image decoding apparatus determines a certain coding unit from among an odd number of coding units, according to an embodiment. Referring to FIG. 6, split shape mode information of a current coding unit 600 or 650 may be obtained from a sample of a certain location (e.g., a sample 640 or 690 of a center location) from among a plurality of samples included in the current coding unit 600 or 650. However, the certain location in the current coding unit 600, from which at least one piece of the split shape mode information may be obtained, is not limited to the center location in FIG. 6, and may include various locations included in the current coding unit 600 (e.g., top, bottom, left, right, upper left, lower left, upper right, lower right locations, or the like).

The image decoding apparatus 100 may obtain the split shape mode information from the certain location and may determine to split or not to split the current coding unit into various-shaped and various-sized coding units. According to an embodiment, when the current coding unit is split into a certain number of coding units, the image decoding apparatus 100 may select one of the coding units.

Various methods may be used to select one of a plurality of coding units, as will be described below through various embodiments.

According to an embodiment, the image decoding apparatus 100 may split the current coding unit into a plurality of coding units, and may determine a coding unit at a certain location. According to an embodiment, the image decoding apparatus 100 may use information indicating locations of the odd number of coding units, to determine a coding unit at a center location from among the odd number of coding units. Referring to FIG. 6, the image decoding apparatus 100 may determine the odd number of coding units 620a, 620b, and 620c or the odd number of coding units 660a, 660b, and 660c by splitting the current coding unit 600 or the current coding unit 650. The image decoding apparatus 100 may determine the middle coding unit 620b or the middle coding unit 660b by using information about locations of the odd number of coding units 620a, 620b, and 620c or the odd number of coding units 660a, 660b, and 660c. For example, the image decoding apparatus 100 may determine the coding unit 620b of the center location by determining the locations of the coding units 620a, 620b, and 620c based on information indicating locations of certain samples included in the coding units 620a, 620b, and 620c.

In detail, the image decoding apparatus 100 may determine the coding unit 620b at the center location by determining the locations of the coding units 620a, 620b, and 620c based on information indicating locations of upper left samples 630a, 630b, and 630c of the coding units 620a, 620b, and 620c. According to an embodiment, the information indicating the locations of the upper left samples 630a, 630b, and 630c, which are respectively included in the coding units 620a, 620b, and 620c, may include information about locations or coordinates of the coding units 620a, 620b, and 620c in a picture. According to an embodiment, the information indicating the locations of the upper left samples 630a, 630b, and 630c, which are included in the coding units 620a, 620b, and 620c, respectively, may include information indicating widths or heights of the coding units 620a, 620b, and 620c included in the current coding unit 600, and the widths or heights may correspond to information indicating differences between the coordinates of the coding units 620a, 620b, and 620c in the picture.

That is, the image decoding apparatus 100 may determine the coding unit 620b at the center location by directly using the information about the locations or coordinates of the coding units 620a, 620b, and 620c in the picture, or by using the information about the widths or heights of the coding units, which correspond to the difference values between the coordinates. According to an embodiment, information indicating the location of the upper left sample 630a of the upper coding unit 620a may include coordinates (xa, ya), information indicating the location of the upper left sample 630b of the middle coding unit 620b may include coordinates (xb, yb), and information indicating the location of the upper left sample 630c of the lower coding unit 620c may include coordinates (xc, yc). The image decoding apparatus 100 may determine the middle coding unit 620b by using the coordinates of the upper left samples 630a, 630b, and 630c which are included in the coding units 620a, 620b, and 620c, respectively. For example, when the coordinates of the upper left samples 630a, 630b, and 630c are sorted in an ascending or descending order, the coding unit 620b including the coordinates (xb, yb) of the sample 630b at a center location may be determined as a coding unit at a center location from among the coding units 620a, 620b, and 620c determined by splitting the current coding unit 600. However, the coordinates indicating the locations of the upper left samples 630a, 630b, and 630c may include coordinates indicating absolute locations in the picture, or may use coordinates (dxb, dyb) indicating a relative location of the upper left sample 630b of the middle coding unit 620b and coordinates (dxc, dyc) indicating a relative location of the upper left sample 630c of the lower coding unit 620c with respect to the location of the upper left sample 630a of the upper coding unit 620a.

A method of determining a coding unit at a certain location by using coordinates of a sample included in the coding unit as information indicating a location of the sample is not limited to the above-described method, and may include various arithmetic methods capable of using the coordinates of the sample. According to an embodiment, the image decoding apparatus 100 may split the current coding unit 600 into a plurality of coding units 620a, 620b, and 620c, and may select one of the coding units 620a, 620b, and 620c based on a certain criterion.

For example, the image decoding apparatus 100 may select the coding unit 620b, which has a size different from that of the others, from among the coding units 620a, 620b, and 620c. According to an embodiment, the image decoding apparatus 100 may determine the width or height of each of the coding units 620a, 620b, and 620c by using the coordinates (xa, ya) that is the information indicating the location of the upper left sample 630a of the upper coding unit 620a, the coordinates (xb, yb) that is the information indicating the location of the upper left sample 630b of the middle coding unit 620b, and the coordinates (xc, yc) that are the information indicating the location of the upper left sample 630c of the lower coding unit 620c. The image decoding apparatus 100 may determine the respective sizes of the coding units 620a, 620b, and 620c by using the coordinates (xa, ya), (xb, yb), and (xc, yc) indicating the locations of the coding units 620a, 620b, and 620c. According to an embodiment, the image decoding apparatus 100 may determine the width of the upper coding unit 620a to be the width of the current coding unit 600. The image decoding apparatus 100 may determine the height of the upper coding unit 620a to be yb-ya. According to an embodiment, the image decoding apparatus 100 may determine the width of the middle coding unit 620b to be the width of the current coding unit 600. The image decoding apparatus 100 may determine the height of the middle coding unit 620b to be yc-yb. According to an embodiment, the image decoding apparatus 100 may determine the width or height of the lower coding unit 620c by using the width or height of the current coding unit 600 and the widths or heights of the upper and middle coding units 620a and 620b. The image decoding apparatus 100 may determine a coding unit, which has a size different from that of the others, based on the determined widths and heights of the coding units 620a, 620b, and 620c. Referring to FIG. 6, the image decoding apparatus 100 may determine the middle coding unit 620b, which has a size different from the size of the upper and lower coding units 620a and 620c, as the coding unit of the certain location.

However, the above-described process in which the image decoding apparatus 100 determines a coding unit having a size different from the size of the other coding units merely corresponds to an example of determining a coding unit at a certain location by using the sizes of coding units, which are determined based on coordinates of samples, and thus various processes of determining a coding unit at a certain location by comparing the sizes of coding units, which are determined based on coordinates of certain samples, may be used. The image decoding apparatus 100 may determine the width or height of each of the coding units 660a, 660b, and 660c by using coordinates (xd, yd) that are information indicating a location of an upper left sample 670a of the left coding unit 660a, coordinates (xe, ye) that are information indicating a location of an upper left sample 670b of the middle coding unit 660b, and coordinates (xf, yf) that are information indicating a location of an upper left sample 670c of the right coding unit 660c.

The image decoding apparatus 100 may determine the respective sizes of the coding units 660a, 660b, and 660c by using the coordinates (xd, yd), (xe, ye), and (xf, yf) indicating the locations of the coding units 660a, 660b, and 660c. According to an embodiment, the image decoding apparatus 100 may determine the width of the left coding unit 660a to be xe-xd. The image decoding apparatus 100 may determine the height of the left coding unit 660a to be the height of the current coding unit 650. According to an embodiment, the image decoding apparatus 100 may determine the width of the middle coding unit 660b to be xf-xe. The image decoding apparatus 100 may determine the height of the middle coding unit 660b to be the height of the current coding unit 650. According to an embodiment, the image decoding apparatus 100 may determine the width or height of the right coding unit 660c by using the width or height of the current coding unit 650 and the widths or heights of the left and middle coding units 660a and 660b. The image decoding apparatus 100 may determine a coding unit, which has a size different from that of the others, based on the determined widths and heights of the coding units 660a, 660b, and 660c. Referring to FIG. 6, the image decoding apparatus 100 may determine the middle coding unit 660b, which has a size different from the size of the left and right coding units 660a and 660c, as the coding unit of the certain location.

However, the above-described process in which the image decoding apparatus 100 determines a coding unit having a size different from the size of the other coding units merely corresponds to an example of determining a coding unit at a certain location by using the sizes of coding units, which are determined based on coordinates of samples, and thus various processes of determining a coding unit at a certain location by comparing the sizes of coding units, which are determined based on coordinates of certain samples, may be used.

However, locations of samples considered to determine locations of coding units are not limited to the above-described upper left locations, and information about arbitrary locations of samples included in the coding units may be used. According to an embodiment, the image decoding apparatus 100 may select a coding unit at a certain location from among an odd number of coding units determined by splitting the current coding unit, by considering the shape of the current coding unit. For example, when the current coding unit has a non-square shape, a width of which is longer than a height, the image decoding apparatus 100 may determine the coding unit at the certain location in a horizontal direction. That is, the image decoding apparatus 100 may determine one of coding units at different locations in a horizontal direction and may put a restriction on the coding unit. When the current coding unit has a non-square shape, a height of which is longer than a width, the image decoding apparatus 100 may determine the coding unit at the certain location in a vertical direction.

That is, the image decoding apparatus 100 may determine one of coding units at different locations in a vertical direction and may put a restriction on the coding unit. According to an embodiment, the image decoding apparatus 100 may use information indicating respective locations of an even number of coding units, to determine the coding unit at the certain location from among the even number of coding units. The image decoding apparatus 100 may determine an even number of coding units by splitting (binary splitting) the current coding unit, and may determine the coding unit at the certain location by using the information about the locations of the even number of coding units.

An operation related thereto may correspond to the operation of determining a coding unit at a certain location (e.g., a center location) from among an odd number of coding units, which has been described in detail above with reference to FIG. 6, and thus detailed descriptions thereof will be omitted. According to an embodiment, when a non-square current coding unit is split into a plurality of coding units, certain information about a coding unit at a certain location may be used in a splitting operation to determine the coding unit at the certain location from among the plurality of coding units.

For example, the image decoding apparatus 100 may use at least one of block shape information and split shape mode information, which is stored in a sample included in a middle coding unit, in a splitting operation to determine a coding unit at a center location from among the plurality of coding units determined by splitting the current coding unit. Referring to FIG. 6, the image decoding apparatus 100 may split the current coding unit 600 into the plurality of coding units 620a, 620b, and 620c based on the split shape mode information, and may determine the coding unit 620b at a center location from among the plurality of the coding units 620a, 620b, and 620c. Furthermore, the image decoding apparatus 100 may determine the coding unit 620b at the center location, in consideration of a location from which the split shape mode information is obtained. That is, the split shape mode information of the current coding unit 600 may be obtained from the sample 640 at a center location of the current coding unit 600 and, when the current coding unit 600 is split into the plurality of coding units 620a, 620b, and 620c based on the split shape mode information, the coding unit 620b including the sample 640 may be determined as the coding unit at the center location.

However, information used to determine the coding unit at the center location is not limited to the split shape mode information, and various types of information may be used to determine the coding unit at the center location. According to an embodiment, certain information for identifying the coding unit at the certain location may be obtained from a certain sample included in a coding unit to be determined. Referring to FIG. 6, the image decoding apparatus 100 may use the split shape mode information, which is obtained from a sample at a certain location in the current coding unit 600 (e.g., a sample at a center location of the current coding unit 600) to determine a coding unit at a certain location from among the plurality of the coding units 620a, 620b, and 620c determined by splitting the current coding unit 600 (e.g., a coding unit at a center location from among a plurality of split coding units). That is, the image decoding apparatus 100 may determine the sample at the certain location by considering a block shape of the current coding unit 600, may determine the coding unit 620b including a sample, from which certain information (e.g., the split shape mode information) may be obtained, from among the plurality of coding units 620a, 620b, and 620c determined by splitting the current coding unit 600, and may put a certain restriction on the coding unit 620b. Referring to FIG. 6, according to an embodiment, the image decoding apparatus 100 may determine the sample 640 at the center location of the current coding unit 600 as the sample from which the certain information may be obtained, and may put a certain restriction on the coding unit 620b including the sample 640, in a decoding process.

However, the location of the sample from which the certain information may be obtained is not limited to the above-described location, and may include arbitrary locations of samples included in the coding unit 620b to be determined for a restriction. According to an embodiment, the location of the sample from which the certain information may be obtained may be determined based on the shape of the current coding unit 600. According to an embodiment, the block shape information may indicate whether the current coding unit has a square or non-square shape, and the location of the sample from which the certain information may be obtained may be determined based on the shape. For example, the image decoding apparatus 100 may determine a sample located at a boundary for splitting at least one of a width and height of the current coding unit in half, as the sample from which the certain information may be obtained, by using at least one of information about the width of the current coding unit and information about the height of the current coding unit.

As another example, when the block shape information of the current coding unit indicates a non-square shape, the image decoding apparatus 100 may determine one of samples adjacent to a boundary for splitting a long side of the current coding unit in half, as the sample from which the certain information may be obtained. According to an embodiment, when the current coding unit is split into a plurality of coding units, the image decoding apparatus 100 may use the split shape mode information to determine a coding unit at a certain location from among the plurality of coding units. According to an embodiment, the image decoding apparatus 100 may obtain the split shape mode information from a sample at a certain location in a coding unit, and may split the plurality of coding units, which are generated by splitting the current coding unit, by using the split shape mode information, which is obtained from the sample of the certain location in each of the plurality of coding units. That is, a coding unit may be recursively split based on the split shape mode information, which is obtained from the sample at the certain location in each coding unit.

A process of recursively splitting a coding unit has been described above with reference to FIG. 5, and thus detailed descriptions thereof will be omitted.

According to an embodiment, the image decoding apparatus 100 may determine one or more coding units by splitting the current coding unit, and may determine an order of decoding the one or more coding units, based on a certain block (e.g., the current coding unit).

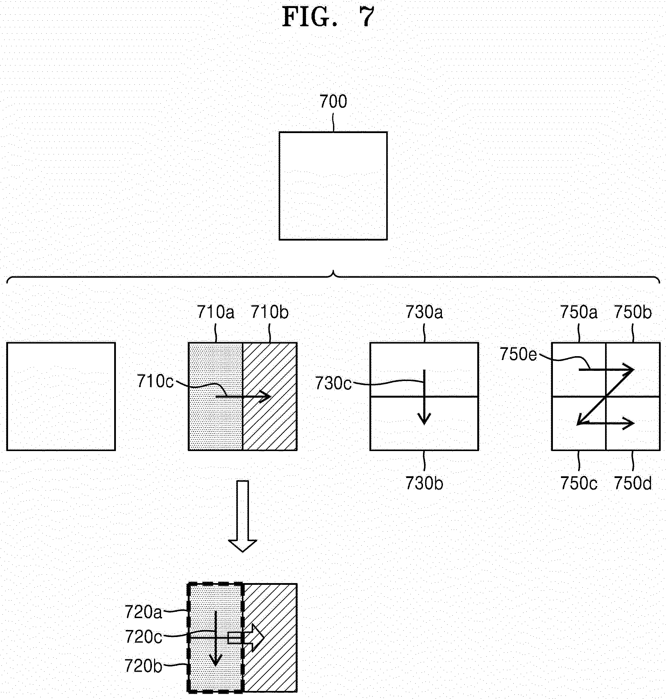

FIG. 7 illustrates an order of processing a plurality of coding units when the image decoding apparatus determines the plurality of coding units by splitting a current coding unit, according to an embodiment.

According to an embodiment, the image decoding apparatus 100 may determine second coding units 710a and 710b by splitting a first coding unit 700 in a vertical direction, may determine second coding units 730a and 730b by splitting the first coding unit 700 in a horizontal direction, or may determine second coding units 750a, 750b, 750c, and 750d by splitting the first coding unit 700 in vertical and horizontal directions, based on split shape mode information. Referring to FIG. 7, the image decoding apparatus 100 may determine to process the second coding units 710a and 710b, which are determined by splitting the first coding unit 700 in a vertical direction, in a horizontal direction order 710c. The image decoding apparatus 100 may determine to process the second coding units 730a and 730b, which are determined by splitting the first coding unit 700 in a horizontal direction, in a vertical direction order 730c.

The image decoding apparatus 100 may determine the second coding units 750a, 750b, 750c, and 750d, which are determined by splitting the first coding unit 700 in vertical and horizontal directions, according to a certain order (e.g., a raster scan order or Z-scan order 750e) by which coding units in a row are processed and then coding units in a next row are processed. According to an embodiment, the image decoding apparatus 100 may recursively split coding units. Referring to FIG. 7, the image decoding apparatus 100 may determine the plurality of coding units 710a and 710b, 730a and 730b, or 750a, 750b, 750c, and 750d by splitting the first coding unit 700, and may recursively split each of the determined plurality of coding units 710a, 710b, 730a, 730b, 750a, 750b, 750c, and 750d. A splitting method of the plurality of coding units 710a and 710b, 730a and 730b, or 750a, 750b, 750c, and 750d may correspond to a splitting method of the first coding unit 700. Accordingly, each of the plurality of coding units 710a and 710b, 730a and 730b, or 750a, 750b, 750c, and 750d may be independently split into a plurality of coding units.

Referring to FIG. 7, the image decoding apparatus 100 may determine the second coding units 710a and 710b by splitting the first coding unit 700 in a vertical direction, and may determine to independently split or not to split each of the second coding units 710a and 710b.

According to an embodiment, the image decoding apparatus 100 may determine third coding units 720a and 720b by splitting the left second coding unit 710a in a horizontal direction, and may not split the right second coding unit 710b. According to an embodiment, a processing order of coding units may be determined based on a process of splitting a coding unit. In other words, a processing order of split coding units may be determined based on a processing order of coding units immediately before being split. The image decoding apparatus 100 may determine a processing order of the third coding units 720a and 720b determined by splitting the left second coding unit 710a, independently of the right second coding unit 710b. Because the third coding units 720a and 720b are determined by splitting the left second coding unit 710a in a horizontal direction, the third coding units 720a and 720b may be processed in a vertical direction order 720c. Because the left and right second coding units 710a and 710b are processed in the horizontal direction order 710c, the right second coding unit 710b may be processed after the third coding units 720a and 720b included in the left second coding unit 710a are processed in the vertical direction order 720c.

A process of determining a processing order of coding units based on a coding unit before being split is not limited to the above-described example, and various methods may be used to independently process coding units, which are split and determined to various shapes, in a certain order.

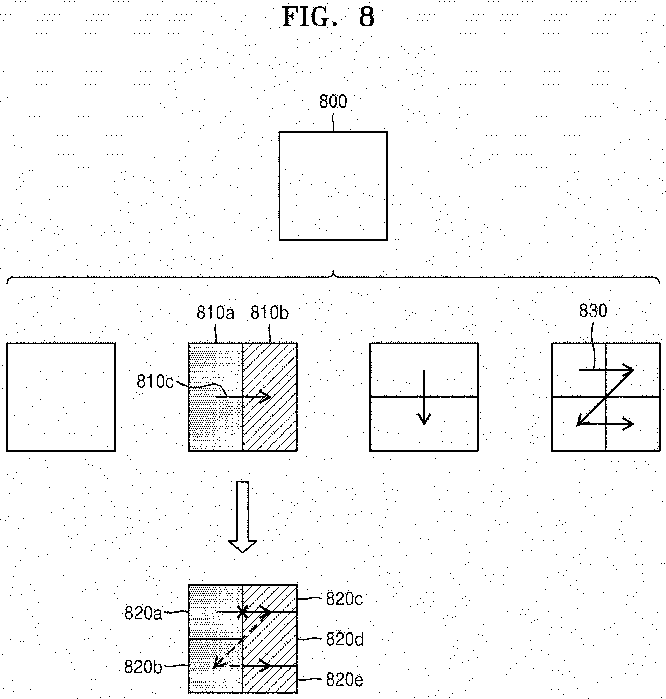

FIG. 8 illustrates a process in which the image decoding apparatus determines that a current coding unit is to be split into an odd number of coding units, when the coding units are not processable in a certain order, according to an embodiment. According to an embodiment, the image decoding apparatus 100 may determine that the current coding unit is to be split into an odd number of coding units, based on obtained split shape mode information. Referring to FIG. 8, a square first coding unit 800 may be split into non-square second coding units 810a and 810b, and the second coding units 810a and 810b may be independently split into third coding units 820a and 820b, and 820c, 820d, and 820e.

According to an embodiment, the image decoding apparatus 100 may determine the plurality of third coding units 820a and 820b by splitting the left second coding unit 810a in a horizontal direction, and may split the right second coding unit 810b into the odd number of third coding units 820c, 820d, and 820e. According to an embodiment, the image decoding apparatus 100 may determine whether any coding unit is split into an odd number of coding units, by determining whether the third coding units 820a and 820b, and 820c, 820d, and 820e are processable in a certain order. Referring to FIG. 8, the image decoding apparatus 100 may determine the third coding units 820a and 820b, and 820c, 820d, and 820e by recursively splitting the first coding unit 800. The image decoding apparatus 100 may determine whether any of the first coding unit 800, the second coding units 810a and 810b, or the third coding units 820a and 820b, and 820c, 820d, and 820e are split into an odd number of coding units, based on at least one of the block shape information and the split shape mode information. For example, a right coding unit from among the second coding units 810a and 810b may be split into an odd number of third coding units 820c, 820d, and 820e.

A processing order of a plurality of coding units included in the first coding unit 800 may be a certain order (e.g., a Z-scan order 830), and the image decoding apparatus 100 may determine whether the third coding units 820c, 820d, and 820e, which are determined by splitting the right second coding unit 810b into an odd number of coding units, satisfy a condition for processing in the certain order. According to an embodiment, the image decoding apparatus 100 may determine whether the third coding units 820a and 820b, and 820c, 820d, and 820e included in the first coding unit 800 satisfy the condition for processing in the certain order, and the condition relates to whether at least one of a width and height of the second coding units 810a and 810b is to be split in half along a boundary of the third coding units 820a and 820b, and 820c, 820d, and 820e. For example, the third coding units 820a and 820b determined when the height of the left second coding unit 810a of the non-square shape is split in half may satisfy the condition. It may be determined that the third coding units 820c, 820d, and 820e do not satisfy the condition because the boundaries of the third coding units 820c, 820d, and 820e determined when the right second coding unit 810b is split into three coding units are unable to split the width or height of the right second coding unit 810b in half. When the condition is not satisfied as described above, the image decoding apparatus 100 may decide disconnection of a scan order, and may determine that the right second coding unit 810b is to be split into an odd number of coding units, based on a result of the decision.

According to an embodiment, when a coding unit is split into an odd number of coding units, the image decoding apparatus 100 may put a certain restriction on a coding unit at a certain location from among the split coding units.

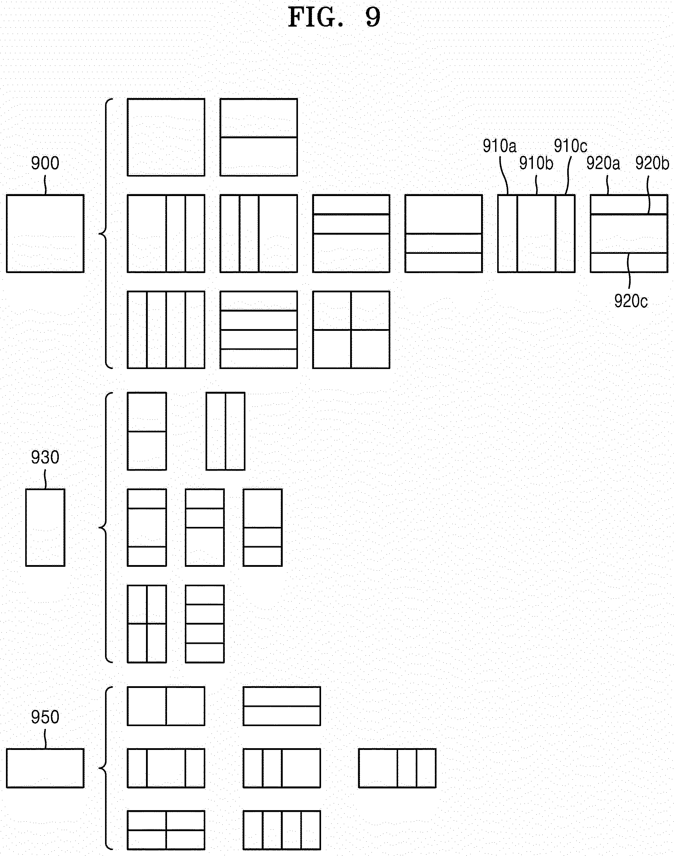

The restriction or the certain location has been described above through various embodiments, and thus detailed descriptions thereof will be omitted. FIG. 9 illustrates a process in which the image decoding apparatus determines at least one coding unit by splitting a first coding unit, according to an embodiment. According to an embodiment, the image decoding apparatus 100 may split the first coding unit 900, based on split shape mode information, which is obtained by the receiver 110. The square first coding unit 900 may be split into four square coding units, or may be split into a plurality of non-square coding units.

For example, referring to FIG. 9, when the first coding unit 900 has a square shape and the split shape mode information indicates to split the first coding unit 900 into non-square coding units, the image decoding apparatus 100 may split the first coding unit 900 into a plurality of non-square coding units. In detail, when the split shape mode information indicates to determine an odd number of coding units by splitting the first coding unit 900 in a horizontal direction or a vertical direction, the image decoding apparatus 100 may split the square first coding unit 900 into an odd number of coding units, e.g., second coding units 910a, 910b, and 910c determined by splitting the square first coding unit 900 in a vertical direction or second coding units 920a, 920b, and 920c determined by splitting the square first coding unit 900 in a horizontal direction. According to an embodiment, the image decoding apparatus 100 may determine whether the second coding units 910a, 910b, 910c, 920a, 920b, and 920c included in the first coding unit 900 satisfy a condition for processing in a certain order, and the condition relates to whether at least one of a width and height of the first coding unit 900 is to be split in half along a boundary of the second coding units 910a, 910b, 910c, 920a, 920b, and 920c. Referring to FIG. 9, because boundaries of the second coding units 910a, 910b, and 910c determined by splitting the square first coding unit 900 in a vertical direction do not split the width of the first coding unit 900 in half, it may be determined that the first coding unit 900 does not satisfy the condition for processing in the certain order. Also, because boundaries of the second coding units 920a, 920b, and 920c determined by splitting the square first coding unit 900 in a horizontal direction do not split the height of the first coding unit 900 in half, it may be determined that the first coding unit 900 does not satisfy the condition for processing in the certain order.

When the condition is not satisfied as described above, the image decoding apparatus 100 may decide disconnection of a scan order, and may determine that the first coding unit 900 is to be split into an odd number of coding units, based on a result of the decision.

According to an embodiment, when a coding unit is split into an odd number of coding units, the image decoding apparatus 100 may put a certain restriction on a coding unit at a certain location from among the split coding units.

The restriction or the certain location has been described above through various embodiments, and thus detailed descriptions thereof will be omitted.

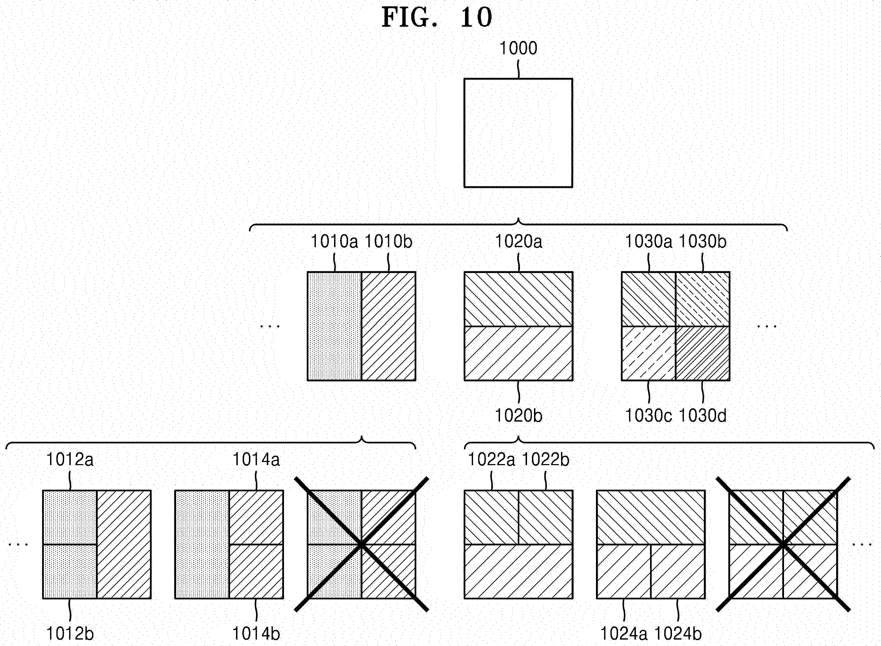

According to an embodiment, the image decoding apparatus 100 may determine various-shaped coding units by splitting a first coding unit. Referring to FIG. 9, the image decoding apparatus 100 may split the square first coding unit 900 or a non-square first coding unit 930 or 950 into various-shaped coding units. FIG. 10 illustrates that a shape into which a second coding unit is splittable is restricted when the second coding unit having a non-square shape, which is determined when the image decoding apparatus splits a first coding unit, satisfies a certain condition, according to an embodiment. According to an embodiment, the image decoding apparatus 100 may determine to split the square first coding unit 1000 into non-square second coding units 1010a, and 1010b or 1020a and 1020b, based on split shape mode information, which is obtained by the receiver 110. The second coding units 1010a and 1010b, or 1020a and 1020b may be independently split. Accordingly, the image decoding apparatus 100 may determine to split or not to split each of the second coding units 1010a and 1010b, or 1020a and 1020b into a plurality of coding units, based on the split shape mode information of each of the second coding units 1010a and 1010b, or 1020a and 1020b. According to an embodiment, the image decoding apparatus 100 may determine third coding units 1012a and 1012b by splitting the non-square left second coding unit 1010a, which is determined by splitting the first coding unit 1000 in a vertical direction, in a horizontal direction.

However, when the left second coding unit 1010a is split in a horizontal direction, the image decoding apparatus 100 may restrict the right second coding unit 1010b not to be split in a horizontal direction in which the left second coding unit 1010a is split. When third coding units 1014a and 1014b are determined by splitting the right second coding unit 1010b in the same direction, because the left and right second coding units 1010a and 1010b are independently split in a horizontal direction, the third coding units 1012a, 1012b, 1014a, and 1014b may be determined.

However, this case serves equally as a case in which the image decoding apparatus 100 splits the first coding unit 1000 into four square second coding units 1030a, 1030b, 1030c, and 1030d, based on the split shape mode information, and may be inefficient in terms of image decoding.

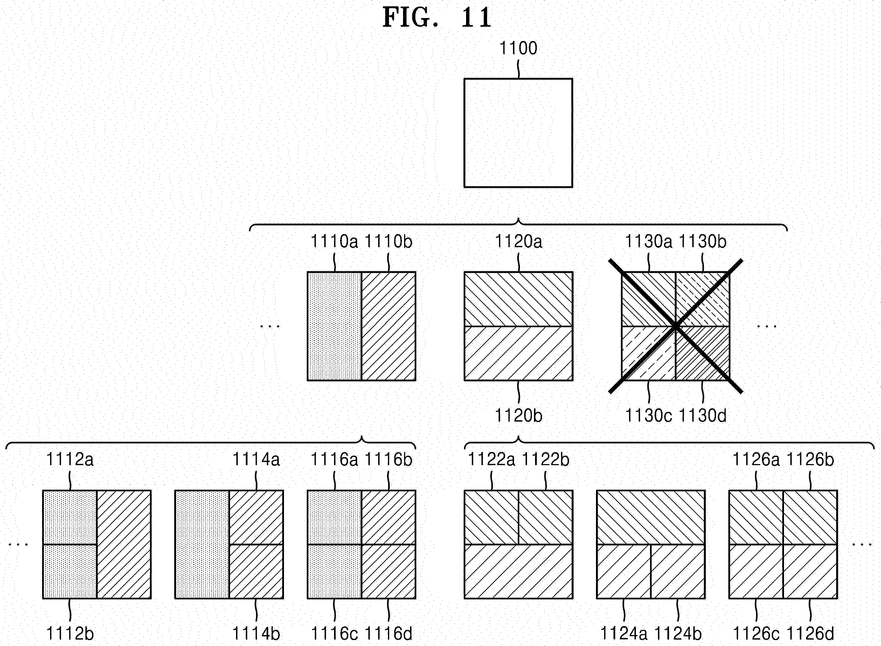

According to an embodiment, the image decoding apparatus 100 may determine third coding units 1022a and 1022b, or 1024a and 1024b by splitting the non-square second coding unit 1020a or 1020b, which is determined by splitting the first coding unit 1000 in a horizontal direction, in a vertical direction. However, when a second coding unit (e.g., the upper second coding unit 1020a) is split in a vertical direction, for the above-described reason, the image decoding apparatus 100 may restrict the other second coding unit (e.g., the lower second coding unit 1020b) not to be split in a vertical direction in which the upper second coding unit 1020a is split. FIG. 11 illustrates a process in which the image decoding apparatus splits a square coding unit when split shape mode information indicates that the square coding unit is not to be split into four square coding units, according to an embodiment. According to an embodiment, the image decoding apparatus 100 may determine second coding units 1110a and 1110b, or 1120a and 1120b, etc. by splitting a first coding unit 1100, based on split shape mode information.

The split shape mode information may include information about various methods of splitting a coding unit but, the information about various splitting methods may not include information for splitting a coding unit into four square coding units. According to such split shape mode information, the image decoding apparatus 100 may not split the square first coding unit 1100 into four square second coding units 1130a, 1130b, 1130c, and 1130d.

The image decoding apparatus 100 may determine the non-square second coding units 1110a and 1110b, or 1120a and 1120b, etc., based on the split shape mode information. According to an embodiment, the image decoding apparatus 100 may independently split the non-square second coding units 1110a and 1110b, or 1120a and 1120b, etc.

Each of the second coding units 1110a and 1110b, or 1120a and 1120b, etc. may be recursively split in a certain order, and this splitting method may correspond to a method of splitting the first coding unit 1100, based on the split shape mode information. For example, the image decoding apparatus 100 may determine square third coding units 1112a and 1112b by splitting the left second coding unit 1110a in a horizontal direction, and may determine square third coding units 1114a and 1114b by splitting the right second coding unit 1110b in a horizontal direction.

Furthermore, the image decoding apparatus 100 may determine square third coding units 1116a, 1116b, 1116c, and 1116d by splitting both of the left and right second coding units 1110a and 1110b in a horizontal direction. In this case, coding units having the same shape as the four square second coding units 1130a, 1130b, 1130c, and 1130d split from the first coding unit 1100 may be determined. As another example, the image decoding apparatus 100 may determine square third coding units 1122a and 1122b by splitting the upper second coding unit 1120a in a vertical direction, and may determine square third coding units 1124a and 1124b by splitting the lower second coding unit 1120b in a vertical direction.

Furthermore, the image decoding apparatus 100 may determine square third coding units 1126a, 1126b, 1126c, and 1126d by splitting both the upper and lower second coding units 1120a and 1120b in a vertical direction.

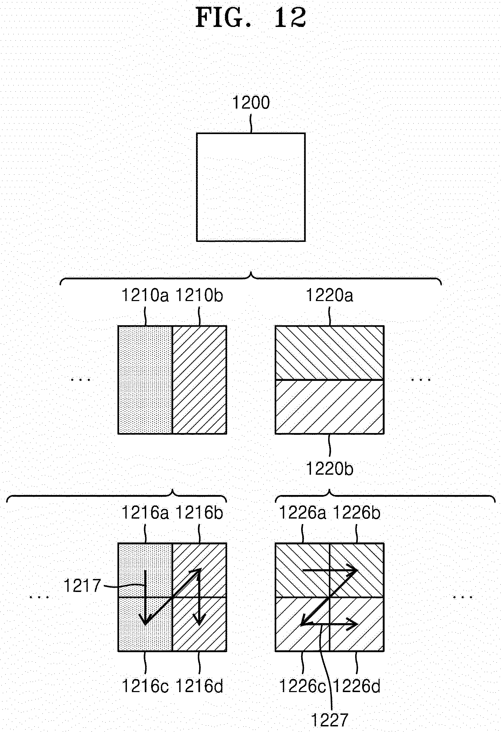

In this case, coding units having the same shape as the four square second coding units 1130a, 1130b, 1130c, and 1130d split from the first coding unit 1100 may be determined. FIG. 12 illustrates that a processing order between a plurality of coding units may vary according to a process of splitting a coding unit, according to an embodiment. According to an embodiment, the image decoding apparatus 100 may split a first coding unit 1200, based on split shape mode information. When a block shape indicates a square shape and the split shape mode information indicates to split the first coding unit 1200 in at least one of horizontal and vertical directions, the image decoding apparatus 100 may determine second coding units (e.g., 1210a and 1210b, or 1220a and 1220b, etc.) by splitting the first coding unit 1200.

Referring to FIG. 12, the non-square second coding units 1210a and 1210b, or 1220a and 1220b determined by splitting the first coding unit 1200 in only a horizontal direction or vertical direction may be independently split based on the split shape mode information of each coding unit. For example, the image decoding apparatus 100 may determine third coding units 1216a, 1216b, 1216c, and 1216d by splitting the second coding units 1210a and 1210b, which are generated by splitting the first coding unit 1200 in a vertical direction, in a horizontal direction, and may determine third coding units 1226a, 1226b, 1226c, and 1226d by splitting the second coding units 1220a and 1220b, which are generated by splitting the first coding unit 1200 in a horizontal direction, in a vertical direction. A process of splitting the second coding units 1210a and 1210b, or 1220a and 1220b has been described above with reference to FIG. 11, and thus detailed descriptions thereof will be omitted. According to an embodiment, the image decoding apparatus 100 may process coding units in a certain order.

An operation of processing coding units in a certain order has been described above with reference to FIG. 7, and thus detailed descriptions thereof will be omitted.

Referring to FIG. 12, the image decoding apparatus 100 may determine four square third coding units 1216a, 1216b, 1216c, and 1216d, and 1226a, 1226b, 1226c, and 1226d by splitting the square first coding unit 1200.

According to an embodiment, the image decoding apparatus 100 may determine processing orders of the third coding units 1216a, 1216b, 1216c, and 1216d, and 1226a, 1226b, 1226c, and 1226d based on a split shape into which the first coding unit 1200 is split. According to an embodiment, the image decoding apparatus 100 may determine the third coding units 1216a, 1216b, 1216c, and 1216d by splitting the second coding units 1210a and 1210b generated by splitting the first coding unit 1200 in a vertical direction, in a horizontal direction, and may process the third coding units 1216a, 1216b, 1216c, and 1216d in a processing order 1217 for initially processing the third coding units 1216a and 1216c, which are included in the left second coding unit 1210a, in a vertical direction and then processing the third coding unit 1216b and 1216d, which are included in the right second coding unit 1210b, in a vertical direction. According to an embodiment, the image decoding apparatus 100 may determine the third coding units 1226a, 1226b, 1226c, and 1226d by splitting the second coding units 1220a and 1220b generated by splitting the first coding unit 1200 in a horizontal direction, in a vertical direction, and may process the third coding units 1226a, 1226b, 1226c, and 1226d in a processing order 1227 for initially processing the third coding units 1226a and 1226b, which are included in the upper second coding unit 1220a, in a horizontal direction and then processing the third coding unit 1226c and 1226d, which are included in the lower second coding unit 1220b, in a horizontal direction.

Referring to FIG. 12, the square third coding units 1216a, 1216b, 1216c, and 1216d, and 1226a, 1226b, 1226c, and 1226d may be determined by splitting the second coding units 1210a and 1210b, and 1220a and 1220b, respectively.

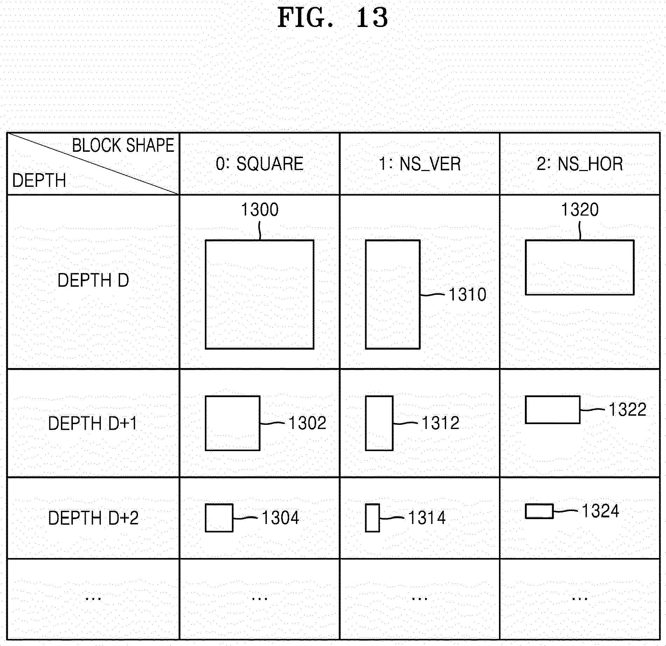

Although the second coding units 1210a and 1210b are determined by splitting the first coding unit 1200 in a vertical direction differently from the second coding units 1220a and 1220b which are determined by splitting the first coding unit 1200 in a horizontal direction, the third coding units 1216a, 1216b, 1216c, and 1216d, and 1226a, 1226b, 1226c, and 1226d split therefrom eventually show same-shaped coding units split from the first coding unit 1200. As such, by recursively splitting a coding unit in different manners based on the split shape mode information, the image decoding apparatus 100 may process a plurality of coding units in different orders even when the coding units are eventually determined to have the same shape. FIG. 13 illustrates a process of determining a depth of a coding unit as a shape and a size of the coding unit change, when the coding unit is recursively split to determine a plurality of coding units, according to an embodiment. According to an embodiment, the image decoding apparatus 100 may determine a depth of a coding unit, based on a certain criterion.

For example, the certain criterion may be the length of a long side of the coding unit. When the length of a long side of a coding unit before being split is 2n times (n>0) the length of a long side of a split current coding unit, the image decoding apparatus 100 may determine that a depth of the current coding unit is increased from a depth of the coding unit before being split, by n. In the following descriptions, a coding unit having an increased depth is represented as a coding unit of a lower depth. Referring to FIG. 13, according to an embodiment, the image decoding apparatus 100 may determine a second coding unit 1302 and a third coding unit 1304 of lower depths by splitting a square first coding unit 1300 based on block shape information indicating a square shape (e.g., the block shape information may be represented as '0: SQUARE'). Assuming that the size of the square first coding unit 1300 is $2N \times 2N$, the second coding unit 1302 determined by splitting a width and height of the first coding unit 1300 in 1/2 may have a size of $N \times N$.

Furthermore, the third coding unit 1304 determined by splitting a width and height of the second coding unit 1302 in 1/2 may have a size of $N/2 \times N/2$.

In this case, a width and height of the third coding unit 1304 are 1/4 times those of the first coding unit 1300. When a depth of the first coding unit 1300 is D, a depth of the second coding unit 1302, the width and height of which are 1/2 times those of the first coding unit 1300, may be D+1, and a depth of the third coding unit 1304, the width and height of which are 1/4 times those of the first coding unit 1300, may be D+2.

According to an embodiment, the image decoding apparatus 100 may determine a second coding unit 1312 or 1322 and a third coding unit 1314 or 1324 of lower depths by splitting a non-square first coding unit 1310 or 1320 based on block shape information indicating a non-square shape (e.g., the block shape information may be represented as '1: NS_VER' indicating a non-square shape, a height of which is longer than a width, or as '2: NS_HOR' indicating a non-square shape, a width of which is longer than a height). The image decoding apparatus 100 may determine the second coding unit 1302, 1312, or 1322 by splitting at least one of a width and height of the first coding unit 1310 having a size of $N \times 2N$.

That is, the image decoding apparatus 100 may determine the second coding unit 1302 having a size of $N \times N$ or the second coding unit 1322 having a size of $N \times N/2$ by splitting the first coding unit 1310 in a horizontal direction, or may determine the second coding unit 1312 having a size of $N/2 \times N$ by splitting the first coding unit 1310 in horizontal and vertical directions. According to an embodiment, the image decoding apparatus 100 may determine a second coding unit (e.g., 1302, 1312, or 1322) by splitting at least one of a width and height of the first coding unit 1320 having a size of $2N \times N$.

That is, the image decoding apparatus 100 may determine the second coding unit 1302 having a size of $N \times N$ or the second coding unit 1312 having a size of $N/2 \times N$ by splitting the first coding unit 1320 in a vertical direction, or may determine the second coding unit 1322 having a size of $N \times N/2$ by splitting the first coding unit 1320 in horizontal and vertical directions. According to an embodiment, the image decoding apparatus 100 may determine a third coding unit (e.g., 1304, 1314, or 1324) by splitting at least one of a width and height of the second coding unit 1302 having a size of $N \times N$.

That is, the image decoding apparatus 100 may determine the third coding unit 1304 having a size of $N/2 \times N/2$, the third coding unit 1314 having a size of $N/4 \times N/2$, or the third coding unit 1324 having a size of $N/2 \times N/4$ by splitting the second coding unit 1302 in vertical and horizontal directions. According to an embodiment, the image decoding apparatus 100 may determine a third coding unit (e.g., 1304, 1314, or 1324) by splitting at least one of a width and height of the second coding unit 1312 having a size of $N/2 \times N$.

That is, the image decoding apparatus 100 may determine the third coding unit 1304 having a size of $N/2 \times N/2$ or the third coding unit 1324 having a size of $N/2 \times N/4$ by splitting the second coding unit 1312 in a horizontal direction, or may determine the third coding unit 1314 having a size of $N/4 \times N/2$ by splitting the second coding unit 1312 in vertical and horizontal directions. According to an embodiment, the image decoding apparatus 100 may determine a third coding unit (e.g., 1304, 1314, or 1324) by splitting at least one of a width and height of the second coding unit 1322 having a size of $N \times N/2$. That is, the image decoding apparatus 100 may determine the third coding unit 1304 having a size of $N/2 \times N/2$ or the third coding unit 1314 having a size of $N/4 \times N/2$ by splitting the second coding unit 1322 in a vertical direction, or may determine the third coding unit 1324 having a size of $N/2 \times N/4$ by splitting the second coding unit 1322 in vertical and horizontal directions.

According to an embodiment, the image decoding apparatus 100 may split a square coding unit (e.g., 1300, 1302, or 1304) in a horizontal or vertical direction. For example, the image decoding apparatus 100 may determine the first coding unit 1310 having a size of $N \times 2N$ by splitting the first coding unit 1300 having a size of $2N \times 2N$ in a vertical direction, or may determine the first coding unit 1320 having a size of $2N \times N$ by splitting the first coding unit 1300 in a horizontal direction.

According to an embodiment, when a depth is determined based on the length of a longest side of a coding unit, a depth of a coding unit determined by splitting the first coding unit 1300 having a size of $2N \times 2N$ in a horizontal or vertical direction may be the same as the depth of the first coding unit 1300.

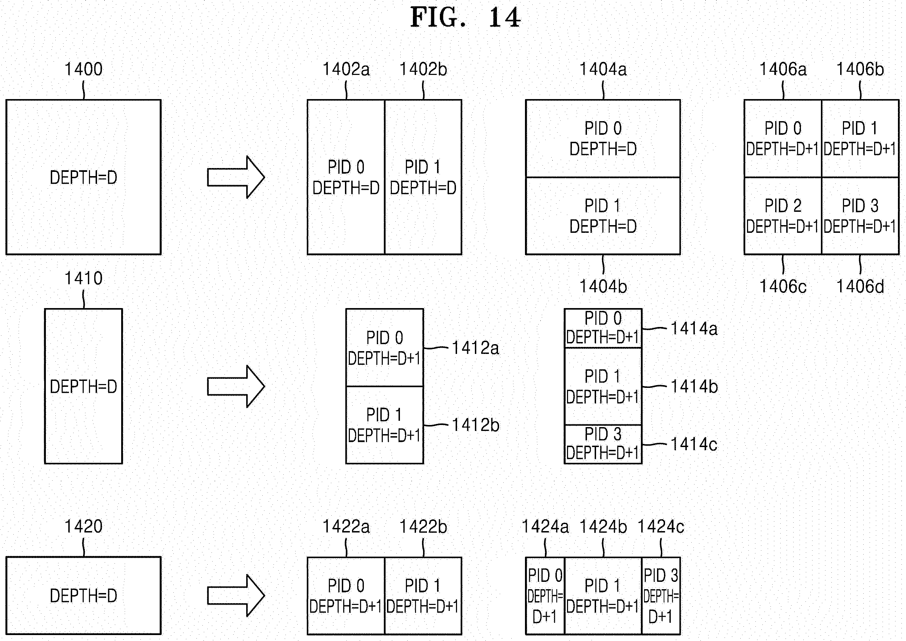

According to an embodiment, a width and height of the third coding unit 1314 or 1324 may be 1/4 times those of the first coding unit 1310 or 1320. When a depth of the first coding unit 1310 or 1320 is D, a depth of the second coding unit 1312 or 1322, the width and height of which are 1/2 times those of the first coding unit 1310 or 1320, may be D+1, and a depth of the third coding unit 1314 or 1324, the width and height of which are 1/4 times those of the first coding unit 1310 or 1320, may be D+2. FIG. 14 illustrates depths that are determinable based on shapes and sizes of coding units, and part indexes (PIDs) that are for distinguishing the coding units, according to an embodiment.

According to an embodiment, the image decoding apparatus 100 may determine various-shape second coding units by splitting a square first coding unit 1400. Referring to FIG. 14, the image decoding apparatus 100 may determine second coding units 1402a and 1402b, 1404a and 1404b, and 1406a, 1406b, 1406c, and 1406d by splitting the first coding unit 1400 in at least one of vertical and horizontal directions based on split shape mode information. That is, the image decoding apparatus 100 may determine the second coding units 1402a and 1402b, 1404a and 1404b, and 1406a, 1406b, 1406c, and 1406d, based on the split shape mode information of the first coding unit 1400.

According to an embodiment, depths of the second coding units 1402a and 1402b, 1404a and 1404b, and 1406a, 1406b, 1406c, and 1406d that are determined based on the split shape mode information of the square first coding unit 1400 may be determined based on the length of a long side thereof. For example, because the length of a side of the square first coding unit 1400 equals the length of a long side of the non-square second coding units 1402a and 1402b, and 1404a and 1404b, the first coding unit 1400 and the non-square second coding units 1402a and 1402b, and 1404a and 1404b may have the same depth, e.g., D.

However, when the image decoding apparatus 100 splits the first coding unit 1400 into the four square second coding units 1406a, 1406b, 1406c, and 1406d based on the split shape mode information, because the length of a side of the square second coding units 1406a, 1406b, 1406c, and 1406d is 1/2 times the length of a side of the first coding unit 1400, a depth of the second coding units 1406a, 1406b, 1406c, and 1406d may be D+1 which is deeper than the depth D of the first coding unit 1400 by 1. According to an embodiment, the image decoding apparatus 100 may determine a plurality of second coding units 1412a and 1412b, and 1414a, 1414b, and 1414c by splitting a first coding unit 1410, a height of which is longer than a width, in a horizontal direction based on the split shape mode information. According to an embodiment, the image decoding apparatus 100 may determine a plurality of second coding units 1422a and 1422b, and 1424a, 1424b, and 1424c by splitting a first coding unit 1420, a width of which is longer than a height, in a vertical direction based on the split shape mode information.

According to an embodiment, a depth of the second coding units 1412a and 1412b, and 1414a, 1414b, and 1414c, or 1422a and 1422b, and 1424a, 1424b, and 1424c, which are determined based on the split shape mode information of the non-square first coding unit 1410 or 1420, may be determined based on the length of a long side thereof. For example, because the length of a side of the square second coding units 1412a and 1412b is 1/2 times the length of a long side of the first coding unit 1410 having a non-square shape, a height of which is longer than a width, a depth of the square second coding units 1412a and 1412b is D+1 which is deeper than the depth D of the non-square first coding unit 1410 by 1. Furthermore, the image decoding apparatus 100 may split the non-square first coding unit 1410 into an odd number of second coding units 1414a, 1414b, and 1414c based on the split shape mode information. The odd number of second coding units 1414a, 1414b, and 1414c may include the non-square second coding units 1414a and 1414c and the square second coding unit 1414b.

In this case, because the length of a long side of the non-square second coding units 1414a and 1414c and the length of a side of the square second coding unit 1414b are 1/2 times the length of a long side of the first coding unit 1410, a depth of the second coding units 1414a, 1414b, and 1414c may be D+1 which is deeper than the depth D of the non-square first coding unit 1410 by 1. The image decoding apparatus 100 may determine depths of coding units split from the first coding unit 1420 having a non-square shape, a width of which is longer than a height, by using the above-described method of determining depths of coding units split from the first coding unit 1410. According to an embodiment, the image decoding apparatus 100 may determine PIDs for identifying split coding units, based on a size ratio between the coding units when an odd number of split coding units do not have the same size. Referring to FIG. 14, the coding unit 1414b of a center location among an odd number of split coding units 1414a, 1414b, and 1414c may have a width equal to that of the other coding units 1414a and 1414c and a height which is two times that of the other coding units 1414a and 1414c. That is, in this case, the coding unit 1414b at the center location may include two of the other coding unit 1414a or 1414c. Accordingly, when a PID of the coding unit 1414b at the center location is 1 based on a scan order, a PID of the coding unit 1414c located next to the coding unit 1414b may be increased by 2 and thus may be 3.

That is, discontinuity in PID values may be present. According to an embodiment, the image decoding apparatus 100 may determine whether an odd number of split coding units do not have the same size, based on whether discontinuity is present in PIDs for identifying the split coding units. According to an embodiment, the image decoding apparatus 100 may determine whether to use a specific splitting method, based on PID values for identifying a plurality of coding units determined by splitting a current coding unit. Referring to FIG. 14, the image decoding apparatus 100 may determine an even number of coding units 1412a and 1412b or an odd number of coding units 1414a, 1414b, and 1414c by splitting the first coding unit 1410 having a rectangular shape, a height of which is longer than a width.

The image decoding apparatus 100 may use PIDs indicating respective coding units so as to identify the respective coding units. According to an embodiment, the PID may be obtained from a sample at a certain location of each coding unit (e.g., an upper left sample). According to an embodiment, the image decoding apparatus 100 may determine a coding unit at a certain location from among the split coding units, by using the PIDs for distinguishing the coding units. According to an embodiment, when the split shape mode information of the first coding unit 1410 having a rectangular shape, a height of which is longer than a width, indicates to split a coding unit into three coding units, the image decoding apparatus 100 may split the first coding unit 1410 into three coding units 1414a, 1414b, and 1414c. The image decoding apparatus 100 may assign a PID to each of the three coding units 1414a, 1414b, and 1414c. The image decoding apparatus 100 may compare PIDs of an odd number of split coding units to determine a coding unit at a center location from among the coding units. The image decoding apparatus 100 may determine the coding unit 1414b having a PID corresponding to a middle value among the PIDs of the coding units, as the coding unit at the center location from among the coding units determined by splitting the first coding unit 1410. According to an embodiment, the image decoding apparatus 100 may determine PIDs for distinguishing split coding units, based on a size ratio between the coding units when the split coding units do not have the same size. Referring to FIG. 14, the coding unit 1414b generated by splitting the first coding unit 1410 may have a width equal to that of the other coding units 1414a and 1414c and a height which is two times that of the other coding units 1414a and 1414c. In this case, when the PID of the coding unit 1414b at the center location is 1, the PID of the coding unit 1414c located next to the coding unit 1414b may be increased by 2 and thus may be 3. When the PID is not uniformly increased as described above, the image decoding apparatus 100 may determine that a coding unit is split into a plurality of coding units including a coding unit having a size different from that of the other coding units.

According to an embodiment, when the split shape mode information indicates to split a coding unit into an odd number of coding units, the image decoding apparatus 100 may split a current coding unit in such a manner that a coding unit of a certain location among an odd number of coding units (e.g., a coding unit of a center location) has a size different from that of the other coding units.

In this case, the image decoding apparatus 100 may determine the coding unit of the center location, which has a different size, by using PIDs of the coding units.

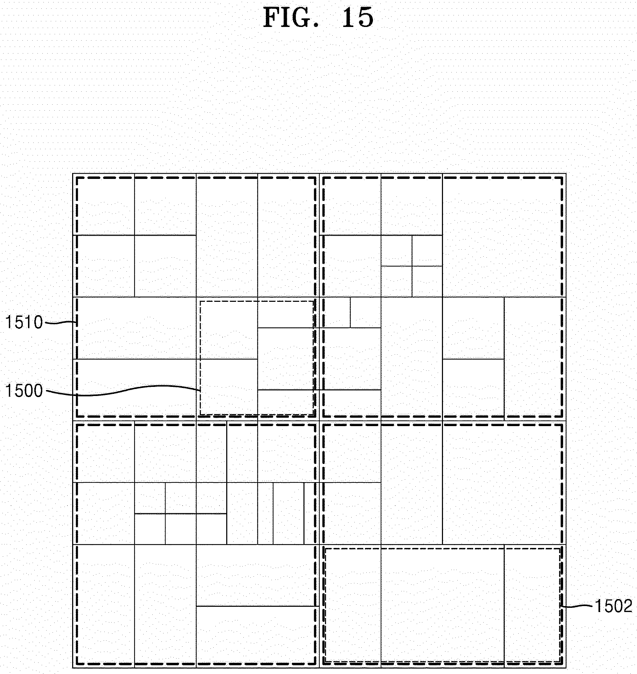

However, the PIDs and the size or location of the coding unit of the certain location to be determined are not limited to the above-described examples, and various PIDs and various locations and sizes of coding units may be used. According to an embodiment, the image decoding apparatus 100 may use a certain data unit where a coding unit starts to be recursively split. FIG. 15 illustrates that a plurality of coding units are determined based on a plurality of certain data units included in a picture, according to an embodiment.

According to an embodiment, a certain data unit may be defined as a data unit where a coding unit starts to be recursively split by using split shape mode information. That is, the certain data unit may correspond to a coding unit of an uppermost depth, which is used to determine a plurality of coding units split from a current picture. In the following descriptions, for convenience of explanation, the certain data unit is referred to as a reference data unit. According to an embodiment, the reference data unit may have a certain size and a certain shape.

According to an embodiment, a reference coding unit may include M×N samples. Herein, M and N may be equal to each other, and may be integers represented as powers of 2. That is, the reference data unit may have a square or non-square shape, and may be split into an integer number of coding units.

According to an embodiment, the image decoding apparatus 100 may split the current picture into a plurality of reference data units. According to an embodiment, the image decoding apparatus 100 may split the plurality of reference data units, which are split from the current picture, by using the split shape mode information of each reference data unit.

The process of splitting the reference data unit may correspond to a splitting process using a quadtree structure. According to an embodiment, the image decoding apparatus 100 may pre-determine a minimum size allowed for the reference data units included in the current picture.

Accordingly, the image decoding apparatus 100 may determine reference data units having various sizes equal to or greater than the minimum size, and may determine one or more coding units by using the split shape mode information with reference to the determined reference data unit. Referring to FIG. 15, the image decoding apparatus 100 may use a square reference coding unit 1500 or a non-square reference coding unit 1502.

According to an embodiment, the shape and size of reference coding units may be determined based on various data units capable of including one or more reference coding units (e.g., sequences, pictures, slices, slice segments, tiles, tile groups, largest coding units, or the like). According to an embodiment, the receiver 110 of the image decoding apparatus 100 may obtain, from a bitstream, at least one of reference coding unit shape information and reference coding unit size information for each of the various data units. A process of splitting the square reference coding unit 1500 into one or more coding units has been described above in relation to the process of splitting the current coding unit 300 of FIG. 3, and a process of splitting the non-square reference coding unit 1502 into one or more coding units has been described above in relation to the process of splitting the current coding unit 400 or 450 of FIG. 4, and thus detailed descriptions thereof will be omitted. According to an embodiment, the image decoding apparatus 100 may use a PID for identifying the size and shape of reference coding units, to determine the size and shape of reference coding units according to some data units pre-determined based on a certain condition. That is, the receiver 110 may obtain, from the bitstream, only the PID for identifying the size and shape of reference coding units with respect to each slice, slice segment, tile, tile group, or largest coding unit which is a data unit satisfying a certain condition (e.g., a data unit having a size equal to or smaller than a slice) among the various data units (e.g., sequences, pictures, slices, slice segments, tiles, tile groups, largest coding units, or the like). The image decoding apparatus 100 may determine the size and shape of reference data units for each data unit, which satisfies the certain condition, by using the PID.

When the reference coding unit shape information and the reference coding unit size information are obtained and used from the bitstream according to each data unit having a relatively small size, the efficiency of using the bitstream may not be high, and therefore, only the PID may be obtained and used instead of directly obtaining the reference coding unit shape information and the reference coding unit size information. In this case, at least one of the size and shape of reference coding units corresponding to the PID for identifying the size and shape of reference coding units may be pre-determined. That is, the image decoding apparatus 100 may determine at least one of the size and shape of reference coding units included in a data unit serving as a unit for obtaining the PID, by selecting the pre-determined at least one of the size and shape of reference coding units based on the PID. According to an embodiment, the image decoding apparatus 100 may use one or more reference coding units included in a largest coding unit. That is, a largest coding unit split from a picture may include one or more reference coding units, and coding units may be determined by recursively splitting each reference coding unit.

According to an embodiment, at least one of a width and height of the largest coding unit may be integer times at least one of the width and height of the reference coding units. According to an embodiment, the size of reference coding units may be obtained by splitting the largest coding unit n times based on a quadtree structure. That is, the image decoding apparatus 100 may determine the reference coding units by splitting the largest coding unit n times based on a quadtree structure, and may split the reference coding unit based on at least one of the block shape information and the split shape mode information according to various embodiments. According to an embodiment, the image decoding apparatus 100 may obtain block shape information indicating the shape of a current coding unit or split shape mode information indicating a splitting method of the current coding unit, from the bitstream, and may use the obtained information.

The split shape mode information may be included in the bitstream related to various data units.

For example, the image decoding apparatus 100 may use the split shape mode information included in a sequence parameter set, a picture parameter set, a video parameter set, a slice header, a slice segment header, a tile header, or a tile group header. Furthermore, the image decoding apparatus 100 may obtain, from the bitstream, a syntax information (e.g., syntax element) corresponding to the block shape information or the split shape mode information according to each largest coding unit or each reference coding unit or a processing block, and may use the obtained syntax element. Hereinafter, a method of determining a split rule according to an embodiment of the disclosure will be described in detail. The image decoding apparatus 100 may determine a split rule of an image. The split rule may be pre-determined between the image decoding apparatus 100 and the image encoding apparatus 200.

The image decoding apparatus 100 may determine the split rule of the image, based on information obtained from a bitstream. The image decoding apparatus 100 may determine the split rule based on the information obtained from at least one of a sequence parameter set, a picture parameter set, a video parameter set, a slice header, a slice segment header, a tile header, and a tile group header. The image decoding apparatus 100 may determine the split rule differently according to frames, slices, tiles, temporal layers, largest coding units, or coding units. The image decoding apparatus 100 may determine the split rule based on a block shape of a coding unit. The block shape may include a size, a shape, a ratio of width and height, and a direction of the coding unit.

The image decoding apparatus 100 may pre-determine to determine the split rule based on the block shape of the coding unit. However, an embodiment is not limited thereto. The image decoding apparatus 100 may determine the split rule based on the information obtained from the received bitstream. The shape of the coding unit may include a square and a non-square.

When the lengths of the width and height of the coding unit are the same, the image decoding apparatus 100 may determine the shape of the coding unit to be a square. Also, when the lengths of the width and height of the coding unit are not the same, the image decoding apparatus 100 may determine the shape of the coding unit to be a non-square. The size of the coding unit may include various sizes, such as 4x4, 8x4, 4x8, 8x8, 16x4, 16x8, ... and 256x256. The size of the coding unit may be classified based on the length of a long side of the coding unit, the length of a short side, or the area. The image decoding apparatus 100 may apply the same split rule to coding units classified as the same group. For example, the image decoding apparatus 100 may classify coding units having the same lengths of long sides as having the same size.

Also, the image decoding apparatus 100 may apply the same split rule to coding units having the same lengths of long sides. The ratio of the width and height of the coding unit may include 1:2, 2:1, 1:4, 4:1, 1:8, 8:1, 1:16, 16:1, 32:1, 1:32, or the like. Also, the direction of the coding unit may include a horizontal direction and a vertical direction. The horizontal direction may indicate a case in which the length of the width of the coding unit is longer than the length of the height thereof.

The vertical direction may indicate a case in which the length of the width of the coding unit is shorter than the length of the height thereof. The image decoding apparatus 100 may adaptively determine the split rule based on the size of the coding unit. The image decoding apparatus 100 may differently determine an allowable split shape mode based on the size of the coding unit. For example, the image decoding apparatus 100 may determine whether splitting is allowed based on the size of the coding unit. The image decoding apparatus 100 may determine a split direction according to the size of the coding unit.

The image decoding apparatus 100 may determine an allowable split type according to the size of the coding unit. The split rule determined based on the size of the coding unit may be a split rule pre-determined between the image encoding apparatus 200 and the image decoding apparatus 100.

Also, the image decoding apparatus 100 may determine the split rule based on the information obtained from the bitstream. The image decoding apparatus 100 may adaptively determine the split rule based on a location of the coding unit.

The image decoding apparatus 100 may adaptively determine the split rule based on the location of the coding unit in the image. Also, the image decoding apparatus 100 may determine the split rule so that coding units generated via different splitting paths do not have the same block shape. However, an embodiment is not limited thereto, and the coding units generated via different splitting paths have the same block shape. The coding units generated via the different splitting paths may have different decoding processing orders.

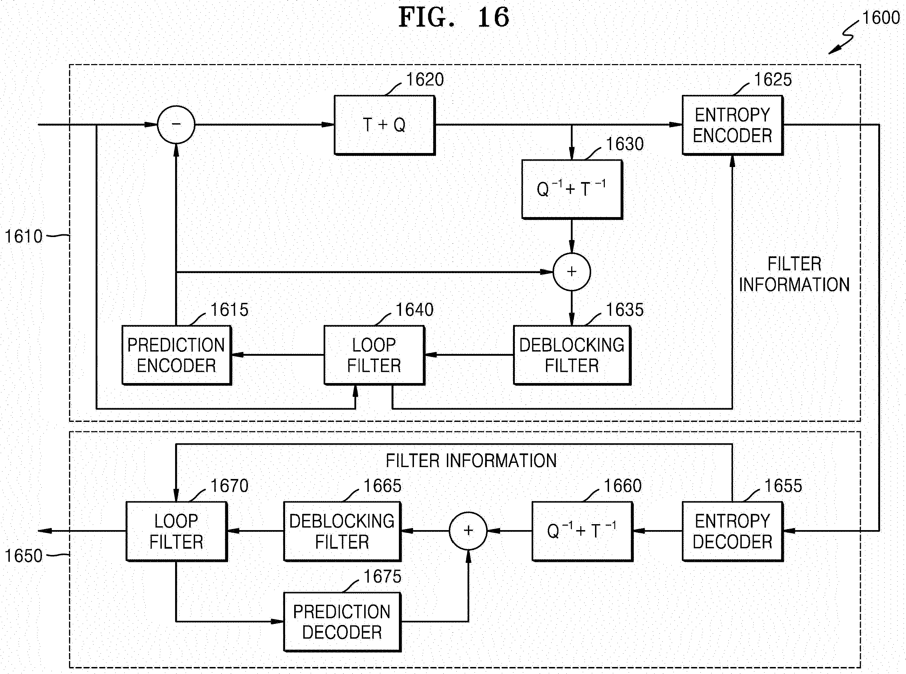

FIG. 16 is a block diagram of an image encoding and decoding system.

An encoding end 1610 of an image encoding and decoding system 1600 may transmit an encoded bitstream of an image, and a decoding end 1650 of the image encoding and decoding system 1600 may receive a bitstream and decode the bitstream to output a reconstructed image. Herein, the decoding end 1650 may be a configuration that is similar to the image decoding apparatus 100.

In the encoding end 1610, a prediction encoder 1615 outputs a reference image through inter-prediction and intra-prediction, and a transformer and quantizer 1616 quantizes residual data between the reference image and a current input image into a quantized transform coefficient and output the quantized transform coefficient. An entropy encoder 1625 encodes the quantized transform coefficient and outputs the encoded quantized transform coefficient as the bitstream. The quantized transform coefficient is reconstructed into data of a spatial domain via an inverse quantizer and inverse transformer 1630, and the reconstructed data of the spatial domain may be output as a reconstructed image via a deblocking filter 1635 and a loop filter 1640. The reconstructed image may be used as a reference image of a next input image in the prediction encoder 1615.

Encoded image data among the bitstream received by the decoding end 1650 is reconstructed as residual data of a spatial domain via an entropy decoder 1655 and an inverse quantizer and inverse transformer 1660. Image data of a spatial domain may be configured when a reference image output by a prediction decoder 1675 and the residual data are combined, and a deblocking filter 1665 and a loop filter 1670 may output a reconstructed image for a current original image by performing filtering on the image data of the spatial domain. The reconstructed image may be used as a reference image for a next original image by the prediction decoder 1675.

The loop filter 1640 of the encoding end 1610 performs loop filtering by using filter information input according to a user input or system settings. Filter information used by the loop filter 1640 is output to the entropy encoder 1610 and transmitted to the decoding end 1650 along with the encoded image data. The loop filter 1670 of the decoding end 1650 may perform loop filtering based on the filter information input from the decoding end 1650.

In the present disclosure, a 'tree structure' may refer to a hierarchical structure of one or more coding units formed according to whether a splitting mode of a coding unit is a quad split, a binary split, a ternary split, or a non-split. For example, the hierarchical structure of blocks generated from a current coding unit according to the splitting process of FIG. 5 is referred to as a tree structure.

In the present disclosure, 'availability of a block' refers to whether the block has already been encoded or decoded and thus information of the block may be obtained. In detail, in an encoding process, when a current block has already been encoded, a neighboring block may be encoded using encoding information of the current block, so the current block may be displayed as available. When the current block is not encoded, the current block may be displayed as unavailable. Likewise, in a decoding process, when a current block has already been decoded, a neighboring block may be decoded using encoding information of the current block, so the current block may be displayed as available. When the current block is not decoded, the current block may be displayed as unavailable.

In the present disclosure, 'availability of motion information of a block' refers to whether motion prediction for the block (prediction other than prediction according to an intra mode or intra block copy mode) may be performed and thus motion information (a motion vector, a prediction direction (L0-pred, L1-pred or Bi-pred), and a reference picture index) of the block may be obtained. In detail, in an encoding process, when motion prediction has already been performed on the current block and motion information of the current block exists, motion prediction of a neighboring block may be performed using the motion information of the current block, so the motion information of the current block may be displayed as available. In an encoding process, when motion prediction is not performed on the current block, the motion information of the current block may be displayed as unavailable. Likewise, in a decoding process, when motion prediction has already been performed on the current block and motion information of the current block exists, motion prediction of a neighboring block may be performed using the motion information of the current block, so the motion information of the current block may be displayed as available. In a decoding process, when motion prediction is not performed on the current block, the motion information of the current block may be displayed as unavailable.

In the present disclosure, a 'merge candidate' may correspond to a motion vector corresponding to a neighboring block of a current block. Because a prediction motion vector of the current block is determined from a motion vector of the neighboring block, each prediction motion vector may correspond to the neighboring block. Therefore, in the present disclosure, for convenience of explanation, a 'merge candidate' is described as corresponding to a motion vector of a neighboring block or corresponding to a neighboring block, and there is no difference in meaning between the two expressions.

In the present disclosure, an 'affine merge candidate' may correspond to control point vectors corresponding to a neighboring block or block group of a current block. Because control point vectors are determined from the motion vectors of the neighboring block or the control point vectors are determined based on motion vectors of neighboring blocks belonging to a block group, each of the control point vectors may correspond to a corresponding neighboring block or a corresponding block group. Therefore, in the present disclosure, for convenience of explanation, an 'affine merge candidate' is described as corresponding to control point vectors determined from a neighboring block or block group or corresponding to a neighboring block or a block group, and there is no difference in meaning between the two expressions.

In the present disclosure, a 'motion vector prediction (MVP) candidate' may correspond to motion vectors corresponding to a neighboring block of a current block. Because a prediction motion vector of the current block is determined from a motion vector of the neighboring block, each prediction motion vector may correspond to the neighboring block. Therefore, in the present disclosure, for convenience of explanation, a 'MVP candidate' is described as corresponding to a motion vector of a neighboring block or corresponding to a neighboring block, and there is no difference in meaning between the two expressions.

The 'merge candidate' is a neighboring block (or a motion vector of a neighboring block) used in a merge mode among inter prediction methods, whereas the 'MVP candidate' corresponds to a neighboring block (or a motion vector of a neighboring block) used in an AMVP mode among inter prediction methods. In the merge mode, the motion vector of the current block may be not only determined using a motion vector of the merge candidate, but also a prediction direction of and a reference picture index of the current block may be determined using a prediction direction (L0-pred, L1-pred, or bi-pred) of and a reference picture index of the merge candidate. On the other hand, in the AMVP mode, the motion vector of the current block may be determined using a motion vector of the MVP candidate, but a prediction direction of and a reference picture index of the current block may be determined separately from a prediction direction of and a reference picture index of the MVP candidate.

<u>TECHNICAL PROBLEM</u>

In the advanced motion vector prediction (AMVP) mode or merge mode, a motion vector of a block corresponding to a current block (or a co-located block or collocated block) in a reference picture (or a co-located reference picture) is used as a temporal motion vector predictor (temporal MVP) or a temporal motion vector candidate. When respective temporal locations (e.g., picture order count (POC) values) of a reference picture of a current block and a reference picture of a co-located block are different, a motion vector of the co-located block is used by being scaled (linearly) in accordance with the reference picture of the current block. However, when the co-located block is quantized to a high quantization parameter value and the co-located block is coded in a skip mode or in a merge mode, the accuracy of the motion vector of the co-located block may be reduced. In addition, when a block corresponding to a current block in a co-located reference picture (or a co-located block) is coded in an intra mode, the motion vector of the co-located block does not exist. As such, when the motion vector of the co-located block does not exist or has low accuracy and the motion vector of the co-located block is used as a temporal motion vector predictor or candidate of the current block, motion vector prediction performance of the current block may be deteriorated or the motion vector of the current block may be determined as an inaccurate value, resulting in overall deterioration of coding performance or efficiency.

Technology of increasing coding efficiency by generating a virtual reference picture corresponding to a current picture to be coded (e.g., decoded or encoded) via a frame rate up conversion (FRUC) technique and using the virtual reference picture as one reference picture during coding (e.g., decoding or encoding) of the current picture is being used. However, in this FRUC technique, a picture buffer of the same size as the current picture needs to be allocated to code the current picture, and additional complex processing in a pixel domain needs to be performed to generate a virtual reference picture. There are impractical issues in terms of complexity, such as external memory bandwidth requirements or processing power, when processing images of a high resolution, such as 4K/8K.

PROPOSED METHOD AND DEVICE ACCORDING TO PRESENT DISCLOSURE

The present disclosure proposes a method of and a device for generating motion information corresponding to a current picture by using information (e.g., a reconstructed sample, motion information, etc.) of coding (e.g., decoding or encoding)-completed pictures before the current picture, and using the motion information during coding (e.g., decoding or encoding) of the current picture, thereby increasing coding efficiency.

When the method according to the present disclosure is applied, the motion information corresponding to the current picture may be generated before the current picture is coded (e.g., decoded or encoded), and the generated motion information may be used as a more accurate motion vector predictor or candidate in an existing AMVP mode or merge mode or may be used in a new motion vector coding mode, thereby improving coding efficiency. In addition, when the method according to the present disclosure is applied, because motion information is generated in units of specific size blocks (e.g., 4x4, 8x8, 16x16, etc.) rather than in units of actual pixels, the same effect as FRUC may be obtained, and also it may be considered more efficient in terms of buffer efficiency and computational complexity.

In the present disclosure, a picture for which coding has been completed before the current picture is coded (e.g., decoded or encoded) is referred to as a "reconstruction picture" or a "reconstructed picture". For example, the reconstructed picture may include a picture included in a decoded picture buffer (DPB), or may include a reference picture included in a reference list (or a reference picture list) (e.g., reference list 0 or reference list 1). Therefore, in the present disclosure, the reconstructed picture may be replaced with a reference picture. In the present disclosure, the number of reconstructed pictures used to generate motion information of the current picture may be one or more. That is, the number of reconstructed pictures used to generate motion information according to the present disclosure may be one or may be plural.

In the present disclosure, "motion information" may include at least one of motion vector information, prediction list utilization information, and prediction mode information. For example, the motion vector information may include at least one of an L0 motion vector (or an x component and/or a y component of the L0 motion vector) or an L1 motion vector (or an x component and/or a y component of the L1 motion vector). In the present disclosure, the L0 motion vector may be referred to as first motion vector information or mvL0, and the L1 motion vector may be referred to as second motion vector information or mvL1.

For example, the prediction list utilization information may include at least one of list 0 utilization information (e.g., predFlagL0) or list 1 utilization information (e.g., predFlagL1), and may be referred to as reference list utilization information. In the present disclosure, the list 0 utilization information may be referred to as first prediction list utilization information (or first reference list utilization information or first prediction list utilization flag information), and the list 1 utilization information may be referred to as second prediction list utilization information (or second reference list utilization information or second prediction list utilization flag information). In the present disclosure, when both list 0 and list 1 are used, this may be referred to as bi-directional prediction, and, when only one of list 0 or list 1 is used, this may be referred to as uni-directional prediction.

For example, the prediction mode information may include at least one of information indicating whether a corresponding block is coded in an intra mode or coded in an inter mode (e.g., pred_mode_flag or CuPredMode) or information indicating whether the corresponding block is coded in a skip mode (e.g., cu_skip_flag or CuSkipFlag).

Motion information generated according to the proposed method of the present disclosure may be referred to as "generated motion information". In the present disclosure, the generated motion information may also be referred to as reference motion information, generated reference motion information, etc. Moreover, in the present disclosure, the generated motion information may be briefly referred to as generated information or generated data.

The motion information may be generated or stored in the form of a one-dimensional arrangement or two-dimensional arrangement in units of blocks of a specific size or in units of MxN pixels (e.g., 4x4, 8x8, or 16x16), and the motion information generated or stored in this form may be referred to as a motion information map. Generated motion information for (or of) a current picture may refer to motion information generated to correspond to blocks included in the current picture in units of blocks of a specific size (e.g., 4x4, 8x8, or 16x16), and may be referred to as a motion information map for (or of) the current picture. In the present disclosure, the generated motion information may be interchangeably used with a generated motion information map. For example, the generated motion information map may also be referred to as a generated reference motion map.

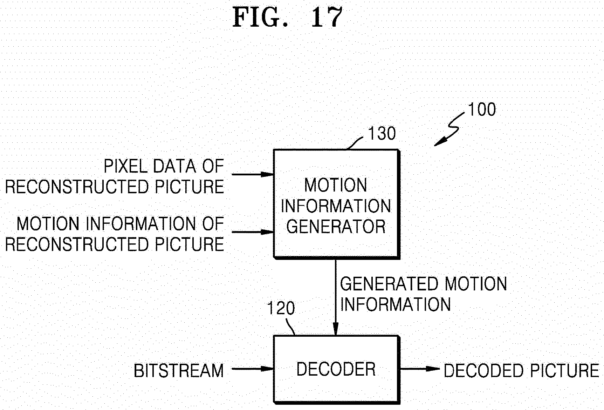

FIG. 17 is a block diagram of an image decoding apparatus 100 according to the present disclosure.

The apparatus 100 illustrated in FIG. 17 may be included in the image decoding apparatus 100 described above with reference to FIG. 1, and may include a motion information generator 130 and a decoder 120. The motion information generator 130 and the decoder 120 of the apparatus 100 may be implemented by at least one processor included in the apparatus 100.

The motion information generator 130 may generate (reference) motion information for blocks included in a current picture, based on at least one of pixel data and/or motion information of at least one reconstructed picture according to the present disclosure. For example, the motion information generator 130 may generate motion information corresponding to the current picture before coding (e.g., decoding or encoding) the current picture. As a more specific example, the motion information generator 130 may generate motion information that is to be used to code the current picture before coding (e.g., decoding or encoding) an initial slice of the current picture. For example, the motion information generator 130 may generate motion information corresponding to the current picture, by using (or using as an input) motion information stored in at least one reconstructed picture (e.g., a reference picture). For example, the motion information generator 130 may generate the motion information corresponding to the current picture, by using (or using as an input) pixel data of the at least one reconstructed picture (e.g., a reference picture). For example, the motion information generator 130 may generate motion information corresponding to the current picture, by using (or using as an input) both the motion information and the pixel data stored in at least one reconstructed picture (e.g., a reference picture).

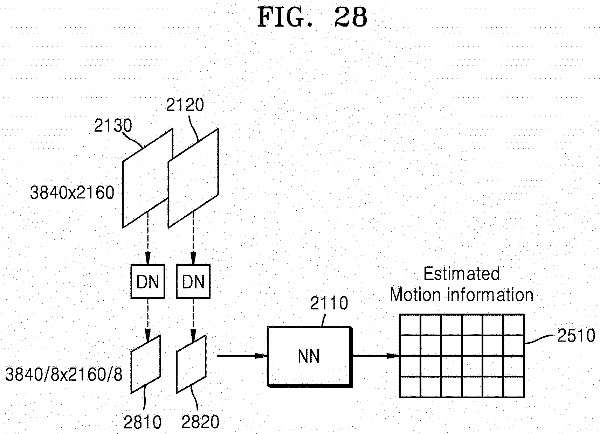

For example, the pixel data of the reconstructed picture may be used as an input of the motion information generator 130 without separate processing, or downsampled pixel data obtained by downsampling the pixel data of the reconstructed picture may be used as an input of the motion information generator 130 (e.g., see FIG. 28 and a related description thereof).

The input of the motion information generator 130 according to the present disclosure is not limited to only the pixel data and the motion information of the reconstructed picture, and other pieces of information of the reconstructed picture may also be used as an input of the motion information generator 130.

For example, the input of the motion information generator 130 may include at least one of quantization information, a predicted sample, and a residual sample of at least one reconstructed picture, and distance information from the current picture. For example, the quantization information may include quantization parameter information. For example, the predicted sample may include a sample predicted by intra prediction or inter prediction. For example, the residual sample may include a sample obtained by inverse transforming and inverse quantizing transform coefficient information signaled through a bitstream, or a difference value between a reference sample and a sample of a current block. For example, distance information from the current picture may include POC information of the reconstructed picture or information indicating a POC distance (or difference) between the reconstructed picture and the current picture.

The motion information generator 130 may generate motion information (or a motion information map) in units of blocks of a specific size (e.g., 4x4, 8x8, or 16x16). The generated motion information output by the motion information generator 130 may include at least one of motion information, intra-coding related information, residual coding related information, illumination change information, and statistical information in units of blocks of a specific size (e.g., 4x4, 8x8, or 16x16).

For example, as described above, the motion information may include at least one of motion vector information, prediction list utilization information, and prediction mode information for a block of a specific size (e.g., see a description of "motion information" of a "method and apparatus according to the present disclosure").

For example, the intra coding related information may include at least one of direct current (DC) transform coefficient information and intra prediction mode information (e.g., an intra DC mode, an intra planar mode, or intra angular mode) for a block of a specific size. For example, the residual coding related information may include information indicating whether residual coding (e.g., inverse transformation and/or inverse quantization) is performed on a block of a specific size. Alternatively, the residual coding related information may include information indicating whether non-zero transform coefficient information exists for a corresponding block. For example, the illumination change information may include information about the amount of change in illumination for illumination compensation with respect to a block of a specific size. For example, the statistical information may include probability information for entropy coding with respect to a block of a specific size, as information that is available in coding (e.g., encoding and/or decoding procedures).

The motion information generator 130 may process an input and generate an output, through various methods. For example, the motion information generator 130 may generate generated information or data, based on at least one of pixel data or motion information (and/or quantization information, a prediction sample, a residual sample, and distance information from the current picture) of at least one reconstructed picture by using an arithmetic operation (e.g., an average, a median, an interpolation, or filtering).

Alternatively, for example, the motion information generator 130 may generate the generated information or data, based on at least one of pixel data or motion information (and/or quantization information, a prediction sample, a residual sample, and distance information from the current picture) of at least one reconstructed picture by using an artificial neural network. For example, the artificial neural network usable in the motion information generator 130 according to the present disclosure may include a convolutional neural network (CNN), a fully connected neural network (FCNN), or a combination thereof. Respective structures of the convolutional neural network and the fully connected neural network are widely known, so detailed descriptions thereof will be omitted in this specification. Processing of the motion information generator 130 is not limited to the processing using the arithmetic operation and the processing using the artificial neural network, and various methods may be applied.

The decoder 120 of the apparatus 100 may decode the current picture, based on motion information generated by the motion information generator 130 and at least one piece of syntax information obtained from a bitstream (e.g., the bitstream obtained by the receiver 110). For example, the decoder 120 may be configured to obtain motion information for the current block based on the motion information generated by the motion information generator 130 and the at least one piece of syntax information obtained from the bitstream, and to reconstruct the current block based on the obtained motion information. Details of utilization of the generated information or data (or the motion information map) in decoding according to the present disclosure will now be described in detail.

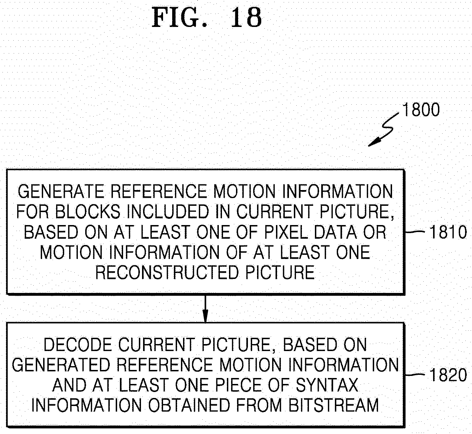

FIG. 18 is a flowchart of an image decoding method 1800 according to the present disclosure. The method 1800 illustrated in FIG. 18 may be performed by the apparatus 100.

Referring to FIG. 18, the apparatus 100 may generate (reference) motion information for blocks included in a current picture, based on at least one of pixel data or motion information of at least one reconstructed picture (operation 1810). For example, operation 1810 may be performed in the motion information generator 130 of the apparatus 100, and the description related to the motion information generator 130 given with reference to FIG. 17 is included herein as a reference.

The apparatus 100 may decode the current picture, based on the (reference) motion information generated in operation 1810 and at least one piece of syntax information obtained from a bitstream (operation 1820). In more detail, in operation 1820, the apparatus 100 may obtain motion information of for current block based on the motion information (or a motion information map) generated in operation 1810 and the at least one piece of syntax information obtained from the bitstream, and may reconstruct the current block based on the obtained motion information for the current block.

For example, reconstructing the current block by the apparatus 100 in operation 1820 may include determining whether the current block is coded in an inter mode or an intra mode, based on the motion information for the current block (e.g., prediction mode information (e.g., pred_mode_flag or CuPredMode)). For example, when the current block is coded in an inter mode, reconstructing the current block by the apparatus 100 in operation 1820 may include performing inter prediction on the current block based on the motion information (e.g., motion vector information and prediction list utilization information) for the current block to obtain a prediction sample (predicted block) for the current block. For example, when the current block is coded in an intra mode, reconstructing the current block by the apparatus 100 in operation 1820 may include performing intra prediction on the current block based on intra prediction mode information (e.g., an intra DC mode, an intra planar mode, and an intra angular mode) for the current block to obtain a prediction sample (or a predicted block) for the current block. For example, in operation 1820, reconstructing the current block by the apparatus 100 in operation 1820 may include reconstructing the current block based on an obtained prediction sample (or a prediction block).

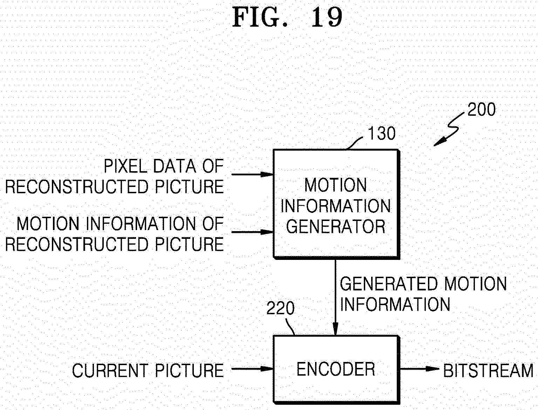

FIG. 19 illustrates an image encoding apparatus 200 according to the present disclosure. The image encoding apparatus 200 according to the present disclosure is not limited to the example of FIG. 19, and may include other components not shown in FIG. 19. For example, the image encoding apparatus 200 may include at least one processor, and a motion information generator 130 and an encoder 220 illustrated in FIG. 19 may be implemented by using at least one processor.

Referring to FIG. 19, the apparatus 200 may include the motion information generator 130 and the encoder 220. The motion information generator 130 may operate the same as the motion information generator 130 of FIG. 17. Therefore, a detailed description of the motion information generator 130 includes, as a reference, FIG. 17 and a related description thereof.

The encoder 220 may determine motion information for a current block in a current picture corresponding to an original image, based on rate-distortion (RD) optimization, and may encode the determined motion information for the current block into a bitstream, based on the motion information (or a motion information map) generated by the motion information generator 130.

For example, the encoder 220 may determine prediction mode information (e.g., pred_mode_flag or CuPredMode) indicating whether the current block is coded in an intra mode or in an inter mode by using pixel data of the current block and a reconstructed neighboring block of a reference picture and/or the current picture, based on RD optimization. For example, when the current block is coded in an intra mode, the encoder 220 may identify motion vector information (e.g., a first motion vector and/or a second motion vector) and prediction list utilization information (e.g., list 0 utilization information and/or list 1 utilization information) obtained through motion estimation (ME) using the pixel data of the current block and the reference picture. For example, based on the motion information (or the motion information map) generated by the motion information generator 130, the encoder 220 may determine whether to encode the motion information for the current block determined based on RD optimization in an AMVP mode, in a merge mode, or in a skip mode, and may encode the motion information for the current block into a bitstream based on the determined mode.

The bitstream generated by the apparatus 200 may be stored in a storage medium or a recording medium, or transmitted through a wired or wireless network in units of network adaptation layer (NAL) units.

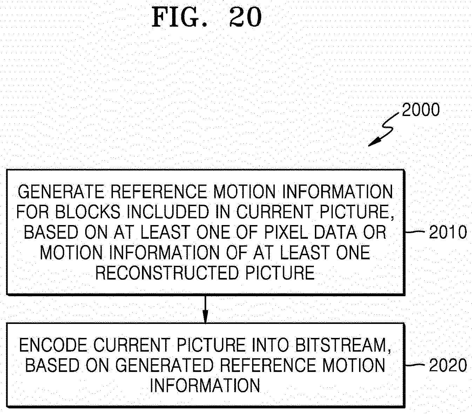

FIG. 20 is a flowchart of an image encoding method 2000 according to the present disclosure. The method 2000 illustrated in FIG. 20 may be performed by the apparatus 200. Likewise, a bitstream generated by the method 2000 may be stored in a storage medium or a recording medium, or transmitted through a wired or wireless network in units of NAL units.

Referring to FIG. 20, the apparatus 200 may generate (reference) motion information for blocks included in a current picture, based on at least one of pixel data or motion information of at least one reconstructed picture (operation 2010). For example, operation 2010 may be performed in the motion information generator 130 of the apparatus 200, and FIG. 19 and a related description thereof (i.e., FIG. 17 and a related description thereof) is included herein as a reference.

The apparatus 200 may encode the current picture into a bitstream, based on the motion information generated in operation 2010 (operation 2020). For example, the apparatus 200 may determine motion information for a current block included in the current picture, by using pixel data of the original image (i.e., the current picture), based on RD optimization. As described above with reference to FIG. 19, the motion information for the current block may include prediction mode information (e.g., pred_mode_flag or CuPredMode), motion vector information (e.g., a first motion vector and/or a second motion vector) and prediction list utilization information (e.g., list 0 utilization information and/or list 1 utilization information). The apparatus 200 may encode the determined motion information for the current block into a bitstream, based on the motion information generated in operation 2010 (operation 2020). In operation 2020, the apparatus 200 may determine the motion information for the current block by performing an operation of the encoder 220 of FIG. 19, and may encode the motion information for the current block into the bitstream.

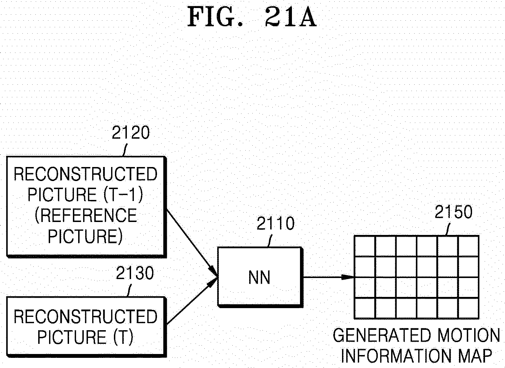

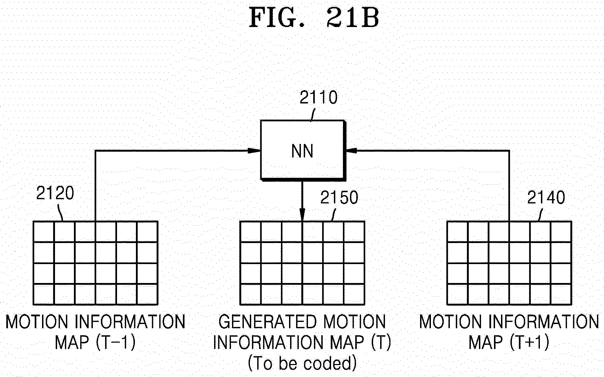

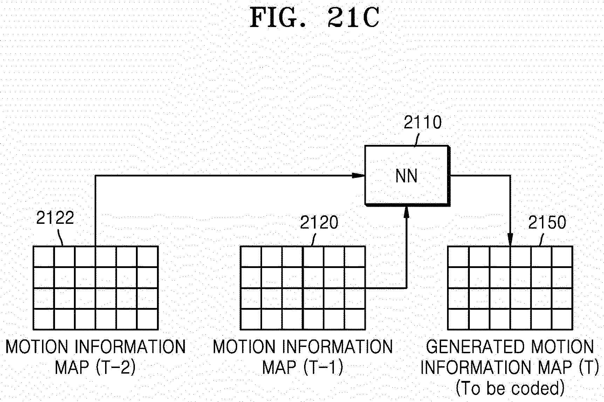

FIG. 21 illustrates a method of generating motion information according to the present disclosure.

In the example of FIG. 21, a method of generating motion information (or a motion information map) 2140 corresponding to a current picture by using an artificial neural network 2110 is illustrated, but, in the method according to the present disclosure, motion information may be generated using another method (e.g., an arithmetic operation) rather than the artificial neural network. In addition, for convenience of explanation, the example of FIG. 21 illustrates pixel data and/or a motion information map of two reconstructed pictures (e.g., a current reconstructed picture and/or at least one reconstructed picture) are illustrated as being input to the artificial neural network (ANN) (briefly, referred to as a neural network (NN)) 2110. However, the number of reconstructed pictures input to the NN 2110 is not limited to two, and various numbers of reconstructed pictures and combinations thereof may be used as an input of the NN 2110.

The example of FIG. 21 may be performed by the image decoding apparatus 100 and the image encoding apparatus 200, and, as a more specific example, may be performed by the motion information generator 130. Moreover, the example of FIG. 21 may be performed in operation 1810 of the image decoding method 1800 and operation 2010 of the image encoding method 2000.

Referring to FIG. 21(a), the input of the NN 2110 may include pixel data of a reconstructed picture (e.g., POC=T-1 or a reference picture) and pixel data of a current reconstructed picture (e.g., POC=T) 2130. The NN 2110 may be configured to generate a generated motion information map 2150 by using the pixel data of the reconstructed picture 2120 and the current reconstructed picture 2130 as the input. In the example of FIG. 21(a), the generated motion information map 2150 may be used as a motion information map for a next picture to be coded or may be used to refine a motion information map of a current picture.

Referring to FIG. 21(b), when the current picture (e.g., POC=T) is a bi-directional predicted image, the input of the NN 2110 may include a motion information map 2120 stored in an adjacent forward reference picture (e.g., POC=T-1) and the motion information map 2140 stored in a backward reference picture (e.g., POC=T+1). Alternatively, when the current picture (e.g., POC=T) is a bi-directional predicted picture, the input of the NN 2110 may include motion information (or a motion information map) stored in each reference picture by using, as the forward reference picture and the backward reference pictures, a reference picture in a specific order (e.g., a first reference picture in each reference list or a reference picture with a reference index of 0 in each reference list) in each of reference list 0 (or reference picture list 0) and reference list 1 (or reference picture list 1).

Alternatively, in the example of FIG. 21(b), the backward reference picture may be replaced with a reference picture of reference list 0, and the forward reference picture may be replaced with a reference picture of reference list 1. In other words, when the current picture (e.g., POC=T) is a bi-directional predicted picture, the input of the NN 2110 may include motion information (or a motion information map) stored in each reference picture by using, as the forward reference picture and the backward reference pictures, a reference picture in a specific order (e.g., a first reference picture in each reference list or a reference picture with a reference index of 0 in each reference list) in each of reference list 1 (or reference picture list 1) and reference list 0 (or reference picture list 0).

Referring to FIG. 21(c), when the current picture is a uni-directional predicted image, the input of the NN 2110 may include motion information (or A motion information map) of two reconstructed pictures that are close to the current picture in terms of a POC distance among reconstructed pictures (e.g., reference pictures) available in the current picture. In the example of FIG. 21(c), the backward reference picture may be replaced with a reconstructed picture (e.g., a reference picture) closest to the current picture, and the forward reference picture may be replaced with a reconstructed picture (e.g., a reference picture) second closest to the current picture.

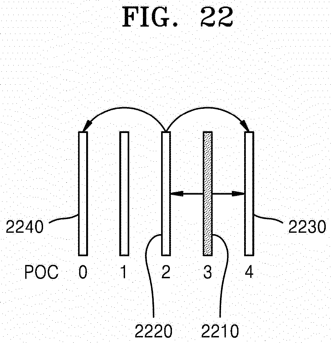

FIG. 22 illustrates a method of normalizing the input of the motion information generator 130 (e.g., the NN 2110) according to the present disclosure. The example of FIG. 22 is only an example, and the proposed method of the present disclosure is not limited to the example of FIG. 22.

In the present disclosure, when motion information (or a motion information map) is input to the motion information generator 130 (e.g., the NN 2110), the motion information may be used by being normalized to a distance of K in units of POCs. For example, K may be set to be a POC distance (or a difference with a nearest reconstructed picture

26

(e.g., a reference picture) of the current picture.

In more detail, the proposed method of the present disclosure may include scaling motion information (or a motion information map) of an input reconstructed picture, based on a POC distance (or difference) between the current picture and a reconstructed picture (e.g., a reference picture) nearest to the current picture and a POC distance (or a difference) between an input reconstructed picture and a reference picture of the input reconstructed picture.

Normalization of the motion information (or the motion information map) may be performed by the apparatuses 100 and 200, and, in more detail, may be performed by the motion information generators 130 of the apparatuses 100 and 200. Moreover, the normalization of the motion information (or the motion information map) may be performed in operation 1810 of the image decoding method 1800 and operation 2010 of the image encoding method 2000.

For example, referring to FIG. 22, when a POC of a current picture 2210 is 3, a POC of a nearest forward reference picture 2220 is 2, and a POC of a nearest backward reference picture 2230 is 4, a distance between the current picture and the nearest reconstructed picture is 1, and therefore K may be 1. When bi-directional prediction is performed for the forward reference picture 2220 (e.g., POC=2) and, as an example of the value of the motion information of a specific location of the reference picture 2220, a forward MV indicates the reference picture 2240 with a POC of 0 and an MV value is (4, 8), and a backward MV indicates the reference picture 2230 with a POC of 4 and an MV value is (-10, - 4), the motion information at the specific location has an MV of the POC distance of 2, and thus may be scaled (e.g., 1/2) to the POC distance of 1 so that the forward MV may be normalized to (2, 4) and the backward MV may be normalized to (-5, -2). Then, normalized motion information may be used as the input of the motion information generator 130 (e.g., the NN 2110).

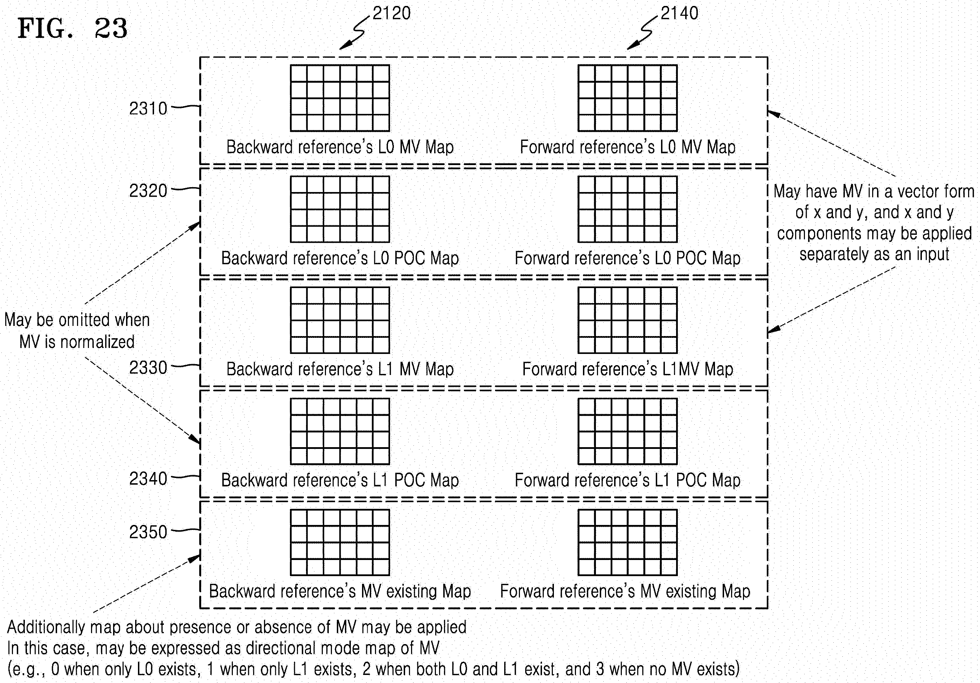

As another example, when motion information is input to the motion information generator 130, POC information (or a POC map) of each motion information of a reconstructed picture (e.g., a reference picture) may also be input (e.g., see FIG. 23 and a related description thereof). A unit in which the input motion information exists may be a block of a specific size or may be MxN pixels. In detail, motion information may be stored in the reconstructed picture in units of 16x16, in units of 8x8, or in units of 4x4. For example, when motion information is stored in units of 8x8 and a 1920x1080 image is coded, motion information with a resolution of 240x135 only needs to be processed. For example, when motion information is stored in units of 16x16, only motion information with a resolution of 120x68 needs to be processed.

In addition, when motion information does not exist in a specific unit (e.g., when the corresponding location is coded in an intra mode), the motion information may be filled with a specific value, and, in detail, a unit in which motion information does not exist may be filled with a zero vector (e.g., see FIG. 23 and a related description thereof). Moreover, a map about whether motion information exists may be created and used as the input of the motion information generator 130 (e.g., the NN 2110) (e.g., see FIG. 23 and a related description thereof).

FIG. 23 illustrates an input motion information map according to the present disclosure.

In the example of FIG. 23, in order to clarify the explanation of the present disclosure, an explanation focuses on motion vector information included in motion information. However, a motion information map according to the present disclosure may include other information in addition to the motion vector information. As described above with reference to the 'proposed method and device of the present disclosure" and FIG. 17, the input of the motion information generator 130 may include motion information including at least one of motion vector information, prediction list utilization information, and prediction mode information of a reconstructed picture, and at least one of quantization information, a prediction sample, a residual sample of the reconstructed picture, and distance information from the current picture.

In addition, as described above, the motion information map of the reconstructed picture may include motion information in the form of a one-dimensional arrangement or a two-dimensional arrangement in units of specific-sized blocks or in units of MxN pixels (e.g., 4x4, 8x8, or 16x16).

In the example of FIG. 23, motion information maps of the reconstructed pictures 2120 and 2140 of FIG. 21 are assumed and described. However, the present disclosure may be applied identically/similarly even when other reconstructed pictures are used. The motion information map illustrated in FIG. 23 may be a motion information map used as the input of the motion information generator 130 (e.g., the NN 2110).

Referring to FIG. 23, each of the motion information maps of the reconstructed pictures 2120 and 2140 of FIG. 21 may include motion vector maps 2310 and 2330, POC maps 2320 and 2340, and a map 2350 about presence or absence of a motion vector. For example, the reconstructed picture 2120 may be a forward reference picture, and the reconstructed picture 2140 may be a backward reference picture.

In the example of FIG. 23, the motion vector maps 2310 and 2330 may separately include a map 2310 for an L0 motion vector (or a first motion vector) and a map 2330 for an L1 motion vector (or a second motion vector). Alternatively, the motion vector maps 2310 and 2330 may include the L0 motion vector (or the first motion vector) and the L1 motion vector (or the second motion vector) as a single map. The motion vector maps 2310 and 2330 may include separate maps for an x component and a y component of a motion vector, or may include one map in the form of a vector of (x, y).

In the example of FIG. 23, the POC maps 2320 and 2340 may include POC values of reference pictures indicated by the motion vectors of the motion vector maps 2310 and 2330 (or reference pictures referenced by a motion vector of a specific location of the reconstructed picture). When the motion information is not normalized (or scaled) based on a POC distance (or a difference) between a current picture and a nearest reconstructed picture as described above with reference to FIG. 22, the motion information map may include the POC maps 2320 and 2340. When the motion information is normalized (or scaled) based on the POC distance (or the difference) between the current picture and the nearest reconstructed picture, the motion information map may not include the POC maps 2320 and 2340 (or the POC maps 2320 and 2340 may be omitted from the motion information map).

In the example of FIG. 23, when there is no motion vector at specific locations of the motion vector maps 2310 and 2330 of the reconstructed pictures 2120 and 2140 (e.g., when the location is coded in an intra mode), a motion vector at the location may be filled with a specific value (e.g., a zero vector) as described above. To this end, the motion information maps of the reconstructed pictures 2120 and 2140 may include the map 2350 about presence or absence of a motion vector. For example, the map 2350 may include a value indicating, in a directional mode, presence or absence of a motion vector. As a non-limiting example, the map 2350 may include a first value (e.g., 0) when only the L0 motion vector (or the first motion vector) exists, the map 2350 may include a second value (e.g., 1) when only the L1 motion vector (or the second motion vector) exists, the map 2350 may include a third value (e.g., 2) when both the L0 motion vector and the L1 motion vector exist, and the map 2350 may include a fourth value (e.g., 3) when no motion vectors exist. Alternatively, as another example, a map about presence or absence of a motion vector may be included separately with respect to each of the motion vector maps 2310 and 2330. In this case, the map may include flag information having a value (e.g., 0 or 1) indicating whether a corresponding motion vector (L0 motion vector or L1 motion vector) exists.

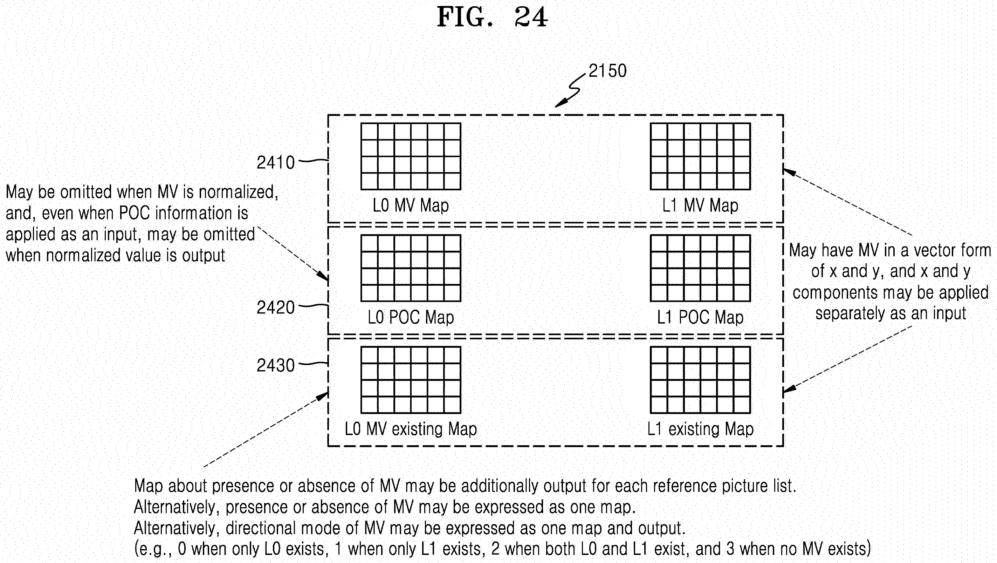

FIG. 24 illustrates a generated motion information map according to the present disclosure.

In the example of FIG. 24, in order to clarify the explanation of the present disclosure, an explanation focuses on motion vector information included in generated motion information. However, the motion information map according to the present disclosure may include other information in addition to the motion vector information. As described above with reference to the 'proposed method and device of the present disclosure" and FIG. 17, generated information or data according to the present disclosure may include motion information including at least one of motion vector information, prediction list utilization information, and prediction mode information, and at least one of intra coding related information, residual coding related information, illumination change information, and statistical information.

In addition, as described above, the generated motion information map according to the present disclosure may include motion information in the form of a one-dimensional arrangement or a two-dimensional arrangement in units of specific-sized blocks or in units of MxN pixels (e.g., 4x4, 8x8, or 16x16).

In the example of FIG. 24, a generated motion information map 2150 of FIG. 21 is assumed and described. However, the present disclosure may be applied identically/similarly even when other motion information maps are generated. The motion information map illustrated in FIG. 24 may be a motion information map generated as an input of the motion information generator 130 (e.g., the NN 2110).

Referring to FIG. 24, the generated motion information map 2150 may include a motion vector map 2410, a POC map 2420, and a map 2430 about presence or absence of a motion vector. In the example of FIG. 24, it is illustrated that the motion vector map 2410, the POC map 2420, and the map 2430 about presence or absence of a motion vector are included separately for the L0 motion vector and the L1 motion vector. However, one motion vector map 2410, one POC map 2420, and one map 2430 about presence or absence of a motion vector are included for the L0 motion vector and the L1 motion vector.

In the example of FIG. 24, the motion vector ma 2410 may include separate maps for an x component and a y component of a motion vector, or may include one map in the form of a vector of (x, y).

In the example of FIG. 24, the POC map 2420 may include a reference picture's POC value indicated by the motion vector of the corresponding motion vector map 2410. When input motion information is normalized (or scaled) based on a POC distance (or a difference) between a current picture and a nearest reconstructed picture as described above with reference to FIG. 22, the POC map 2420 may be omitted from the generated motion information map. Alternatively, when the motion information generator 130 (e.g., the NN 2110) is configured to output a normalized motion vector value, the POC map 2420 may be omitted from the generated motion information map.

In the example of FIG. 24, the map 2430 about presence or absence of a motion vector may be output for each reference list (or each reference picture list), or presence or absence of a motion vector may be output as one map for reference lists L0 and L1, or a directional mode of the motion vector may be expressed as one map and output. For example, the map 2430 may include a first value (e.g., 0) when only the L0 motion vector (or the first motion vector) exists, the map 2430 may include a second value (e.g., 1) when only the L1 motion vector (or the second motion vector) exists, the map 2430 may include a third value (e.g., 2) when both the L0 motion vector and the L1 motion vector exist, and the map 2430 may include a fourth value (e.g., 3) when no motion vectors exist. Alternatively, as another example, a map about presence or absence of a motion vector may be included separately with respect to each of the L0 motion vector and the L1 motion vector. In this case, the map may include flag information having a value (e.g., 0 or 1) indicating whether a corresponding motion vector (L0 motion vector or L1 motion vector) exists.

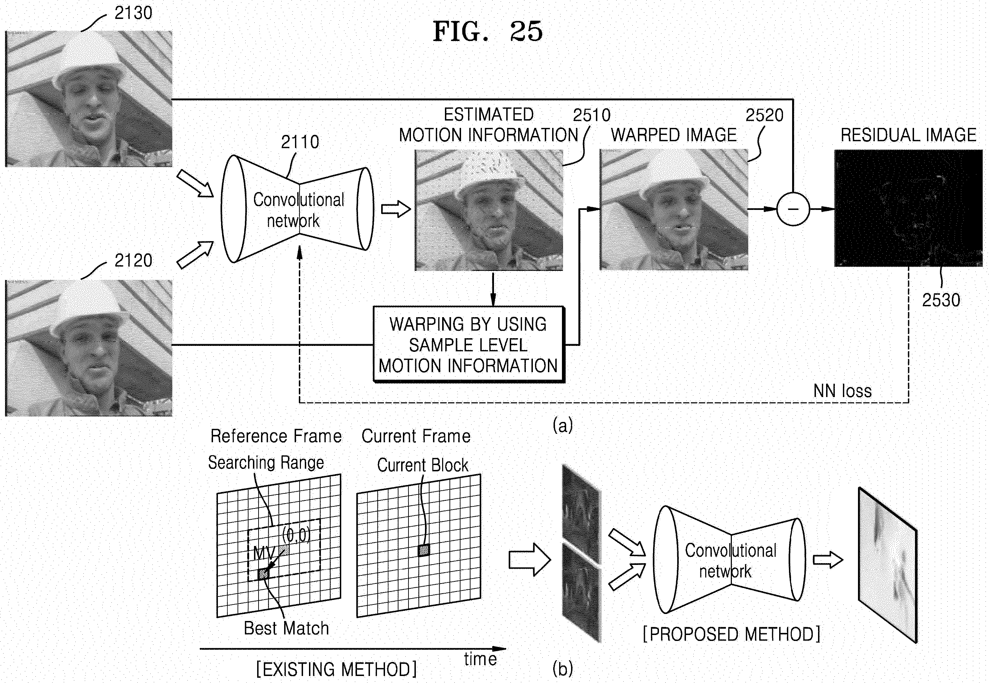

FIG. 25 illustrates a motion information generating model and a learning method according to the present disclosure.

In the present disclosure, the artificial neural network 2110 configured to output generated motion information may be referred to as a motion information generation model. The motion information generation model 2110 may include a convolutional neural network (CNN), a fully connected neural network (FCNN), or a combination of the CNN and the FCNN. In the example of FIG. 25, the motion information generation model 2110 is illustrated as a CNN. However, the present disclosure is applicable identically/similarly even when other types of neural networks are used.

The motion information generating model and the learning method described above with reference to FIG. 25 may be performed by the apparatuses 100 and 200, and, in more detail, may be performed by the motion information generators 130 of the apparatuses 100 and 200. Moreover, the motion information generating model and the learning method described above with reference to FIG. 25 may be performed in operation 1810 of the image decoding method 1800 and operation 2010 of the image encoding method 2000.

Also, in the example of FIG. 25, the reconstructed picture (e.g., POC=T-1 or a reference picture) 2120 and the current reconstructed picture (e.g., POC=T) 2130 are used as input reconstructed pictures as in FIG. 21. However, the present disclosure is applicable identically/similarly even when other reconstructed pictures are used as inputs.

Referring to FIG. 25(a), the motion information generation model 2110 according to the present disclosure may be trained using an objective function based on residual signal minimization, similar to motion vector map (or MV Map) calculation of an existing video codec (e.g., motion estimation to minimize a residual image in a searching range).

However, an existing neural network (NN) is trained using a dataset (e.g., a synthetic video) having a label (or a ground truth label), whereas the motion information generation model 2110 according to the present disclosure is trained in a direction for minimizing a residual signal 2530 between a warped image 2520 obtained by warping the reconstructed picture 2120 by using obtained (sample level) motion information 2510 and an existing image (e.g., the reconstructed picture 2130). Therefore, the motion information generation model 2110 according to the present disclosure is able to be trained using a real video, because the motion information generation model 2110 does not need a label (or a ground truth label). In addition, the motion information generation model 2110 according to the present disclosure has an advantage because it is also possible to implement a model trained based on supervised learning, such as an existing neural network (NN), in the form of fine-tuning.

For example, the objective function for training the motion information generation model 2110 may use a mean square error between the reconstructed picture 2130 and the warped image 2520, or a sum or average of the squares of the samples of the residual image 2530. In the present disclosure, motion information of a sample unit or sample level may be referred to as an optical flow or a flow, and a motion information map of a sample unit or sample level may be referred to as a motion field or an (optical) flow field.

In addition, the motion information generation model 2110 according to the present disclosure may also estimate an occlusion mask through warping using motion information generated in sample units or sample levels. A portion where the occlusion mask is activated may mean a portion where it is difficult to accurately determine presence or absence of motion information. Therefore, when the motion information generation model 2110 according to the present disclosure is used, a block where occlusion masks overlap each other may contribute to performance improvement by setting a mode in which motion information (or a motion information map or MV map) is not used. For example, a block determined as an occlusion area (or the block where occlusion masks overlap each other) may be determined as a block coded in an intra mode.

Referring to FIG. 25(b), in an existing method, a searching range is set, and a block with a smallest error from a current block is found in the searching range, and thus a motion vector is calculated. Because a process of obtaining a block of the same size as the current block through interpolation or the like performed in a unit (e.g., in units of 1 pixels, in units of 1/2 pixels, or in units of 1/4 pixels) of a motion vector in the searching range and calculating an error with the current block needs to be repeated, the complexity is high and the amount of calculation is large. However, because the searching range is set, an accurate motion vector may not be found.

On the other hand, when the motion information generation model 2110 according to the present disclosure is applied, pixel data and/or motion information of the entire picture may be used as an input, so that more accurate motion information may be generated with lower complexity and used to code the current picture, thereby providing improved coding performance or efficiency.

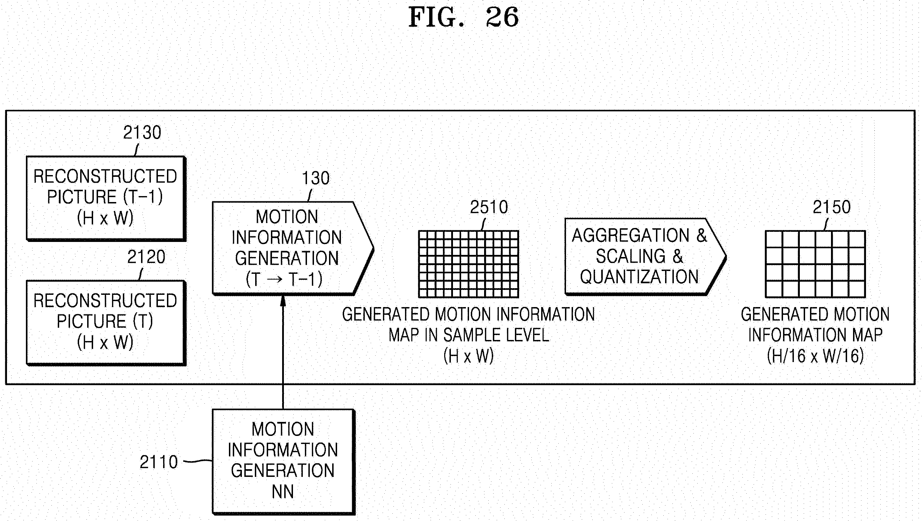

FIG. 26 illustrates a method of generating motion information according to the present disclosure.

A method of generating motion information (or a motion information map) by using pixel data of a reconstructed picture as an input in the motion information generation model 2110 (e.g., see FIG. 25 and a related description thereof) according to the present disclosure will be described with reference to FIG. 26. The motion information generating method to be described with reference to FIG. 26 may be performed by the apparatuses 100 and 200, and, in more detail, may be performed by the motion information generators 130 of the apparatuses 100 and 200. Moreover, the motion information generating method described above with reference to FIG. 26 may be performed in operation 1810 of the decoding method 1800 and operation 2010 of the image encoding method 2000.

In the example of FIG. 26, the reconstructed picture (e.g., POC=T-1 or a reference picture) 2120 and the reconstructed picture (e.g., POC=T) 2130 are used as input reconstructed pictures as in FIG. 21. However, the present disclosure is applicable identically/similarly even when other reconstructed pictures are used as inputs.

In the example of FIG. 26, generation of a motion information map 2150 generated in units of 16x16 blocks is illustrated. However, this is only an example, and the motion information map 2150 may also be generated in units of other block sizes (e.g., 4x4 or 8x8).

Referring to FIG. 26, the apparatuses 100 and 200 may input the reconstructed pictures 2120 and 2130 to the motion information generation model 2110 to generate a generated motion information map 2510 (of a sample unit or sample level). For example, when the reconstructed pictures 2120 and 2130 have a size (or resolution) of HxW, the generated motion information map 2510 (of a sample unit or sample level) may have the same size (or resolution) (e.g., HxW) as the input reconstructed picture.

The apparatuses 100 and 200 may convert the generated motion information map 2510 (of a sample unit or sample level) in accordance with a motion information map format of a video codec (e.g., the image decoding method 1800 and the image encoding method 2000). For example, the apparatuses 100 and 200 may generate the generated motion information map 2150 for a video codec by performing aggregation, scaling, and/or format transformation (e.g., quantization) on the generated motion information map 2510 (of a sample unit or sample level) according to an output format of the motion information generation model 2110.

For example, in the present disclosure, aggregation may include resizing the block size of the generated motion information map 2510 (of a sample unit or a sample level) in accordance with the block size of the motion information map 2150 used in a video codec (e.g., the image decoding method 1800 and the image encoding method 2000).

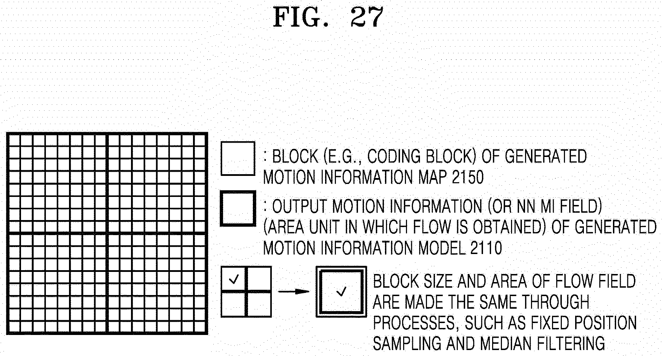

FIG. 27 illustrates a process of aggregating motion information according to the present disclosure.

The example in FIG. 27 is for illustrative purposes only, and the present disclosure may be applied equally/similarly to various block sizes.

As described above, in the present disclosure, motion information of a sample unit or sample level may be referred to as an optical flow or a flow, and a motion information map of a sample unit or sample level may be referred to as a motion field or an (optical) flow field. Therefore, in the present disclosure, the motion information of a sample unit or sample level generated by the motion information generation model 2110 or an output of the motion information generation model 2110 may be referred to as neural network (NN) motion information (MI) or a neural network (NN) motion information (MI) field or field flow.

Referring to FIG. 27, when the generated motion information map 2150 includes motion information in a 16x16 block size and the motion information generation model 2110 outputs or generates the motion information map (or an NN MI field or flow) 2510 in units of 8x8 blocks, the apparatuses 100 and 200 may aggregate 2x2 motion information (or flow) into one piece of motion information in the motion information map 2510. For example, aggregation may include processes, such as fixed position sampling, median filtering, etc. For example, fixed position sampling may include determining, as the aggregated motion information, motion information at a specific position (e.g., a top left end, a top right end, a bottom left end, or a bottom right end) among pieces of motion information that are to be aggregated. For example, median filtering may include determining, as a value of the aggregated motion information, a median among the pieces of motion information that are to be aggregated.

FIG. 27 illustrates an example in which the apparatuses 100 and 200 determine motion information at a specific position (e.g., an upper left portion) as aggregated motion information according to fixed position sampling.

Referring back to FIG. 26, in contrast, when the block size or unit of the motion information map (or the NN MI field or flow) 2510 is larger than the block size of the generated motion information map 2150, the apparatuses 100 and 200 may perform upsampling on the motion information map (or the NN MI field or flow) 2510. For example, when the generated motion information map 2150 includes motion information in a 8x8 block size or unit and the motion information generation model 2110 outputs or generates the motion information map (or an NN MI field or flow) 2510 in a 8x8 block size or unit, the apparatuses 100 and 200 may upsample one piece of motion information (or a flow) to 2x2 motion information. For example, upsampling may be done by directly copying or repeating the value of motion information (or a flow), but various other types (e.g., bi-cubic and DCT-IF interpolation) of upsampling may also be used.

Referring to FIG. 26, the apparatuses 100 and 200 may perform scaling on the motion information (or NN MI) of the generated motion information map 2510 (in a sample unit or sample level). For example, scaling according to the present disclosure may convert a resolution (or a scale) of the motion information (or NN MI) of the generated motion information map 2510 (in a sample unit or sample level) in accordance with a motion vector resolution (or a motion scale) of a video codec (e.g., the image decoding method 1800 and the image encoding method 2000).

For example, while an existing video codec (e.g., an HEVC) is designed to store a motion vector in units of 1/4 pixels, the motion information (or NN MI) of the generated motion information map 2510 may be output or generated in units of one pixel. Thus, in this case, the apparatuses 100 and 200 may perform scaling (e.g., quadrupling of a resolution or scale) on the motion information (or NN MI) of the generated motion information map 2510. In this example, the apparatuses 100 and 200 may perform 4-fold scaling through a left shift by 2 bits with respect to the motion information (or NN MI) of the generated motion information map 2510.

Referring to FIG. 26, the apparatuses 100 and 200 may perform format transformation on the motion information (or NN MI) of the generated motion information map 2510 (in a sample unit or sample level). For example, because the weight of the motion information generation model 2110 may have a value in the form of a floating point, the output of the motion information generation model 2110 may have a value in the form of a floating point. On the other hand, in a video codec (e.g., the image decoding method 1800 and the image encoding method 2000), motion information may be stored in the form of an integer (e.g., a 16-bit short integer). Accordingly, the apparatuses 100 and 200 may convert the format of the output motion information (or NN MI) of the motion information generation model 2110 in accordance with a motion information storage form (or format) of the video codec.

For example, while an existing codec (e.g., an HEVC) is designed to store a motion vector in the form of a 16-bit short integer, the motion information (or NN MI) of the generated motion information map 2510 may be output or generated in the form of a floating point. Thus, in this case, the apparatuses 100 and 200 may perform quantization on the motion information (or NN MI) of the generated motion information map 2510. For example, quantization may include mapping a value represented in a floating point form to a nearest integer value.

FIG. 28 illustrates a method of downscaling an input reconstructed picture according to the present disclosure.

In the case of high-definition images, if an image size or resolution of a high-definition image may be reduced before the high-definition image is input to the motion information generation model 2110, there may be benefits in terms of complexity and processing time. For example, in the case of a typical convolution operation performed in a convolutional neural network (CNN), computational complexity may increase in proportion to the input image size. That is, when the input image size is HxW, the computational complexity may increase in proportion to a product of a width W and a height H of an input image (i.e., in proportion to O(HW)). Therefore, when the width and height of the input image are each reduced to 1/N, a reduction in computational complexity of 1/(NxN) may be expected.

Accordingly, in the present disclosure, the apparatuses 100 and 200 may perform downsampling (DN) on (each of respective widths and respective heights) of input reconstructed pictures 2120 and 2130 by a down-sampling factor (e.g., 1/N) and input down-sampled reconstructed pictures 2810 and 2820 to the motion information generation model 2110, to thereby generate motion information 2510. For example, downsampling may use bi-linear interpolation and Lanczos interpolation, but there are various other downsampling methods that may be used.

When the input reconstructed pictures 2120 and 2130 are downsampled and used as inputs of the motion information generation model 2110 as in the present disclosure, an output of the motion information generation model 2110 may be used as it is, without resizing (or flow field resizing), such as aggregation, with respect to the motion information map 2510 generated by the motion information generation model 2110 (e.g., see related descriptions of FIGS. 25 and 26), so that computational complexity and a processing time period may be further reduced.

The apparatuses 100 and 200 may perform scaling (e.g., see FIG. 25 and its related description) on the motion information 2510 (or NN MI) generated using a downsampled input image. For example, in addition to scaling the resolution (or scale) of the motion information (or NN MI) in accordance with the video codec, the apparatuses 100 and 200 may scale the motion information, based on a downsampling factor. For example, in the case of motion information unit scaling (MI unit scaling), the apparatuses 100 and 200 may perform scaling on the motion information 2510 (or NN MI) generated by reflecting the downsampling factor in an existing scaling factor (e.g., multiplying an inverse number of the downsampling factor). In more detail, in the examples of FIGS. 26 and 28, because 1/8 downsampling is applied to an input reconstructed picture and the generated motion information 2510 is scaled 4 times in accordance with the video codec, the apparatuses 100 and 200 may perform 32 (=4*8) times scaling on the generated motion information 2510 (or NN MI), and the apparatuses 100 and 200 may perform 32 times scaling through a 5-bit left shift operation.

The apparatuses 100 and 200 may also perform format transformation (e.g., see FIG. 25 and its related description), such as quantization, on the motion information 2510 (or NN MI) generated using the downsampled input image.

In the example of FIG. 28, an example is illustrated in which the input reconstruced picture has a size of 4K and or a resolution (3840x2160) and a width and a height of the input reconstructed picture are each downsampled by 1/8. However, the present disclosure is not limited to this example, and the present disclosure may be applied identically/-similarly even when an input reconstructed picture of another size (e.g., 2K or 8K) is used or another downsampling factor (e.g., 1/2, 1/4, or 1/16) is applied.

In the present disclosure, when a time interval between reconstructed pictures used as inputs of a motion information generation model or a time interval between a current picture and the reconstructed picture is large (or they are far apart from each other in terms of time), the accuracy of generated motion information may be reduced. Therefore, in the present disclosure, when the time interval between the reconstructed pictures or the time interval between the current picture and the reconstructed picture is greater than or equal to a specific value or a specific threshold, the apparatuses 100 and 200 may determine that a time interval between two pictures (or frames) is "far".

For example, the specific threshold may be 1/25 seconds. Because 25 frame per second (FPS) is the frame rate of a typical video, 1/25 seconds may be a frame interval that the motion information generation model 2110 typically uses for learning. Therefore, when the specific threshold may be 1/25 seconds or higher, this may be a case where the specific threshold is equal to or greater than the interval between pictures (or frames) of a typical video, so the interval between two pictures (or frames) may be determined to be "far". In the present disclosure, a threshold for determining "far" is not limited to 1/25 seconds, and various other values may be used.

Alternatively, a picture order count (POC) distance (or difference) instead of a time unit may be used as the specific threshold. For example, when the POC distance (or difference) is 4 or greater, the apparatuses 100 and 200 may determine that the time interval between two pictures (or frames) is "far". Likewise, in the present disclosure, a POC distance (or difference) for determining "far" is not limited to 4, and various other values may be used.

When the time interval between two pictures (or frames) is determined to be "far", the following rule may be added when the motion information (or the motion information map) generated by the motion information generation model 2110 is applied to coding (e.g., decoding or encoding) of the current picture, and other rules may be applied for each mode of a current block of the current picture (or frame). For example, when the current block is coded in a skip mode and the time interval between the current picture and the reconstructed picture or the time interval between the reconstructed pictures is determined to be "far", the apparatuses 100 and 200 may not use the generated motion information in coding the current block. For example, when the current block is coded in a merge mode and the time interval between the current picture and the reconstructed picture or the time interval between the reconstructed pictures is determined to be "far", the apparatuses 100 and 200 may exclude the generated motion information from a merge candidate. For example, when the current block is coded in an AMVP mode and the time interval between the current picture and the reconstructed picture or the time interval between the reconstructed pictures is determined to be "far", the apparatuses 100 and 200 may add or insert the generated motion information as a candidate to or into a motion vector prediction (MVP) candidate list.

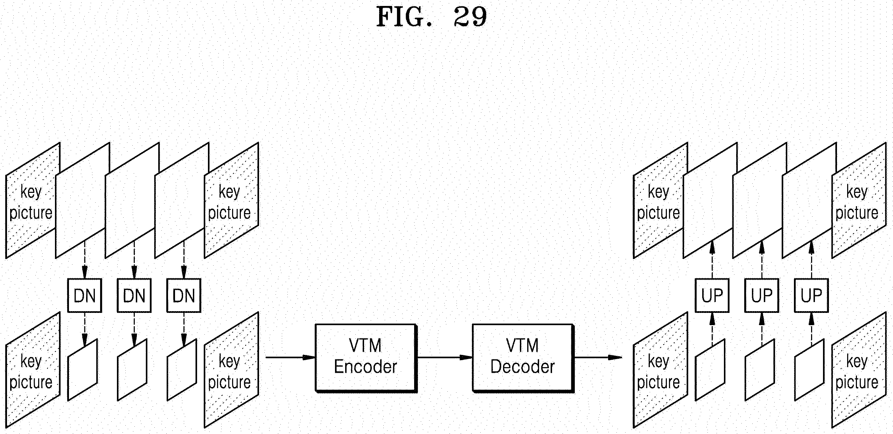

FIG. 29 illustrates reference picture resampling (RPR). RPR refers to a technique of coding a current picture by referring to a picture having a different size or resolution than the current picture, and is employed in the ITU-T H.266/VVC standard.

Even when RPR is applied, generated motion information (or a motion information map) according to the present disclosure may be applied. When RPR is applied, the apparatuses 100 and 200 may compare respective sizes or resolutions of two pictures (or frames) with each other, and, when the sizes or resolutions of the two pictures (or frames) are different from each other, may perform a process of aligning the sizes or resolutions of the two pictures (or frames).

In the present disclosure, the apparatuses 100 and 200 may downsample two pictures (or frames) (e.g., the reconstructed pictures 2120 and 2130) to smaller sizes or resolutions, and then may generate the motion information (or the motion information map) 2510 by using the down-sampled pictures. For example, the same method as a VVC standard may be used as a downsampling method. However, the present disclosure is not limited thereto, and various down-sampling methods (e.g., bilinear interpolation and Lanczos interpolation) may be used. The method described above with reference to FIGS. 25 through 28 may be used as a method of generating the motion information (or the motion information map) 2510.

The apparatuses 100 and 200 may perform operations (e.g., aggregation, scaling, and format transformation) for substituting the generated motion information (or the motion information map) 2510 for the generated motion information map 2150 (e.g., see FIGS. 25 through 28 and related descriptions thereof).

When there is a need to convert the generated motion information map 2150 to a higher resolution in order to code a picture of higher resolution, the apparatuses 100 and 200 may perform upsampling on the generated motion information map 2150. For example, the same method as a VVC standard may be used as an upsampling method. However, the present disclosure is not limited thereto, and various upsampling methods (e.g., bi-cubic or DCT-IF interpolation) may be used.

A method of generating the motion information (or the motion information map) 2150, according to the present disclosure, may be applied not only to coding (e.g., decoding or encoding) of a current picture but also to a frame rate up conversion (FRUC) technique. For example, the method of generating the motion information (or the motion information map) 2150, according to the present disclosure, may be applied to generating motion information of a virtual reference picture generated according to the FRUC technique.

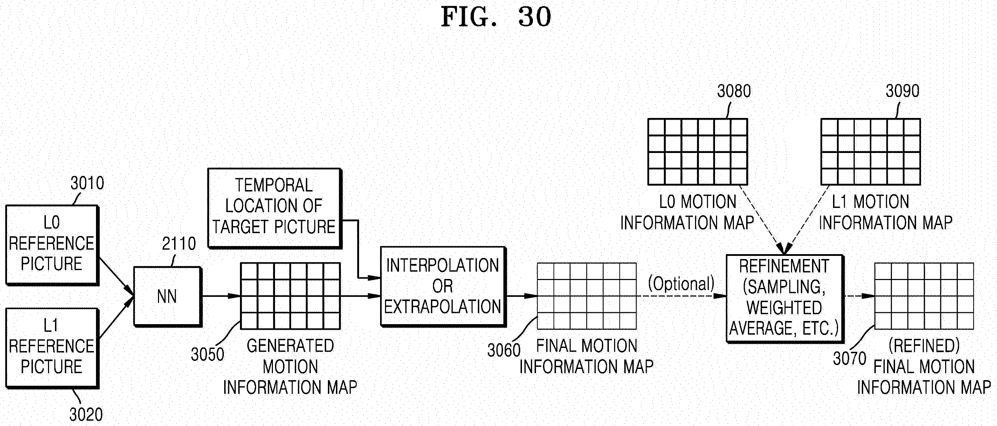

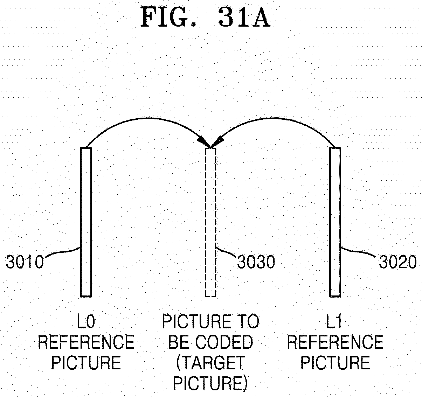

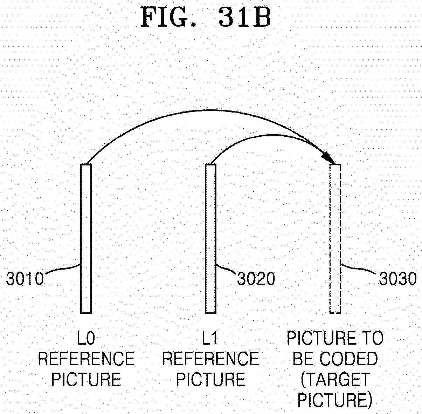

FIGS. 30 and 31 illustrate a method of utilizing a motion information generating method according to the present disclosure in FRUC.

The method to be described with reference to FIGS. 30 and 31 may be performed by the apparatuses 100 and 200 in the image decoding method 1800 and the image encoding method 2000, and, in more detail, may be performed by the motion information generators 130 of the apparatuses 100 and 200.

Referring to FIG. 30, the apparatuses 100 and 200 may obtain motion information from two reconstructed pictures (e.g., an L0 reference picture 3010 or an L1 reference picture 3020), and may generate a motion information map (or a MV map) for a target picture 3030 that is added by FRUC. For example, the apparatuses 100 and 200 may generate a motion information map 3050 by using the L0 reference picture 3010 and the L1 reference picture 3020 as inputs of the motion information generator 130 (e.g., the motion information generation model 2110), and may perform interpolation or extrapolation on the generated motion vector map 2150, based on a temporal position of the target picture 3030 to generate a final motion information map 3060 of the target picture 3030.

Additionally, the apparatuses 100 and 200 may perform refinement on the final motion information map 3060 to generate a refined final motion information map 3070. For example, the apparatuses 100 and 200 may generate the refined final motion information map 3070 by using, as inputs, not only the final motion information map 3060 but also a motion information map 3080 of the L0 reference picture 3010 and a motion information map 3090 of the L1 reference picture 3020. For example, refinement may include operations such as sampling and weighted average. Alternatively, for example, the refinement may be performed using an artificial neural network model, and, in this case, the apparatuses 100 and 200 may generate the refined final motion information map 3070 by using, as inputs, at least one of the final motion information map 3060, the motion information map 3080 of the L0 reference picture 3010, and the motion information map 3090 of the L1 reference picture 3020. For example, the artificial neural network may include a convolutional neural network (CNN), a fully-connected neural network (FCNN), or a combination thereof.

FIG. 31(a) illustrates that the final motion information map 3060 is generated by performing interpolation on the generated motion information map 3050 when the target picture 3030 is located between the L0 reference picture 3010 and the L1 reference picture 3020, and FIG. 31(b) illustrates that the final motion information map 3060 is generated by performing extrapolation on the generated motion information map 3050 when the target picture 303 is located outside the L0 reference picture 3010 and the L1 reference picture 3020. Although FIG. 31(b) illustrates that extrapolation is performed on the generated motion information map 3050 when both the L0 reference picture 3010 and the L1 reference picture 3020 are temporally located in front of the target picture 3030, the final motion information map 3060 may be generated by performing extrapolation on the generated motion information map 3050 even when both the L0 reference picture 3010 and the L1 reference picture 3020 are temporally located behind the target picture 3030.

The motion information map 3060 generated by the method described above with reference to FIGS. 30 and 31 may be used to code (e.g., decode or encode) the target picture 3030. For example, when a block to be coded in the target picture 3030 is coded in a skip mode, the apparatuses 100 and 200 may determine, as motion information of the block, motion information of a location corresponding to the block in the generated motion information map 3060. For example, when the block to be coded in the target picture 3030 is coded in a merge mode, the apparatuses 100 and 200 may determine the motion information of the block by adding or inserting the motion information of the position corresponding to the block in the motion information map 3060 as one candidate to or into a merge candidate list. For example, when the block to be coded in the target picture 3030 is coded in an AMVP mode, the apparatuses 100 and 200 may determine the motion information of the block by adding or inserting the motion information of the location corresponding to the block in the motion information map 3060 as one MVP candidate to or into an MVP candidate list.

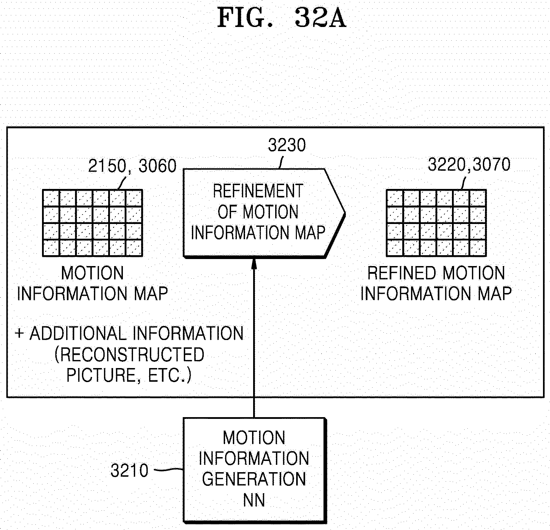

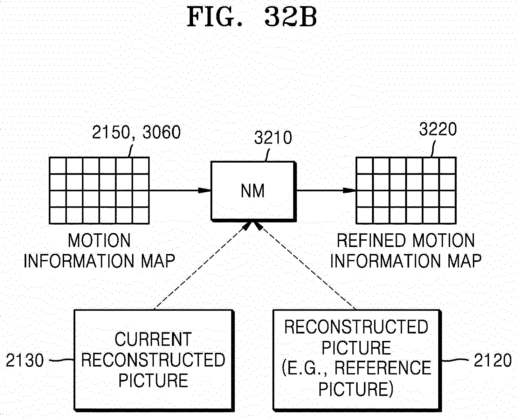

FIG. 32 illustrates a method of refining a generated motion information map, according to the present disclosure.

The apparatuses 100 and 200 may perform refinement on the generated motion information (or motion information map) 2150 and 3060 in order to improve the accuracy of the generated motion information (or motion information map) 2150 and 3060. The apparatuses 100 and 200 may include a motion information refiner 3230 configured to perform refinement on the generated motion information (or the motion information maps) 2150 and 3060 according to the present disclosure, and the motion information refiner 3230 may be implemented by at least one processor.

In the present disclosure, the motion information generator 3230 may operate in the same way as the motion information generator 130. For example, the motion information refiner 3230 may generate refined motion information 3220, based on the generated motion information (or the motion information maps) 2150 and 3060 and, additionally, at least one of pixel data and/or motion information of at least one reconstructed picture. The motion information refiner 3230 may process an input and generate an output according to various methods. For example, the motion information refiner 3230 may generate the refined motion information 3220 from input information by using an arithmetic operation (e.g., an average, a median, interpolation or filtering) or generate the refined motion information 3220 from the input information by using an artificial neural network 3210. For example, the artificial neural network 3210 may use the same artificial neural network model as the artificial neural network (or the motion information generation model 2110) of the motion information generator 130, or may use a separate artificial neural network model.

The description of the motion information generator 130 or the motion information generation model 2110 given above with reference to FIGS. 17 through 31 may be equally applied to the motion information refiner 3230 or an artificial neural network model used in the motion information refiner 3230. When an artificial neural network is used separately from the motion information generator 130 or the motion information generation model 2110 in the motion information refiner 3230, the motion information generation model 2110 of the motion information generator 130 may be referred to as a first motion information generation model or a first artificial neural network and the motion information generation model 3210 of the motion information refiner 3230 may be referred to as a second motion information generation model or a second artificial neural network, in order to distinguish the two artificial neural networks from each other in the present disclosure. The description of the motion information generator 130 or the motion information generation model 2110 given above with reference to FIGS. 17 through 31 is included herein by reference.

Referring to FIG. 32(a), an input of the motion information refiner 3230 may include the motion information maps 2150 and 3060 generated by the motion information generator 130 or the motion information generation model 2110. In addition, the input of the motion information refiner 3230 may further include additional information, and, for example, the additional information may include at least one of pixel data or a motion information map of at least one reconstructed picture (e.g., a reference picture).

As a non-limiting example, the input of the motion information refiner 3230 may be a combination as follows.

- Motion information map of current picture (or current MV map)
- Motion information maps of reference picture (or reference MV maps)
- Motion information map of current picture (or current MV map) + motion information map(s) of reference picture (or reference MV map(s))
- Motion information map of current picture (or current MV map) + motion information map(s) of reference picture (or reference MV map(s)) + pixel data of current reconstructed picture (or current recon) + pixel data of reference picture(s) (or reference picture(s))
- Motion information map of current picture (or current MV map) + pixel data of current reconstructed picture (or current recon) + pixel data of reference picture(s) (or reference picture(s))
- Motion information maps (or reference MV maps) of reference picture + pixel data of reference pictures (or reference pictures)

FIG. 32(b) illustrates, as an example not limiting the present disclosure, generation of the refined motion information map 3220 by using the motion information maps 2150 and 3060 of the current picture, the pixel data of the current reconstructed picture 2130, and the pixel data of the reference picture 2120 as inputs of the motion information generation model 3210 (or the second motion information generation model).

In addition, for example, the input of the motion information refiner 3230 may include at least one of quantization information, a prediction sample, a residual sample, and distance information from the current picture in addition to motion information (e.g., see FIG. 17 and its related description). In addition, for example, an output of the motion information refiner 3230 may include at least one of intra-coding related information, residual-coding related information, illumination change information, and statistical information in addition to refined motion information (e.g., see FIG. 17 and its related description).

Motion information (or a motion information map) generated in the present disclosure may be applied to video coding (e.g., decoding or encoding) in various ways.

- Motion information (or a motion information map) of a picture (or a frame) on which video coding is to be performed may be generated in advance before the picture (or the frame) is coded, and the generated motion information (or motion information map) may be utilized in coding the picture (or frame).

For example, when a current block of the picture to be coded is coded in a merge mode or an AMVP mode, motion information of a location corresponding to the current block in the generated motion information map may be used as a merge candidate or MVP candidate. For example, when the current block is coded in a skip mode, the motion information at the location corresponding to the current block in the generated motion information map may be determined as motion information of the current block.

- The motion information map of a current picture (or the current MV map) may be replaced with the generated motion information map and the generated motion information map may be used. For example, the motion information of the generated motion information map may be utilized as temporal motion information during subsequent picture (or frame) coding (e.g., decoding or encoding).
- When FRUC is applied, the generated motion information map may be used to generate a virtual reference picture of the picture (or frame) to be coded.
- A generated motion information map may be used when a dummy picture (or frame) for a dropped picture (or frame).

A method of using generated motion information (or motion information map) in video coding (e.g., decoding or encoding) will now be described in more detail.

In the present disclosure, new syntax information is defined to indicate whether the generated motion information (or motion information map) is used to code a current picture. For convenience of explanation, the new syntax information may be referred to as first information. In addition, in the present disclosure, although the first information is represented as use_generated_mv_flag, a name of the first information may be changed.

For example, the first information may indicate whether the generated motion information (or motion information map) is used in coding (e.g., decoding or encoding) a current block, according to a value of the first information. For example, when the first information has a value of 0, the first information may indicate that the generated motion information (or motion information map) is not used in coding (e.g., decoding or encoding) the current block, and, when the first information has a value of 1, the first information may indicate that the generated motion information (or motion information map) is used in coding (e.g., decoding or encoding) the current block. As another example, the value of the first information may be set in the opposite manner (i.e., when the first information has a value of 0, the first information may indicate that the generated motion information is used in coding the current block, and when the first information has a value of 1, the first information may indicate that the generated motion information is not used in coding the current block).

For example, the current block may be a coding unit (CU) (or a coding block), and the first information may be signaled via a bitstream in units of CUs. As another example, the current block may be a coding tree unit (CTU) (or a coding tree block), may be a transform unit (TU) (or a transform block), or may be a prediction unit (PU) (or a prediction block), and the first information may be signalled through the bitstream in units of CTUs, TUs, or PUs. As another example, the first information may be signaled in units of sequence parameter sets (SPSs), picture parameter sets (PPSs), picture headers (PHs), or slice headers (SHs).

For convenience of explanation, it will now be assumed that the first information is signaled in units of CUs.

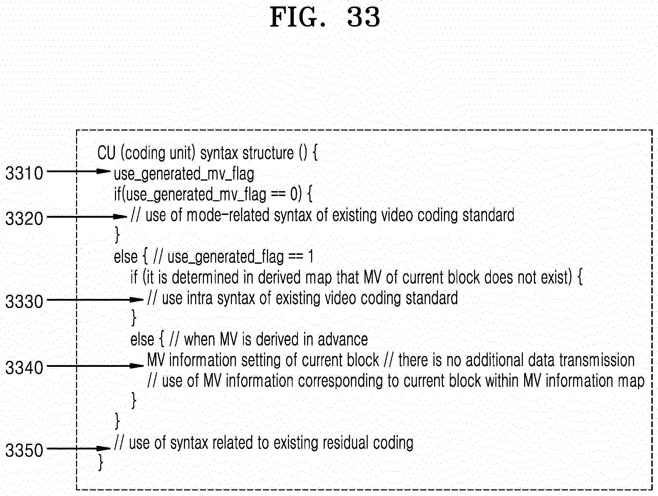

Referring to FIG. 33, when decoding a current picture, the apparatus 100 may obtain first information with respect to the current block from a bitstream (operation 3310).

When the first information indicates that the generated motion information (or motion information map) is not used in coding the current block (e.g., when a value of the first information is 0), the apparatus 100 may reconstruct or decode the current block by using syntax information of an existing video coding standard (operation 3320). In the present disclosure, an existing video coding standard may refer to an ITU-T H.266 or Versatile Video Coding (VVC) standard, or an ITU-T H.265 or High Efficiency Video Coding (HEVC) standard. The syntax information of the existing video coding standard is described in detail in an ITU-T H.266/VVC standard document or an ITU-T H.265/HEVC standard document, and this specification includes the entire contents of those standard documents by reference.

When the first information indicates that the generated motion information (or motion information map) is used in coding the current block (e.g., when a value of the first information is 1), the apparatus 100 may determine whether there is generated motion information at a location corresponding to the current block. When it is determined that there is no generated motion information at a location corresponding to the current block, the apparatus 100 may determine intra prediction mode information (e.g., an intra DC mode, an intra plane mode, and an intra angle mode) for the current block by using pieces of intra mode related syntax information of the existing video coding standard, and perform intra prediction on the current block to obtain a predicted sample (operation 3330).

When it is determined that there is generated motion information at a location corresponding to the current block, the apparatus 100 may determine the motion information at the location corresponding to the current block within the generated motion information map as motion information for the current block, and may perform inter prediction on the current block to obtain a prediction sample (operation 3340). In operation 3340, the apparatus 100 may not obtain (or may omit obtaining) relevant syntax information from the bitstream.

After obtaining a predicted sample (or predicted block) through intra prediction or inter prediction, the apparatus 100 may obtain a residual sample by performing inverse transformation and inverse quantization on the current block by using residual-coding related syntax information of the existing video coding standard, and may reconstruct the current block based on the predicted sample and the residual sample.

In the example of FIG. 33, when encoding the current picture, the apparatus 200 may perform an operation corresponding to an operation of the apparatus 100 described above. For example, the apparatus 200 may determine whether to use the generated motion information (or motion information map) about the current picture to encode the current block and whether to encode the current block in an intra mode or encode the current block in an inter mode.

Based on a result of the determination, the apparatus 200 may encode the first information into the bitstream (operation 3310). For example, when it is determined that the generated motion information (or motion information map) is not used in encoding the current block, the apparatus 200 may encode the first information into the bitstream with a value of 0, and may encode the syntax information of the existing video coding standard into the bitstream according to a result of the encoding of the current block (operation 3320).

For example, when it is determined that the generated motion information (or motion information map) is used in encoding the current block, the apparatus 200 may encode the first information into the bitstream with a value of 1, and may determine whether the generated motion information at a location corresponding to the current block exists in the generated motion information map.

When it is determined that there is no generated motion information at a position corresponding to the current block, the apparatus 100 may determine intra prediction mode information for the current block, perform intra prediction on the current block to obtain a predicted sample, and may encode pieces of syntax information (related to an intra mode of the existing video coding standard) indicating the determined intra prediction mode into the bitstream (operation 3330).

When it is determined that there is generated motion information at a location corresponding to the current block, the apparatus 100 may determine the motion information at the location corresponding to the current block within the generated motion information map as motion information for the current block, and may perform inter prediction on the current block to obtain a prediction sample (operation 3340). In operation 3340, the apparatus 100 may not encode (or may omit encoding) relevant syntax information into the bitstream.

The apparatus 200 may obtain a predicted sample (or predicted block) through intra prediction or inter prediction, and then perform residual coding according to the existing video coding standard and encode the related syntax information into the bitstream (operation 3350).

As described above, the value of the first information may also be encoded in the opposite way.

The operation of the apparatus 100 described above with reference to FIG. 33 may be performed in operation 1820 of the image decoding method 1800, and the operation of the apparatus 200 may be performed in operation 2020 of the image encoding method 2000.

In addition, as described above, the generated motion information (or the generated motion information map) may be generated by the motion information generator 130 or the motion information refiner 3230, and, for example, the generated motion information (or the generated motion information map) may be generated through an artificial neural network (e.g., the motion information generation models 2110 and 3210) or may be generated according to various methods (e.g., an arithmetic operation) not using an artificial neural network.

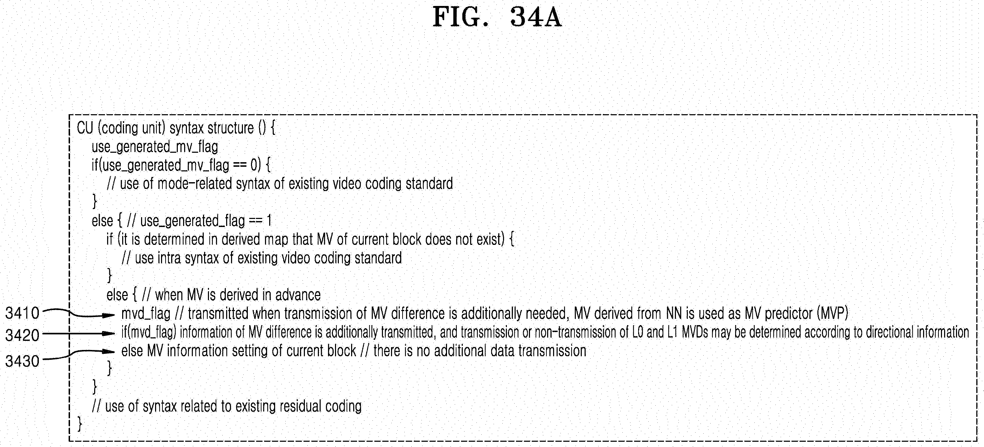

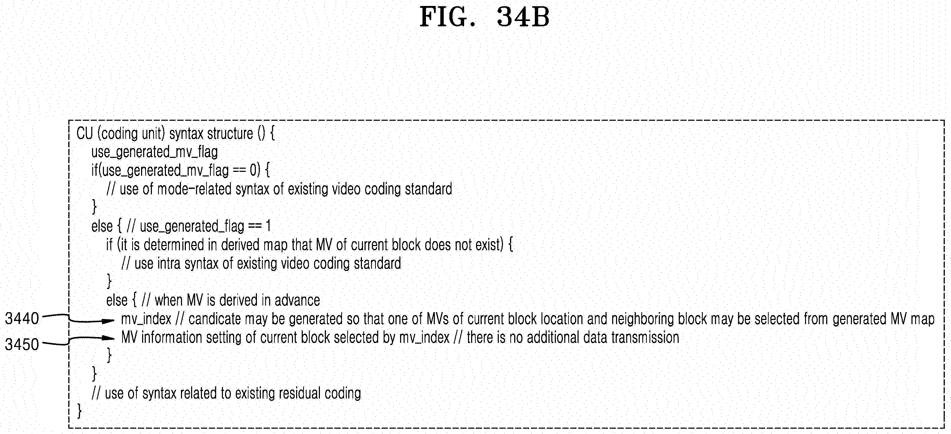

FIG. 34 illustrates a syntax structure and a coding method according to the present disclosure.

The syntax structure of FIG. 34 is obtained by changing the syntax information in operation 3340 from the syntax structure of FIG. 33. Accordingly, the descriptions of operations 3310, 3320, 3330, and 3350 in the syntax structure and the coding method of FIG. 33 are identical to those of FIG. 34, and are incorporated herein by reference.

In the present disclosure, when the generated motion information (or motion information map) is used, new syntax information indicating whether a motion vector difference (MVD) additionally exists in a bitstream may be defined. In the present disclosure, the syntax information may be referred to as second information. In the present disclosure, although the second information is represented as mvd_flag, a name of the second information may be changed.

For example, the second information may indicate whether syntax information related to the MVD is additionally present in the bitstream when the generated motion information (or motion information map) is used, according to a value of the second information. For example, when the second information has a value of 0, the second information may indicate that syntax information related to the MVD does not exist in the bitstream, and, when the second information has a value of 1, the second information may indicate that the syntax information related to the MVD exists in the bitstream. As another example, the value of the second information may be set in the opposite manner.

In addition, in the present disclosure, new syntax information generating a candidate list including motion information of a location corresponding to a current block and motion information of a location corresponding to at least one (spatial) neighboring block of the current block in the generated motion information map and indicating one piece of motion information in the candidate list may be defined, and may be referred to as third information in the present disclosure. In the present disclosure, although the third information is represented as mv_index, a name of the third information may be changed. For example, the third information may have a value less than or equal to the maximum number of candidate lists, and the third information may indicate a motion information candidate at a location corresponding to the value of the third information among the candidate lists.

Referring to FIG. 34(a), when it is determined that generated motion information at a location corresponding to the current block exists, the apparatus 100 may obtain the second information (e.g., mvd_flag) from the bitstream (operation 3410).

When the second information indicates that MVD-related syntax information for the current block exists in the bitstream, the apparatus 100 may obtain the MVD-related syntax information from the bitstream, and obtain an MVD for the current block based on the obtained information (operation 3420). In addition, the apparatus 100 may obtain a motion vector predictor (MVP) from the generated motion information map, obtain a motion vector for the current block based on the MVD obtained from the bitstream and the MVP obtained from the generated motion information map, and perform inter prediction on the current block by using the obtained motion vector to thereby obtain a predicted sample.

Moreover, in operation 3420, the third information (e.g., mv_index) may be signaled via the bitstream to indicate the MVP in the generated motion information map. In this case, the apparatus 100 may obtain the third information from the bitstream, and may determine, as the MVP, a motion information candidate indicated by the third information from among the motion information candidates of the generated motion information map.

When the second information indicates that the MVD-related syntax information for the current block does not exist in the bitstream, the apparatus 100 may determine the motion information at the location corresponding to the current block within the generated motion information map as the motion information for the current block, and may perform inter prediction to obtain a prediction sample for the current block (operation 3430). In operation 3430, the apparatus 100 may not obtain (or may omit obtaining) relevant syntax information from the bitstream. Thereafter, the apparatus 100 may reconstruct the current block by performing the operation described above with reference to 3350.

When encoding the current picture, the apparatus 200 may perform an operation corresponding to an operation of the apparatus 100 described above. For example, when it is determined that the generated motion information of a location corresponding to the current block exists, the apparatus 200 may determine whether to encode the MVD-related syntax information into the bitstream, and may encode the second information with a corresponding value into the bitstream, based on a result of the determination (operation 3410). Based on the second information, the apparatus 200 may encode the MVD-related syntax information for the current block into the bitstream and encode the third information indicating the MVP into the bitstream (operation 3420), or may encode the current block (in an inter mode) by using motion information at a location corresponding to the current block in the generated motion information map (operation 3430). In operation 3430, the apparatus 200 may not encode (or may omit encoding) relevant syntax information into the bitstream. Thereafter, the apparatus 200 may generate the bitstream by performing the operation described above with reference to 3350.

Referring to FIG. 34(b), when it is determined that generated motion information at a location corresponding to the current block exists, the apparatus 100 may obtain the third information from the bitstream (operation 3440). For example, the apparatus 100 may determine, as the motion information for the current block, the motion information indicated by the third information among the motion information of the location corresponding to the current block in the generated motion information map and the motion information of a location corresponding to at least one neighboring block of the current block (operation 3450).

The apparatus 100 may perform inter prediction by using the motion information determined in operation 3450 to thereby obtain a predicted sample. Thereafter, the apparatus 100 may reconstruct the current block by performing the operation described above with reference to 3350.

In FIG. 34(b), when encoding the current picture, the apparatus 200 may perform an operation corresponding to an operation of the apparatus 100 described above. For example, when it is determined that there is generated motion information at a position corresponding to the current block, the apparatus 200 may determine motion information corresponding to the motion information for the current block among the motion information of the location corresponding to the current block in the generated motion information map and the motion information of a location corresponding to at least one neighboring block of the current block (operation 3450), and may encode the third information indicating the deteremined motion information into the bitstream (operation 3440). Thereafter, the apparatus 200 may generate the bitstream by performing the operation described above with reference to 3350.

The operation of the apparatus 100 described above with reference to FIG. 34 may be performed in operation 1820 of the image decoding method 1800, and the operation of the apparatus 200 may be performed in operation 2020 of the image encoding method 2000.

New flag information may be determined so that one of the syntax structures and coding methods of FIGS. 34(a) and 34(b) may be selected, allowing one of the two modes to be selected. In the disclosure, this flag information may be referred to as fourth information. In the present disclosure, although the fourth information is represented as no_mvd_flag, a name of the fourth information may be changed.

Accordingly, a more accurate motion vector (MV) corresponding to the current block may be found by transmitting only a small amount of side information, thereby increasing coding efficiency.

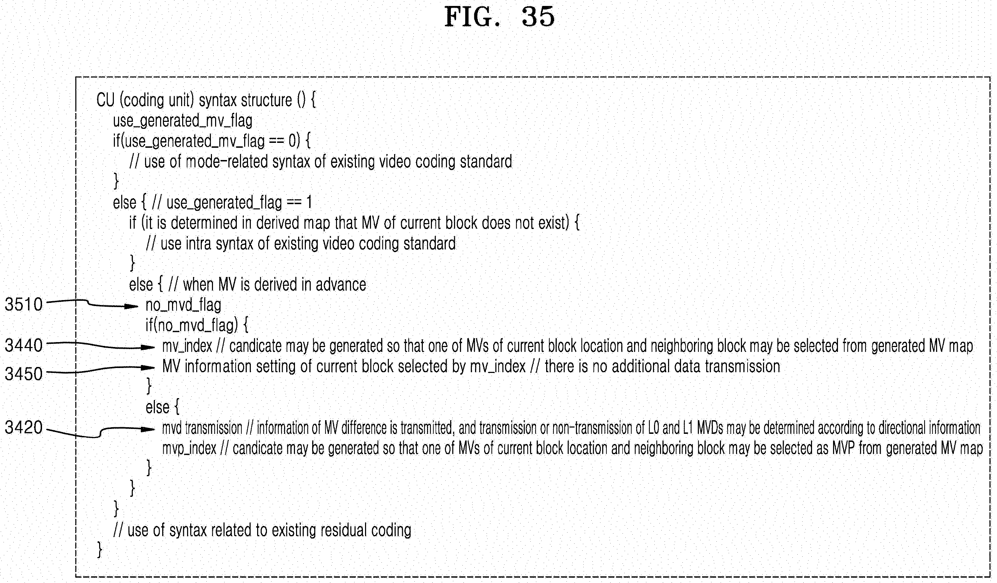

FIG. 35 illustrates a syntax structure and a coding method according to the present disclosure.

The syntax structure of FIG. 34 is obtained by changing the syntax information in operation 3340 from the syntax structure of FIG. 33. Accordingly, the descriptions of operations 3310, 3320, 3330, and 3350 in the syntax structure and the coding method of FIG. 33 are identical to those of FIG. 35, and are incorporated herein by reference.

In the example of FIG. 35, the fourth information (e.g., no_mvd_flag) may be used to select one of the method of FIG. 34(a) and the method of FIG. 34(b). For example, the fourth information may indicate whether a method in which MVD-related syntax information is signaled (or the method illustrated in FIG. 34(a)) is used or whether a method of determining the motion information indicated by the third information (e.g., mv_index) among the generated motion information map as the motion information of the current block (or the method illustrated in FIG. 34(b)) is used, according to a value of the fourth information. For example, when the fourth information has a value of 1, the fourth information may indicate that the method in which MVD-related syntax information is signaled (or the method illustrated in FIG. 34(a)) is used, and, when the fourth information has a value of 0, the fourth information may indicate that the method of determining the motion information indicated by the third information (e.g., mv_index) among the generated motion information map as the motion information of the current block (or the method illustrated in FIG. 34(b)) is used.

As another example, when the fourth information has a value of 0, the fourth information may indicate that the method in which MVD-related syntax information is signaled (or the method illustrated in FIG. 34(a)) is used, and, when the fourth information has a value of 1, the fourth information may indicate that the method of determining the motion information indicated by the third information (e.g., mv_index) among the generated motion information map as the motion information of the current block (or the method illustrated in FIG. 34(b)) is used.

Based on the fourth information, the apparatuses 100 and 200 may decode or encode the current block by performing the operation described above with reference to 3420 of FIG. 34(a) or performing the operation described above with reference to 3440 and 3450 of FIG. 34(b). Descriptions of operations 3420, 3440, and 3450 are included herein as a reference.

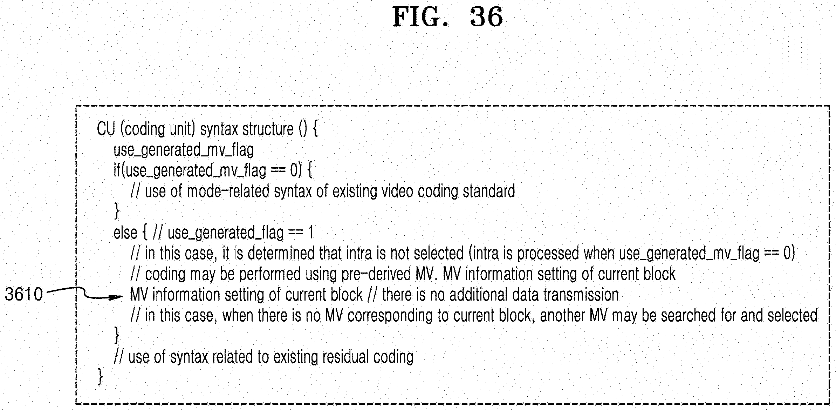

FIG. 36 illustrates a syntax structure and a coding method according to the present disclosure.

The syntax structure of FIG. 36 is obtained by changing the syntax information in operations 3330 and 3340 from the syntax structure of FIG. 33. Accordingly, the descriptions of operations 3310, 3320, and 3350 in the syntax structure and the coding method of FIG. 33 are identical to those of FIG. 36, and are incorporated herein by reference.

Referring to FIG. 36, when performing image decoding, the apparatus 100 may determine whether motion information (or motion information map) generated for the current picture is used to code the current block, based on the first information (e.g., use_generated_mv_flag) (operation 3310). When the first information indicates that the generated motion information (or motion information map) is used in coding the current block (e.g., when a value of the first information is 1), the apparatus 100 may determine that the current block is not coded in an intra mode, determine the motion information of a location corresponding to the current block in the generated motion information map as the motion information for the current block, and perform inter prediction on the current block to obtain a predicted sample (operation 3610). In operation 3610, the apparatus 100 may not obtain (or may omit obtaining) relevant syntax information from the bitstream. Thereafter, the apparatus 100 may reconstruct the current block by performing the operation described above with reference to 3350.

When there is no motion information at a location corresponding to the current block in the generated motion information map, the apparatus 100 may search for other motion information and use found motion information to decode the current block.

Unlike the example of FIG. 33, in the example of FIG. 36, when the current block is coded in an intra mode, the apparatus 100 may perform decoding according to the syntax information of the existing video coding standard. That is, in the example of FIG. 36, when the current block is coded in an intra mode, the first information for the current block may be set to indicate that the generated motion information (or motion information map) is not used to code the current block.

In the example of FIG. 36, when encoding the current picture, the apparatus 100 may perform an operation corresponding to an operation of the apparatus 100 described above. For example, the apparatus 200 may determine whether to use the generated motion information (or motion information map) of the current picture to encode the current block, and may encode the first information to the bitstream, based on a result of the determination.

When it is determined that the generated motion information (or motion information map) is used to encode the current block, the apparatus 200 may determine the motion information at the location corresponding to the current block within the generated motion information map as the motion information about the current block, and may perform inter prediction on the current block to obtain a predicted sample (operation 3610). In operation 3610, the apparatus 200 may not encode (or may omit encoding) relevant syntax information into the bitstream. Thereafter, the apparatus 200 may generate the bitstream by performing the operation described above with reference to 3350.

The operation of the apparatus 100 described above with reference to FIG. 36 may be performed in operation 1820 of the image decoding method 1800, and the operation of the apparatus 200 may be performed in operation 2020 of the image encoding method 2000.

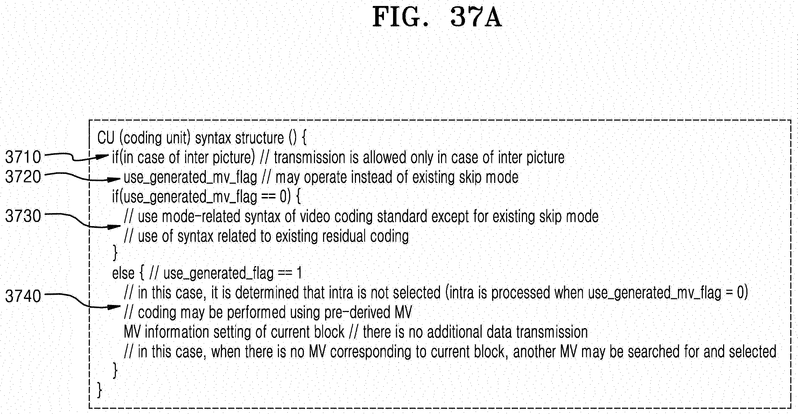

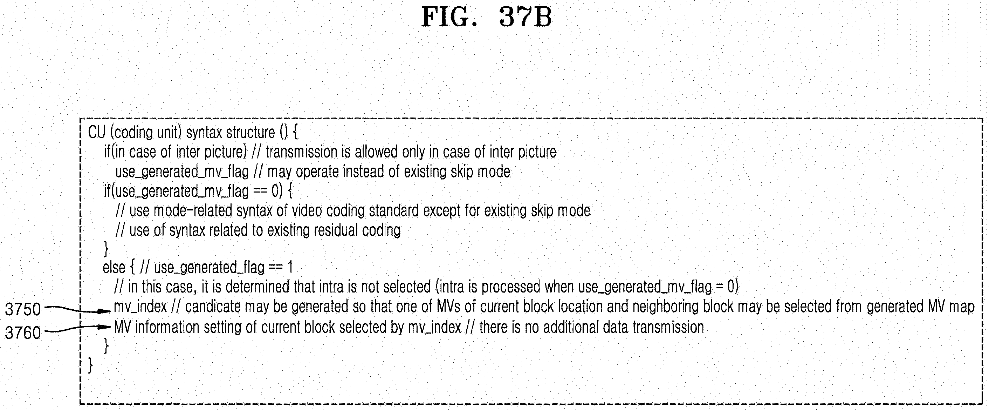

FIG. 37 illustrates a syntax structure and a coding method according to the present disclosure.

In the example of FIG. 37, a coding method using motion information (or motion information map) generated according to the present disclosure may be set to operate instead of a skip mode. Therefore, in the example of FIG. 37, the first information may be signaled via the bitstream only in case of an inter picture (or a P slice or a B slice). In addition, when the first information indicates that the generated motion information (or motion information map) is not used to code the current block, mode-related syntax information of a video coding standard excluding an existing skip mode may be used, and existing residual-coding related syntax information may also be used. On the other hand, in the example of FIG. 37, when the first information indicates that the generated motion information (or motion information map) is used to code the current block, syntax information for the current block may not be signaled through the bitstream, and the existing residual-coding related syntax information may also not exist in the bitstream.

In the example of FIG. 37(a), when decoding the current picture, the apparatus 100 may determine whether the current picture (or slice) is an inter picture (or a picture coded in an inter mode) (or a P slice or a B slice) (operation 3710). When the current picture (or slice) is an inter picture (or a picture coded in an inter mode) (or a P slice or a B slice), the apparatus 100 may obtain the first information of the current block from the bitstream (operation 3720).

When the first information indicates that the generated motion information (or motion information map) is not used in coding the current block (e.g., when a value of the first information is 0), the apparatus 100 may reconstruct or decode the current block by using every relevant syntax information excluding a skip mode of the existing video coding standard (operation 3730).

When the first information indicates that the generated motion information (or motion information map) is used in coding the current block (e.g., when a value of the first information is 1), the apparatus 100 may determine that the current block is not coded in an intra mode, determine the motion information of a location corresponding to the current block in the generated motion information map as the motion information for the current block, and obtain a sample of the current block (operation 3740). In operation 3740, the apparatus 100 may not obtain (or may omit obtaining) relevant syntax information from the bitstream. In operation 3740, residual coding is not performed.

When there is no motion information at a location corresponding to the current block in the generated motion information map, the apparatus 100 may search for other motion information and use found motion information to decode the current block. Also, in operation 3740, when the current block is coded in an intra mode, the first information for the current block may be set to indicate that the generated motion information (or motion information map) is not used to code the current block.

In the example of FIG. 37, when encoding the current picture, the apparatus 200 may perform an operation corresponding to an operation of the apparatus 100 described above. For example, the apparatus 200 may determine whether the current picture (or slice) is an inter picture (or a picture coded in an inter mode) (or a P slice or a B slice), and, when the current picture (or slice) is an inter picture (or a picture coded in an inter mode) (or a P slice or a B slice), may encode the first information into the bitstream. Of course, the apparatus 200 may determine whether to use the generated motion information (or motion information map) of the current picture to encode the current block and whether to encode the current block in an intra mode or encode the current block in an inter mode.

When a mode (including an intra mode) excluding a skip mode is applied to the current block, the apparatus 200 may encode the first information so that the first information indicates that the generated motion information (or motion information map) is not used to encode the current block. On the other hand, when a skip mode is applied to the current block, the apparatus 200 may encode the first information so that the first information indicates that the generated motion information (or motion information map) is used to encode the current block.

For example, when it is determined that the generated motion information (or motion information map) is not used in encoding the current block, the apparatus 200 may encode the first information into the bitstream with a value of 0 (operation 3720), and may encode the syntax information of the existing video coding standard into the bitstream according to a result of the encoding of the current block (operation 3730).

For example, when it is determined that the generated motion information (or motion information map) is used to encode the current block, the apparatus 200 may obtain a sample for the current block by using the motion information at the location corresponding to the current block within the generated motion information map (operation 3740). In operation 3740, the apparatus 200 may not encode (or may omit encoding) relevant syntax information into the bitstream. In operation 3740, residual coding is not performed.

FIG. 37(b) is obtained by changing the operation 3740 of FIG. 37(a). Accordingly, the descriptions of operations 3710, 3720, and 3730 in the description of FIG. 37(a) are identical to those of FIG. 37(b), and are incorporated herein by reference.

In the example of FIG. 37(b), when the first information indicates that the generated motion information (or motion information map) is used to code the current block, a method in which the third information indicates the motion information in the generated motion information map by signaling the third information through the bitstream may be used instead of a method of using, without changes, the motion information at the location corresponding to the current block in the generated motion information map.

In the example of FIG. 37(b), when decoding the current picture, the apparatus 100 may determine whether the generated motion information map is used to code the current block, based on the first information (operation 3720). When the first information indicates that the generated motion information map is used in coding the current block (e.g., when a value of the first information is 1), the apparatus 100 may obtain the third information (e.g., mv_index) from the bitstream (operation 3750). For example, the apparatus 100 may obtain a sample of the current block by using the motion information indicated by the third information from among the motion information of the location corresponding to the current block in the generated motion information map and the motion information of a location corresponding to at least one neighboring block of the current block (operation 3760).

In FIG. 37(b), when encoding the current picture, the apparatus 200 may perform an operation corresponding to an operation of the apparatus 100 described above. For example, when it is determined that the generated motion information map is used to code the current block, the apparatus 200 may determine motion information corresponding to the motion information for the current block among the motion information of the location corresponding to the current block in the generated motion information map and the motion information of a location corresponding to at least one neighboring block of the current block (operation 3760), and may encode the third information indicating the determined motion information into the bitstream (operation 3750).

The operation of the apparatus 100 described above with reference to FIG. 37 may be performed in operation 1820 of the image decoding method 1800, and the operation of the apparatus 200 may be performed in operation 2020 of the image encoding method 2000.

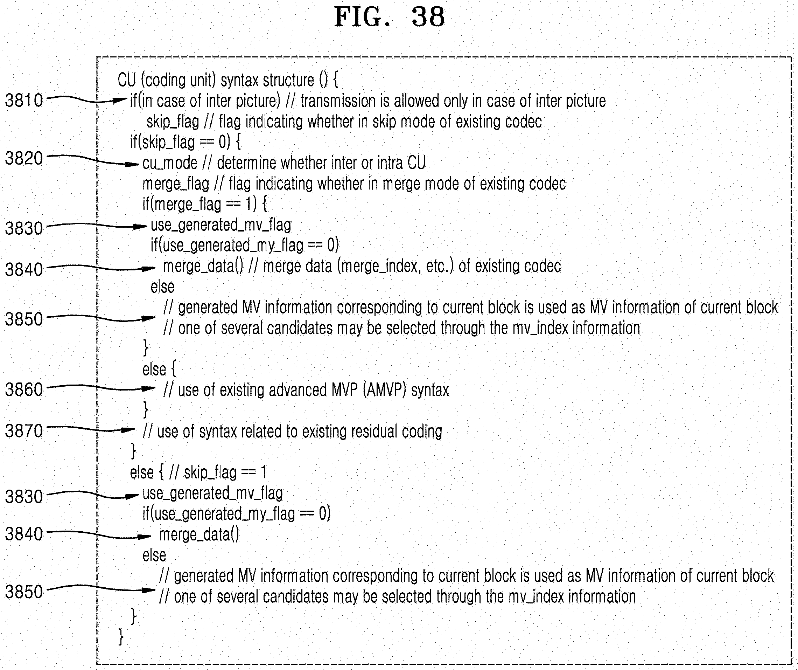

FIG. 38 illustrates a syntax structure and a coding method according to the present disclosure.

In FIG. 38, when the current block is coded in a skip mode or coded in a merge mode, the first information (e.g., use_generated_mv_flag) may be signaled through the bitstream, and the merge mode may be applied to the current block or the generated motion information map may be used according to the first information. In the example of FIG. 38, when the current block is coded in an AMVP mode, the generated motion information map is not used, and motion information is signaled in the AMVP mode according to the existing video coding standard.

In the example of FIG. 38, when decoding the current picture, the apparatus 100 may determine whether the current picture (or slice) is an inter picture (or a picture coded in an inter mode) (or a P slice or a B slice) (operation 3810). When the current picture (or slice) is an inter picture (or a picture coded in an inter mode) (or a P slice or a B slice), the apparatus 100 may obtain information (e.g., skip_flag) indicating whether the current block is a skip mode. When information indicating whether the current block is a skip mode has a value of 0, the information may indicate that the current block is not the skip mode, and, when the information indicating whether the current block is a skip mode has a value of 1, the information may indicate that the current block is the skip mode (or vice versa).

When the current block is not a skip mode, the apparatus 100 may determine whether the current block is an intra block or an inter block (or whether the current block is coded in an intra mode or in an inter mode), and may obtain, from the bitstream, information (e.g., merge_flag) indicating whether the current block is a merge mode (operation 3820). When information indicating whether the current block is a merge mode has a value of 0, the information may indicate that the current block is not the merge mode, and, when the information indicating whether the current block is a merge mode has a value of 1, the information may indicate that the current block is the merge mode (or vice versa).

When the current block is a merge mode, the apparatus 100 may obtain first information from a bitstream (operation 3830). When the first information indicates that the generated motion information map is not used to code the current block, the apparatus 100 may obtain syntax information (e.g., merge_index) related to the merge mode from the bitstream, obtain motion information for the current block in the merge mode, and perform inter prediction to obtain a predicted sample (operation 3840).

When the first information indicates that the generated motion information map is used to code the current block, the apparatus 100 may determine the motion information at the location corresponding to the current block within the generated motion information map as the motion information about the current block, and may perform inter prediction to obtain a predicted sample (operation 3850). Alternatively, the apparatus 100 may obtain third information (e.g., mv_index) from the bitstream, and obtain a predicted sample by performing inter prediction by using the motion information indicated by the third information from among the motion information of the location corresponding to the current block in the generated motion information map and the motion information of a location corresponding to at least one neighboring block of the current block (operation 3850).

When the current block is not a merge mode, the apparatus 100 may obtain relevant syntax information from the bitstream according to the AMVP mode of the existing video coding standard, obtain motion information in the AMVP mode, and perform inter prediction to obtain a predicted sample (operation 3860).

Thereafter, the apparatus 100 may obtain a residual sample by performing inverse transformation and inverse quantization on the current block by using residual-coding related syntax information of the existing video coding standard, and may reconstruct the current block based on the predicted sample obtained through inter prediction and the residual sample.

When the current block is a skip mode, the apparatus 100 may perform the operations described above in relation to the operations 3830, 3840, and 3850. The descriptions of operations 3830, 3840, and 3450 are included herein as a reference. Consequently, in the example of FIG. 38, the first information and a related coding method may be applied when the current block is a merge mode or a skip mode.

In the example of FIG. 38, when encoding the current picture, the apparatus 200 may perform an operation corresponding to an operation of the apparatus 100 described above.

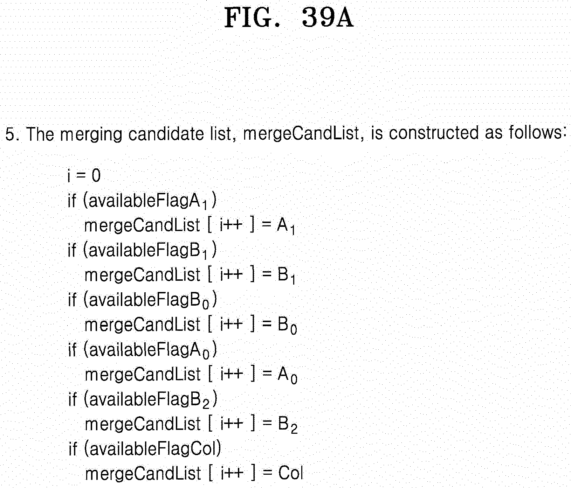

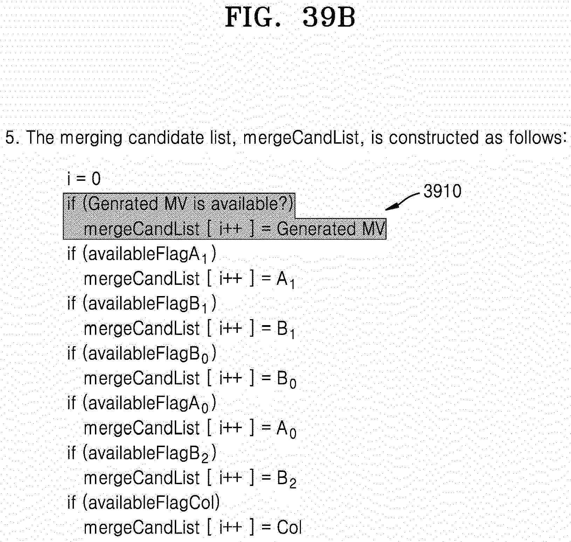

FIG. 39 illustrates use of generated motion information in a merge mode according to the present disclosure.

In the present disclosure, the merge mode refers to a method of generating a candidate list for motion information of a current block including at least one of a spatial neighboring block and a temporal neighboring block of a current block in a current picture, and determining, as the motion information of the current block, a candidate indicated by index information signaled through a bitstream from the generated candidate list (e.g., see FIG. 16 and its related description).

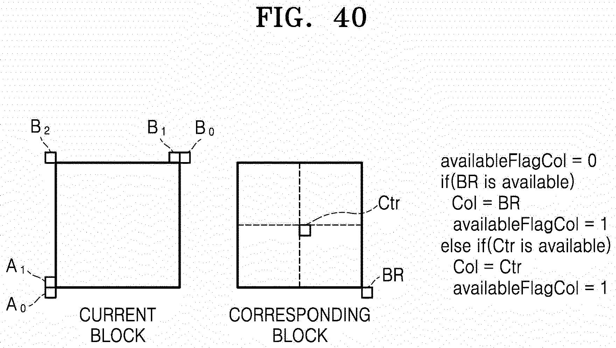

Referring to FIG. 39(a), generation of the candidate list in the merge mode of the existing video coding standard (e.g., the ITU-T H.265/HEVC standard) is illustrated. In the example of FIG. 39(a), A0, A1, A2, B0, and B1 represent merge candidates of spatial neighboring blocks of the current block within the current picture including the current block, and Col represents a merge candidate of a temporal neighboring block (or a corresponding block or a co-located block or col-located block) corresponding to the current block within a picture different from the current block. A location of a neighboring block that may be used as a merge candidate is illustrated in FIG. 40.

In the example of FIG. 39(a), availableFlagX (X=A0, A1, A2, B0, B1, Col) is information indicating availability of motion information of A neighboring block of the current block (e.g., see FIG. 16 and its related description). When the motion information of the neighboring block is available (e.g., when availableFlagX has a value of 1), the neighboring block may be added or inserted to or into a merge candidate list. On the other hand, when the motion information of the neighboring block is not available (e.g., when availableFlagX has a value of 0), the neighboring block may be added or inserted to or into the merge candidate list. As the number of merge candidates added to the merge candidate list increases, more accurate motion information may be determined for the current block, thereby improving coding efficiency.

In the present disclosure, the generated motion information may be added as one of the merge candidates to thereby improve the coding performance of the merge mode. FIG. 39(b) illustrates addition of the generated motion information as one of the merge candidates, according to the present disclosure.

Referring to FIG. 39(b), a merge candidate of the generated motion information (or motion information map) according to the present disclosure is indicated by GeneratedMV, but the name may be changed. When the motion information at the location corresponding to the current block in the generated motion information map exists, the merge candidate (e.g., GeneratedMV) of the generated motion information (or motion information map) may be determined to be available. On the other hand, when the motion information at the location corresponding to the current block in the generated motion information map does not exist, the merge candidate (e.g., GeneratedMV) of the generated motion information (or motion information map) may be determined to be not available.

When the current block is a merge mode, the apparatus 100 may determine whether the merge candidate (e.g., GeneratedMV) of the generated motion information (or motion information map) is available, and, when the merge candidate (e.g., GeneratedMV) of the generated motion information (or motion information map) is available, may add or insert the merge candidate (e.g., GeneratedMV) of the generated motion information (or motion information map) to or into the merge candidate list (operation 3910). For example, the merge candidate (e.g. GeneratedMV) may be added or inserted as a candidate at the beginning of the merge candidate list, but the order may be changed and the merge candidate (e.g. GeneratedMV) may be added or inserted at any location.

Then, the apparatus 100 may obtain merge index information (e.g., merge_idx or merge_index) for the current block from the bitstream, and may determine a merge candidate corresponding to the merge index information in the merge candidate list as motion information for the current block. The apparatus 100 may perform inter prediction by using the determined motion information and obtain a predicted sample.

When encoding the current block, the apparatus 200 may perform an operation corresponding to an operation of the apparatus 100 described above. For example, the apparatus 200 may determine the motion information for the current block, generate a merge candidate list including the merge candidate (e.g., GeneratedMV) of the generated motion information (or motion information map), obtain merge index information indicating a merge candidate corresponding to the determined motion information of the current block, and encode the merge index information into a bitstream.

The operation of the apparatus 100 described above with reference to FIG. 39(b) may be performed in operation 1820 of the image decoding method 1800, and the operation of the apparatus 200 may be performed in operation 2020 of the image encoding method 2000.

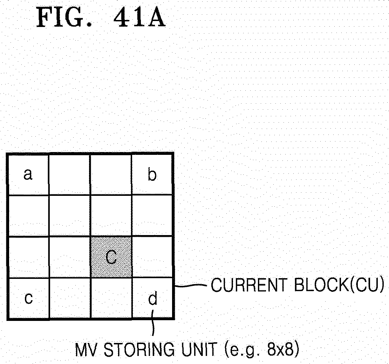

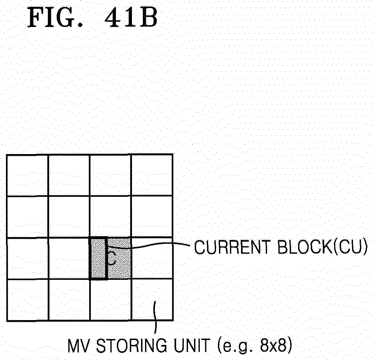

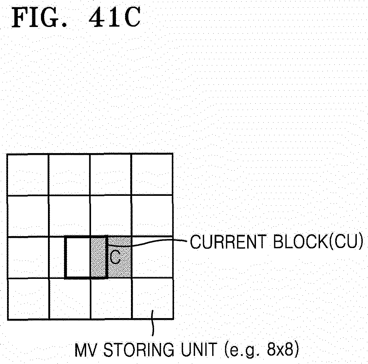

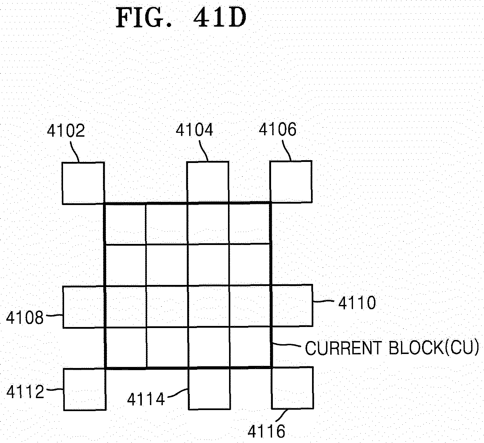

FIG. 41 illustrates a method of determining a location corresponding to a current block in a generated motion information map, according to the present disclosure. As described above, in the generated motion information map according to the present disclosure, motion information may be generated and stored in units of specific-sized blocks or in units of MxN pixels (e.g., 4x4, 8x8, or 16x16). When the size of the current block is the same as the size of a unit in which motion information is generated/stored in the generated motion information map, the generated motion information at the location may be used to code (e.g., decode or encode) the current block.

In the example of FIG. 41, it is assumed that the current block is a CU (or a coding block). However, the present disclosure is not limited thereto, and the current block may be a CTU (or a coding tree block), a TU (or a transform block), or a PU (or a prediction block). In addition, a location of an upper left sample of the current block is represented as (Cx, Cy), and a width and a height of the current block are represented as W and H, respectively. Moreover, for convenience of explanation, a block size or unit in which motion information is generated/stored in the generated motion information map is referred to as a generated motion information storing unit.

FIG. 41(a) illustrates a method of determining the location corresponding to the current block in the generated motion information map when the generated motion information storing unit is less than the size of the current block (or when the size of the current block is greater than the generated motion information storing unit). For the case illustrated in FIG. 41(a), the apparatuses 100 and 200 may select or determine motion information corresponding to a sample location of (Cx + W/2, Cy + H/2) in the generated motion information map as the motion information corresponding to the current block.

Referring to FIG. 41(a), as a non-limiting example, when the current block is (Cx, Cy)=(0, 0), W=32, H=32 and the generated motion information storing unit is 8x8, Cx + W/2 = 16 and Cy + H/2 = 16, and thus the apparatuses 100 and 200 may select or determine motion information corresponding to a (16, 16) sample location (e.g., a "C" location in FIG. 41(a)) as the motion information corresponding to the current block.

FIG. 41(b) illustrates a method of determining the location corresponding to the current block in the generated motion information map when a size of the current block is less than the generated motion information storing unit (or when the size of the current block is greater than the generated motion information storing unit). For the case illustrated in FIG. 41(b), the apparatuses 100 and 200 may select or determine motion information corresponding to a sample location of (Cx + W/2, Cy + H/2) in the generated motion information map as the motion information corresponding to the current block.

Referring to FIG. 41(b), as a non-limiting example, when the current block is (Cx, Cy)=(16, 16), W=4, H=8 and the generated motion information storing unit is 8x8, Cx + W/2 = 18 and Cy + H/2 = 20, and thus the apparatuses 100 and 200 may select or determine motion information corresponding to a (20, 16) sample location (e.g., a "C" location in FIG. 41(b)) as the motion information corresponding to the current block.

FIG. 41(c) illustrates a method of determining the location corresponding to the current block in the generated motion information map when the current block spans the generated motion information storing unit. Even in this case, the apparatuses 100 and 200 may select or determine motion information corresponding to a sample location of (Cx + W/2, Cy + H/2) in the generated motion information map as the motion information corresponding to the current block.

Referring to FIG. 41(c), as a non-limiting example, when the current block is (Cx, Cy)=(12, 16), W=8, H=32 and the generated motion information storing unit is 8x8, Cx + W/2 = 16 and Cy + H/2 = 20, and thus the apparatuses 100 and 200 may select or determine motion information corresponding to a (16, 20) sample location (e.g., a "C" location in FIG. 41(c)) as the motion information corresponding to the current block.

When it is determined that there is no motion information generated at a location (e.g., the location C) determined through the method described above with reference to FIG. 41, the apparatuses 100 and 200 may scan pieces of generated motion information within a block corresponding to the size of the current block in the generated motion information map in a serial order and set or determine motion information found first as the motion information of the current block.

For example, in the example of FIG. 41(a), the apparatuses 100 and 200 may search for motion information in the order of C → a → b → c → d in the generated motion information map and set or determine the motion information found first as the motion information of the current block. As another example, the apparatuses 100 and 200 may perform a search in a raster scan order from a top-left position block (a) after the location C and set or determine motion information found first as the motion information of the current block.

When motion information is not found from a block corresponding to the size of the current block in the generated motion information map, motion information may be searched for from a neighboring block location of the block corresponding to the size of the current block, and motion information found first may be set or determined as the motion information of the current block. All or some of adjacent blocks around the block corresponding to the size of the current block in the generated motion information map may be searched for in a series of scan orders. For example, when a location corresponding to an upper left side of the current block in the generated motion information map is (Cx, Cy), the width is W, and the height is H, pieces of motion information of locations may be searched for from the generated motion information map in the following order, and motion information found first may be set or determined as the motion information of the current block (e.g., see FIG. 41(d)).

(Cx - 1, Cy - 1)(e.g., 4102) → (Cx + w/2, Cy - 1)(e.g., 4104) → (Cx + w, Cy - 1)(, 4106) → (Cx - 1, Cy + h/2)(e.g., 4108) → (Cx + w, Cy + h/2)(e.g., 4110) → (Cx - 1, Cy + h)(e.g., 4112) → (Cx + w/2, Cy + h)(e.g., 4114) → (Cx + w, Cy + h)(e.g., 4116)

When no motion information is found from the generated motion information map, the apparatuses 100 and 200 may set the generated motion information for the current block to be a value of 0 (e.g., a zero vector (0, 0)) or may determine that it is in an intra mode. Moreover, during the search process, a pruning process may be additionally performed to prevent duplicate candidates.

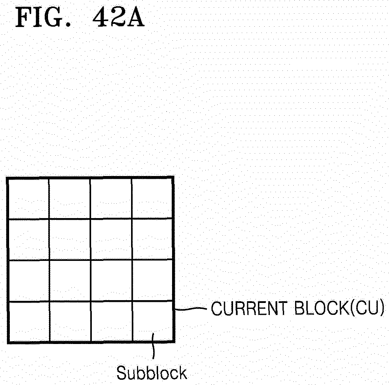

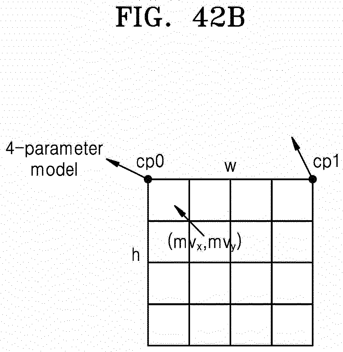

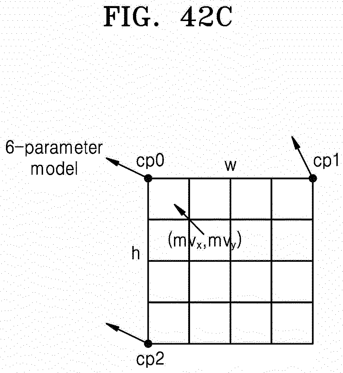

FIG. 42 illustrates a method of performing subblock prediction by using generated motion information, according to the present disclosure.

FIG. 42(a) illustrates execution of motion compensation (MC) in units of subblocks of the current block by using the generated motion information, FIG. 42(b) illustrates execution of affine motion compensation by using the generated motion information as a control point vector of a 4-parameter model, and FIG. 42(c) illustrates execution of affine motion compensation by using the generated motion information as a control point vector of a 6-parameter model.

Referring to FIG. 42(a), the apparatuses 100 and 200 may divide the current block into sub-blocks each having a size equal to or greater than a unit block size (e.g., 4x4, 8x8, or 16x16) of the generated motion information, and may perform motion compensation by allocating the generated motion information in units of subblocks.

As a non-limiting example, in the example of FIG. 42(a), assuming that the size of the current block is 32x32 and the unit block size of the generated motion information is 8x8, the current block is divided into subblocks each having the same size (e.g., 8x8) as or a greater size (e.g., 16x16) than the unit block size of the generated motion information, and then obtain motion information from the generated motion information map in units of subblocks and perform motion compensation with respect to the subblocks by using the obtained (generated) motion information.

Referring to FIG. 42(b), the apparatuses 100 and 200 may allocate generated motion information at locations corresponding to a first control point cp0 and a second control point cp1 from the generated motion information map as first control point motion information and second control point motion information, and may obtain motion information for each subblock of the current block by using an affine 4-parameter model. In the example of FIG. 42(b), the apparatuses 100 and 200 may obtain a subblock motion vector for each subblock, based on the affine 4-parameter model, by using Equation 1. In Equation 1, (cp0x, cp0y) represents a first control point motion vector obtained from the generated motion information map, (cp1x, cp1y) represents a second control point motion vector obtained from the generated motion information map, (mvx, mvy) represents a motion vector at a subblock location (x, y) of the current block, and w represents a width of the current block.

[Equation 1]

$$mv_x = \frac{cp_{1x} - cp_{0x}}{w}x - \frac{cp_{1y} - cp_{0y}}{w}y + cp_{0x}$$

$$mv_y = \frac{cp_{1y} - cp_{0y}}{w}x + \frac{cp_{1x} - cp_{0x}}{w}y + cp_{0y}$$

The apparatuses 100 and 200 may perform motion compensation for each subblock by using the generated motion information and the motion vector for each subblock obtained based on the affine 4-parameter model.

Referring to FIG. 42(c), the apparatuses 100 and 200 may allocate generated motion information at locations corresponding to a first control point cp0, a second control point cp1, and a third control point cp2 from the generated motion information map as first control point motion information, second control point motion information, and third control point motion information, and may obtain motion information for each subblock of the current block by using an affine 6-parameter model. In the example of FIG. 42(c), the apparatuses 100 and 200 may obtain a subblock motion vector for each subblock, based on the affine 6-parameter model, by using Equation 2. In Equation 1, (cp0x, cp0y) represents a first control point motion vector obtained from the generated motion information map, (cp1x, cp1y) represents a second control point motion vector obtained from the generated motion information map, (cp2x, cp2y) represents a third control point motion vector obtained from the generated motion information map, (mvx, mvy) represents a motion vector at a subblock location (x, y) of the current block, and w and h represent a width and a height of the current block.

[Equation 2]

$$mv_x = \frac{cp_{1x} - cp_{0x}}{w}x + \frac{cp_{2x} - cp_{0x}}{h}y + cp_{0x}$$

$$mv_y = \frac{cp_{1y} - cp_{0y}}{w}x + \frac{cp_{2y} - cp_{0y}}{h}y + cp_{0y}$$

The apparatuses 100 and 200 may perform motion compensation for each subblock by using the generated motion information and the motion vector for each subblock obtained based on the affine 6-parameter model.

The above-described embodiments of the disclosure can be written as computer-executable programs, and the written computer-executable programs can be stored in a medium.

The medium may continuously store the computer-executable programs, or temporarily store the computer-executable programs for execution or downloading. Also, the medium may be any one of various recording media or storage media in which a single piece or plurality of pieces of hardware are combined, and the medium is not limited to a medium directly connected to a computer system, but may be distributed on a network. Examples of the medium include a magnetic medium (e.g., a hard disk, a floppy disk, or a magnetic tape), an optical medium (e.g., a compact disk-read-only memory (CD-ROM) or a digital versatile disk (DVD), a magneto-optical medium (e.g., a floptical disk), and a ROM, a random-access memory (RAM), and a flash memory, which are configured to store program instructions. The machine-readable storage medium may be provided as a non-transitory storage medium. The 'non-transitory storage medium' is a tangible device and only means that it does not contain a signal (e.g., electromagnetic waves). This term does not distinguish a case in which data is stored semi-permanently in a storage medium from a case in which data is temporarily stored. For example, the non-transitory recording medium may include a buffer in which data is temporarily stored.

Other examples of the medium include recording media and storage media managed by application stores distributing applications or by websites, servers, and the like supplying or distributing other various types of software.

According to an embodiment, methods according to various disclosed embodiments may be provided by being included in a computer program product. The computer program product, which is a commodity, may be traded between sellers and buyers. Computer program products are distributed in the form of device-readable storage media (e.g., compact disc read only memory (CD-ROM)), or may be distributed (e.g., downloaded or uploaded) through an application store (e,g., Play Store™) or between two user devices (e.g., smartphones) directly and online. In the case of online distribution, at least a portion of the computer program product (e.g., a downloadable app) may be stored at least temporarily in a device-readable storage medium, such as a memory of a manufacturer's server, a server of an application store, or a relay server, or may be temporarily generated.

While one or more embodiments of the disclosure have been described with reference to the figures, it will be understood by those of ordinary skill in the art that various changes in form and details may be made therein without departing from the spirit and scope as defined by the following claims.

**Industrial Applicability**

The present disclosure may be used in various image processing apparatuses, including an image decoding apparatus and an image encoding apparatus.

**Claims**

1. An image decoding method performed by an apparatus, the method comprising:

   generating reference motion information for blocks included in a current picture, based on at least one of pixel data or motion information of at least one reconstructed picture;
   obtaining motion information for a current block included in the current picture, based on the generated reference motion information and at least one syntax information obtained from a bitstream; and
   reconstructing the current block, based on the obtained motion information.

2. The method of claim 1, wherein
   the generating of the reference motion information for blocks included in the current picture comprises:
   generating the reference motion information for blocks included in the current picture by inputting at least one of the pixel data or motion information of the at least one reconstructed picture to an artificial neural network.

3. The method of claim 1, wherein
   the motion information includes at least one of first motion vector information, second motion vector information, first prediction list utilization information, second prediction list utilization information, or prediction mode information.

4. The method of claim 1, further comprising
   at least one of aggregating the generated reference motion information, scaling the generated reference motion information, or transforming a format of the generated reference motion information.

5. The method of claim 1, wherein
   the generating of the reference motion information for blocks included in the current picture comprises:

   down-sampling the at least one reconstructed picture; and
   generating the reference motion information for blocks included in the current picture, based on at least one of pixel data or motion information of the downsampled reconstructed picture.

6. The method of claim 1, wherein
   the obtaining of the motion information for the current block comprises:
   when a time interval between the reconstructed picture and the current picture is equal to or greater than a certain value, excluding the generated reference motion information from a motion information candidate for the current block.

7. The method of claim 1, wherein
   the generating of the reference motion information for blocks included in the current picture comprises:
   when reference picture resampling is applied, downsampling the reconstructed picture, based on a reference picture of low resolution.

8. The method of claim 1, further comprising
   generating motion information for an additional picture by performing interpolation or extrapolation, based on motion information of the at least one reconstructed picture.

9. The method of claim 1, wherein
   the at least one syntax information includes information indicating whether the generated reference motion information is used to obtain the motion information for the current block.

10. The method of claim 1, wherein
    the obtaining of the motion information for the current block comprises:

constructing a merge candidate list including the generated reference motion information; and
obtaining the motion information for the current block, based on the constructed merge candidate list.

11. The method of claim 1, wherein
the generated reference motion information includes motion information at a location corresponding to an x-coordinate obtained by adding half a width of the current block to an upper left sample location of the current block in a generated reference motion information map, and a y-coordinate obtained by adding half a height of the current block to the upper left sample location of the current block.

12. The method of claim 1, wherein
the obtaining of the motion information for the current block comprises dividing the current block into a plurality of subblocks and assigning the generated reference motion information to the plurality of subblocks, and the reconstructing of the current block comprises performing motion compensation on a subblock, based on generated reference motion information for the subblock.

13. The method of claim 1, wherein

the obtaining of the motion information for the current block comprises obtaining a plurality of control point motion vectors for the current block, based on the generated reference motion information, and
the reconstructing of the current block comprises performing motion compensation on a subblock of the current block by using the obtained control point motion vectors.

14. An image encoding method performed by an apparatus, comprising:

generating reference motion information for blocks included in a current picture, based on at least one of pixel data or motion information of at least one reconstructed picture;
determining motion information for a current block included in the current picture; and
encoding the motion information for the current block into a bitstream, based on the generated reference motion information.

15. A nonvolatile computer-readable storage medium storing a bitstream encoded by an image encoding method, the image encoding method comprising:

generating reference motion information for blocks included in a current picture, based on at least one of pixel data or motion information of at least one reconstructed picture;
determining motion information for a current block included in the current picture; and
encoding the motion information for the current block into a bitstream, based on the generated reference motion information.

# FIG. 1

BITSTREAM

100

110

RECEIVER

120

DECODER

OUTPUT IMAGE

# FIG. 2

```
          ( START )
              │
              ▼
┌─────────────────────────────┐
│ OBTAIN BIN STRING CORRESPONDING TO │ ── 210
│       SPLIT SHAPE MODE      │
└─────────────────────────────┘
              │
              ▼
┌─────────────────────────────┐
│     DETERMINE SPLIT RULE    │ ── 220
└─────────────────────────────┘
              │
              ▼
┌─────────────────────────────┐
│ SPLIT CODING UNIT INTO PLURALITY OF │ ── 230
│         CODING UNITS        │
└─────────────────────────────┘
              │
              ▼
           ( END )
```

# FIG. 3

# FIG. 4

FIG. 5

EP 4 622 265 A1

# FIG. 6

# FIG. 7

# FIG. 8

# FIG. 9

FIG. 10

## FIG. 11

# FIG. 12

1200

1210a 1210b          1220a

...                              ...

1220b

1216a 1216b      1226a 1226b

1217 ...                              ...

1216c 1216d      1226c 1226d

1227

# FIG. 13

| BLOCK SHAPE / DEPTH | 0: SQUARE | 1: NS_VER | 2: NS_HOR |
|---|---|---|---|
| DEPTH D | 1300 | 1310 | 1320 |
| DEPTH D+1 | 1302 | 1312 | 1322 |
| DEPTH D+2 | 1304 | 1314 | 1324 |
| ... | ... | ... | ... |

# FIG. 14

# FIG. 15

# FIG. 16

FILTER INFORMATION

FILTER INFORMATION

# FIG. 17

PIXEL DATA OF RECONSTRUCTED PICTURE → MOTION INFORMATION GENERATOR 130

MOTION INFORMATION OF RECONSTRUCTED PICTURE →

100

GENERATED MOTION INFORMATION

120

BITSTREAM → DECODER → DECODED PICTURE

# FIG. 18

1800

GENERATE REFERENCE MOTION INFORMATION
FOR BLOCKS INCLUDED IN CURRENT PICTURE,
BASED ON AT LEAST ONE OF PIXEL DATA OR
MOTION INFORMATION OF AT LEAST ONE
RECONSTRUCTED PICTURE
— 1810

DECODE CURRENT PICTURE, BASED ON
GENERATED REFERENCE MOTION INFORMATION
AND AT LEAST ONE PIECE OF SYNTAX
INFORMATION OBTAINED FROM BITSTREAM
— 1820

# FIG. 19

PIXEL DATA OF
RECONSTRUCTED PICTURE

MOTION INFORMATION OF
RECONSTRUCTED PICTURE

130

MOTION
INFORMATION
GENERATOR

200

GENERATED MOTION
INFORMATION

220

CURRENT PICTURE —→ ENCODER —→ BITSTREAM

# FIG. 20

2000

| |
|---|
| GENERATE REFERENCE MOTION INFORMATION FOR BLOCKS INCLUDED IN CURRENT PICTURE, BASED ON AT LEAST ONE OF PIXEL DATA OR MOTION INFORMATION OF AT LEAST ONE RECONSTRUCTED PICTURE — 2010 |

| |
|---|
| ENCODE CURRENT PICTURE INTO BITSTREAM, BASED ON GENERATED REFERENCE MOTION INFORMATION — 2020 |

FIG. 21A

2120

RECONSTRUCTED
PICTURE (T-1)
(REFERENCE
PICTURE)

2130

RECONSTRUCTED
PICTURE (T)

2110

NN

2150

GENERATED MOTION
INFORMATION MAP

# FIG. 21B

2110

NN

2120        2150        2140

MOTION INFORMATION
MAP (T−1)

GENERATED MOTION
INFORMATION MAP (T)
(To be coded)

MOTION INFORMATION
MAP (T+1)

# FIG. 21C

2110

NN

2122

MOTION INFORMATION
MAP (T-2)

2120

MOTION INFORMATION
MAP (T-1)

2150

GENERATED MOTION
INFORMATION MAP (T)
(To be coded)

FIG. 22

# FIG. 23

**2120** **2140**

2310 — Backward reference's L0 MV Map | Forward reference's L0 MV Map

2320 — Backward reference's L0 POC Map | Forward reference's L0 POC Map

2330 — Backward reference's L1 MV Map | Forward reference's L1MV Map

2340 — Backward reference's L1 POC Map | Forward reference's L1 POC Map

2350 — Backward reference's MV existing Map | Forward reference's MV existing Map

May have MV in a vector form of x and y, and x and y components may be applied separately as an input

May be omitted when MV is normalized

Additionally map about presence or absence of MV may be applied
In this case, may be expressed as directional mode map of MV
(e.g., 0 when only L0 exists, 1 when only L1 exists, 2 when both L0 and L1 exist, and 3 when no MV exists)

EP 4 622 265 A1

# FIG. 24

2150

May be omitted when MV is normalized, and, even when POC information is applied as an input, may be omitted when normalized value is output

2410

2420

2430

L0 MV Map

L0 POC Map

L0 MV existing Map

L1 MV Map

L1 POC Map

L1 existing Map

May have MV in a vector form of x and y, and x and y components may be applied separately as an input

Map about presence or absence of MV may be additionally output for each reference picture list.
Alternatively, presence or absence of MV may be expressed as one map.
Alternatively, directional mode of MV may be expressed as one map and output.
(e.g., 0 when only L0 exists, 1 when only L1 exists, 2 when both L0 and L1 exist, and 3 when no MV exists)

EP 4 622 265 A1

# FIG. 25

ESTIMATED MOTION INFORMATION  2510  WARPED IMAGE  2520  RESIDUAL IMAGE

2130  2110

Convolutional network

WARPING BY USING SAMPLE LEVEL MOTION INFORMATION

2120

2530

NN loss

(a)

Reference Frame  Current Frame

Searching Range  Current Block

(0,0)

MV

Best Match

time

[EXISTING METHOD]

Convolutional network

[PROPOSED METHOD]

(b)

EP 4 622 265 A1

# FIG. 26

**2130**
RECONSTRUCTED
PICTURE (T-1)
(H x W)

**2120**
RECONSTRUCTED
PICTURE (T)
(H x W)

**130**
MOTION
INFORMATION
GENERATION
(T → T-1)

**2510**
GENERATED MOTION INFORMATION
MAP IN SAMPLE LEVEL
(H x W)

AGGREGATION &
SCALING &
QUANTIZATION

**2150**
GENERATED MOTION
INFORMATION MAP
(H/16 x W/16)

**2110**
MOTION
INFORMATION
GENERATION
NN

# FIG. 27

: BLOCK (E.G., CODING BLOCK) OF GENERATED MOTION INFORMATION MAP 2150

: OUTPUT MOTION INFORMATION (OR NN MI FIELD) (AREA UNIT IN WHICH FLOW IS OBTAINED) OF GENERATED MOTION INFORMATION MODEL 2110

BLOCK SIZE AND AREA OF FLOW FIELD ARE MADE THE SAME THROUGH PROCESSES, SUCH AS FIXED POSITION SAMPLING AND MEDIAN FILTERING

# FIG. 28

FIG. 29

# FIG. 30

# FIG. 31A

3010                    3030                    3020

| L0<br>REFERENCE<br>PICTURE | PICTURE TO<br>BE CODED<br>(TARGET<br>PICTURE) | L1<br>REFERENCE<br>PICTURE |

# FIG. 31B

3010

3020

3030

L0
REFERENCE
PICTURE

L1
REFERENCE
PICTURE

PICTURE TO
BE CODED
(TARGET
PICTURE)

# FIG. 32A

2150, 3060

MOTION
INFORMATION MAP

+ ADDITIONAL INFORMATION
(RECONSTRUCTED
PICTURE, ETC.)

3230

REFINEMENT
OF MOTION
INFORMATION MAP

3220,3070

REFINED MOTION
INFORMATION MAP

3210 ——

MOTION
INFORMATION
GENERATION
NN

# FIG. 32B

2150, 3060

3210

3220

NM

MOTION
INFORMATION MAP

REFINED MOTION
INFORMATION MAP

2130 — CURRENT
RECONSTRUCTED
PICTURE

RECONSTRUCTED
PICTURE
(E.G., REFERENCE
PICTURE) — 2120

# FIG. 33

```
CU (coding unit) syntax structure () {
use_generated_mv_flag
if(use_generated_mv_flag == 0) {
    // use of mode-related syntax of existing video coding standard
}
else { // use_generated_flag == 1
    if (it is determined in derived map that MV of current block does not exist) {
        // use intra syntax of existing video coding standard
    }
    else { // when MV is derived in advance
        MV information setting of current block // there is no additional data transmission
        // use of MV information corresponding to current block within MV information map
    }
}
// use of syntax related to existing residual coding
}
```

# FIG. 34A

```
CU (coding unit) syntax structure () {
    use_generated_mv_flag
    if(use_generated_mv_flag == 0) {
        // use of mode-related syntax of existing video coding standard
    }
    else { // use_generated_flag == 1
        if (it is determined in derived map that MV of current block does not exist) {
            // use intra syntax of existing video coding standard
        }
        else { // when MV is derived in advance
            mvd_flag // transmitted when transmission of MV difference is additionally needed, MV derived from NN is used as MV predictor (MVP)
            if(mvd_flag) information of MV difference is additionally transmitted, and transmission or non-transmission of L0 and L1 MVDs may be determined according to directional information
            else MV information setting of current block // there is no additional data transmission
        }
    }
    // use of syntax related to existing residual coding
}
```

3410
3420
3430

FIG. 34B

```
CU (coding unit) syntax structure () {
    use_generated_mv_flag
    if(use_generated_mv_flag == 0) {
        // use of mode-related syntax of existing video coding standard
    }
    else { // use_generated_flag == 1
        if (it is determined in derived map that MV of current block does not exist) {
            // use intra syntax of existing video coding standard
        }

        else { // when MV is derived in advance
            mv_index // candicate may be generated so that one of MVs of current block location and neighboring block may be selected from generated MV map
            MV information setting of current block selected by mv_index // there is no additional data transmission
        }
    }
    // use of syntax related to existing residual coding
}
```

3440

3450

FIG. 35

```
CU (coding unit) syntax structure () {
    use_generated_mv_flag
    if(use_generated_mv_flag == 0) {
        // use of mode-related syntax of existing video coding standard
    }
    else { // use_generated_flag == 1
        if (it is determined in derived map that MV of current block does not exist) {
            // use intra syntax of existing video coding standard
        }
        else { // when MV is derived in advance
            no_mvd_flag
            if(no_mvd_flag) {
                mv_index // candicate may be generated so that one of MVs of current block location and neighboring block may be selected from generated MV map
                MV information setting of current block selected by mv_index // there is no additional data transmission
            }
            else {
                mvd transmission // information of MV difference is transmitted, and transmission or non-transmission of L0 and L1 MVDs may be determined according to directional information
                mvp_index // candicate may be generated so that one of MVs of current block location and neighboring block may be selected as MVP from generated MV map
            }
        }
    }
    // use of syntax related to existing residual coding
}
```

FIG. 36

```
CU (coding unit) syntax structure () {
    use_generated_mv_flag
    if(use_generated_mv_flag == 0) {
        // use of mode-related syntax of existing video coding standard
    }
    else { // use_generated_flag == 1
        // in this case, it is determined that intra is not selected (intra is processed when use_generated_mv_flag == 0)
        // coding may be performed using pre-derived MV. MV information setting of current block
        MV information setting of current block // there is no additional data transmission
        // in this case, when there is no MV corresponding to current block, another MV may be searched for and selected
    }
    // use of syntax related to existing residual coding
}
```

3610

## FIG. 37A

```
CU (coding unit) syntax structure () {
  if(in case of inter picture) // transmission is allowed only in case of inter picture
  use_generated_mv_flag // may operate instead of existing skip mode
  if(use_generated_mv_flag == 0) {
    // use mode-related syntax of video coding standard except for existing skip mode
    // use of syntax related to existing residual coding
  }
  else { // use_generated_flag == 1
    // in this case, it is determined that intra is not selected (intra is processed when use_generated_mv_flag = 0)
    // coding may be performed using pre-derived MV
    MV information setting of current block // there is no additional data transmission
    // in this case, when there is no MV corresponding to current block, another MV may be searched for and selected
  }
}
```

3710
3720
3730
3740

## FIG. 37B

```
CU (coding unit) syntax structure () {
if(in case of inter picture) // transmission is allowed only in case of inter picture
    use_generated_mv_flag // may operate instead of existing skip mode
    if(use_generated_mv_flag == 0) {
        // use mode-related syntax of video coding standard except for existing skip mode
        // use of syntax related to existing residual coding
    }
    else { // use_generated_flag == 1
        // in this case, it is determined that intra is not selected (intra is processed when use_generated_mv_flag = 0)
        mv_index // candicate may be generated so that one of MVs of current block location and neighboring block may be selected from generated MV map    ← 3750
        MV information setting of current block selected by mv_index // there is no additional data transmission    ← 3760
    }
}
```

# FIG. 38

```
CU (coding unit) syntax structure () {
  if(in case of inter picture) // transmission is allowed only in case of inter picture
    skip_flag // flag indicating whether in skip mode of existing codec
  if(skip_flag == 0) {
    cu_mode // determine whether inter or intra CU
    merge_flag // flag indicating whether in merge mode of existing codec
    if(merge_flag == 1) {
      use_generated_mv_flag
        if(use_generated_my_flag == 0)
          merge_data() // merge data (merge_index, etc.) of existing codec
        else
          // generated MV information corresponding to current block is used as MV information of current block
          // one of several candidates may be selected through the mv_index information
    }
    else {
      // use of existing advanced MVP (AMVP) syntax
    }
    // use of syntax related to existing residual coding
  }
  else { // skip_flag == 1
    use_generated_mv_flag
      if(use_generated_my_flag == 0)
        merge_data()
      else
        // generated MV information corresponding to current block is used as MV information of current block
        // one of several candidates may be selected through the mv_index information
  }
}
```

EP 4 622 265 A1

# FIG. 39A

5. The merging candidate list, mergeCandList, is constructed as follows:

```
i = 0
if (availableFlagA₁)
    mergeCandList [ i++ ] = A₁
if (availableFlagB₁)
    mergeCandList [ i++ ] = B₁
if (availableFlagB₀)
    mergeCandList [ i++ ] = B₀
if (availableFlagA₀)
    mergeCandList [ i++ ] = A₀
if (availableFlagB₂)
    mergeCandList [ i++ ] = B₂
if (availableFlagCol)
    mergeCandList [ i++ ] = Col
```

# FIG. 39B

5. The merging candidate list, mergeCandList, is constructed as follows:

```
i = 0
if (Genrated MV is available?)                    ⟵ 3910
   mergeCandList [ i++ ] = Generated MV
if (availableFlagA₁)
   mergeCandList [ i++ ] = A₁
if (availableFlagB₁)
   mergeCandList [ i++ ] = B₁
if (availableFlagB₀)
   mergeCandList [ i++ ] = B₀
if (availableFlagA₀)
   mergeCandList [ i++ ] = A₀
if (availableFlagB₂)
   mergeCandList [ i++ ] = B₂
if (availableFlagCol)
   mergeCandList [ i++ ] = Col
```

# FIG. 40

availableFlagCol = 0
if(BR is available)
  Col = BR
  availableFlagCol = 1
else if(Ctr is available)
  Col = Ctr
  availableFlagCol = 1

## FIG. 41A

CURRENT BLOCK(CU)

MV STORING UNIT (e.g. 8x8)

# FIG. 41B

CURRENT BLOCK(CU)

MV STORING UNIT (e.g. 8x8)

FIG. 41C

CURRENT BLOCK(CU)

MV STORING UNIT (e.g. 8x8)

# FIG. 41D

FIG. 42A

CURRENT BLOCK(CU)

Subblock

# FIG. 42B

FIG. 42C

## INTERNATIONAL SEARCH REPORT

| International application No. |
| --- |
| **PCT/KR2023/015509** |

### A. CLASSIFICATION OF SUBJECT MATTER

**H04N 19/513**(2014.01)i; **H04N 19/105**(2014.01)i; **H04N 19/70**(2014.01)i; **H04N 19/176**(2014.01)i; **H04N 19/119**(2014.01)i; **H04N 19/139**(2014.01)i; **H04N 19/132**(2014.01)i; **G06T 9/00**(2006.01)i; **H04N 19/577**(2014.01)i; **H04N 19/563**(2014.01)i

According to International Patent Classification (IPC) or to both national classification and IPC

### B. FIELDS SEARCHED

Minimum documentation searched (classification system followed by classification symbols)

H04N 19/513(2014.01); G06T 5/00(2006.01); G06T 9/00(2006.01); H04N 19/105(2014.01); H04N 19/122(2014.01); H04N 19/51(2014.01); H04N 19/52(2014.01); H04N 19/70(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 복원 샘플(reconstructed sample), 움직임 정보(motion information), 현재 픽처 (current picture), 참조 움직임 정보(reference motion information), 인공 신경망(artificial neural network), 병합(aggregation), 스케일링(scaling)

### C. DOCUMENTS CONSIDERED TO BE RELEVANT

| Category* | Citation of document, with indication, where appropriate, of the relevant passages | Relevant to claim No. |
| --- | --- | --- |
| A | KR 10-2022-0018447 A (HYUNDAI MOTOR COMPANY et al.) 15 February 2022 (2022-02-15)<br>See paragraphs [0035] and [0082]; and claims 14 and 16. | 1-15 |
| A | JP 2020-191683 A (SAMSUNG ELECTRONICS CO., LTD.) 26 November 2020 (2020-11-26)<br>See paragraphs [0013]-[0014]. | 1-15 |
| A | JP 2022-087865 A (SHARP CORP.) 14 June 2022 (2022-06-14)<br>See paragraphs [0009]-[0011]. | 1-15 |
| A | KR 10-2438181 B1 (ELECTRONICS AND TELECOMMUNICATIONS RESEARCH INSTITUTE) 30 August 2022 (2022-08-30)<br>See paragraphs [0010]-[0013]. | 1-15 |
| A | KR 10-2013-0050406 A (OH, Soomi) 16 May 2013 (2013-05-16)<br>See claim 1. | 1-15 |

☐ Further documents are listed in the continuation of Box C.  ☑ See patent family annex.

| | | |
| --- | --- | --- |
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "D" | document cited by the applicant in the international application | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| **17 January 2024** | **18 January 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

| International application No. |
|---|
| **PCT/KR2023/015509** |

| Patent document cited in search report | | | Publication date (day/month/year) | Patent family member(s) | | | Publication date (day/month/year) |
|---|---|---|---|---|---|---|---|
| KR | 10-2022-0018447 | A | 15 February 2022 | CN | 116113973 | A | 12 May 2023 |
| | | | | US | 2023-0291926 | A1 | 14 September 2023 |
| | | | | WO | 2022-031115 | A1 | 10 February 2022 |
| JP | 2020-191683 | A | 26 November 2020 | AU | 271275 | B2 | 20 June 2019 |
| | | | | AU | 271275 | C1 | 21 November 2019 |
| | | | | AU | 276455 | B2 | 25 February 2016 |
| | | | | CA | 2975456 | A1 | 03 January 2013 |
| | | | | CA | 2975456 | C | 22 October 2019 |
| | | | | CN | 107071470 | A | 18 August 2017 |
| | | | | CN | 107071470 | B | 07 February 2020 |
| | | | | EP | 3876540 | B1 | 07 June 2023 |
| | | | | JP | 2019-146251 | A | 29 August 2019 |
| | | | | JP | 6753979 | B2 | 09 September 2020 |
| | | | | JP | 7071453 | B2 | 19 May 2022 |
| | | | | KR | 10-1862357 | B1 | 29 May 2018 |
| | | | | KR | 10-2017-0026409 | A | 08 March 2017 |
| | | | | US | 2016-0105681 | A1 | 14 April 2016 |
| | | | | US | 9432680 | B2 | 30 August 2016 |
| | | | | WO | 2013-002557 | A2 | 03 January 2013 |
| | | | | WO | 2013-002557 | A3 | 14 March 2013 |
| JP | 2022-087865 | A | 14 June 2022 | None | | | |
| KR | 10-2438181 | B1 | 30 August 2022 | CN | 110771169 | A | 07 February 2020 |
| | | | | EP | 3637772 | A1 | 15 April 2020 |
| | | | | EP | 3637772 | A4 | 09 December 2020 |
| | | | | JP | 2023-009280 | A | 19 January 2023 |
| | | | | KR | 10-2023-0070198 | A | 22 May 2023 |
| | | | | KR | 10-2533727 | B1 | 17 May 2023 |
| | | | | US | 11616976 | B2 | 28 March 2023 |
| | | | | US | 2023-0179793 | A1 | 08 June 2023 |
| | | | | WO | 2018-226015 | A1 | 13 December 2018 |
| KR | 10-2013-0050406 | A | 16 May 2013 | CN | 108347610 | A | 31 July 2018 |
| | | | | EP | 3829176 | B1 | 07 June 2023 |
| | | | | EP | 4224855 | A1 | 09 August 2023 |
| | | | | JP | 2017-163584 | A | 14 September 2017 |
| | | | | JP | 6291613 | B2 | 14 March 2018 |
| | | | | KR | 10-1496961 | B1 | 02 March 2015 |
| | | | | KR | 10-2014-0074946 | A | 18 June 2014 |
| | | | | KR | 10-2014-0076583 | A | 20 June 2014 |
| | | | | US | 9338460 | B2 | 10 May 2016 |
| | | | | US | 9912953 | B2 | 06 March 2018 |
| | | | | WO | 2013-067938 | A1 | 16 May 2013 |

Form PCT/ISA/210 (patent family annex) (July 2022)